# EUROPÄISCHE PATENTSCHRIFT

(11) **EP 3 865 088 B1**
(45) Veröffentlichungstag und Bekanntmachung des Hinweises auf die Patenterteilung: **26.07.2023**
(21) Anmeldenummer: 20157718.6
(22) Anmeldetag: 17.02.2020
(51) Int. Cl.: A61C 17/22

(54) **AUFSTECKBÜRSTENVORRICHTUNG**
PUSH-ON BRUSH DEVICE
DISPOSITIF DE BROSSE ENFICHABLE

(43) Veröffentlichungstag der Anmeldung: 18.08.2021
(73) Patentinhaber: Trisa Holding AG, 6234 Triengen (CH)
(72) Erfinder: Scherzinger, Stefan, 6130 Willisau (CH); Keller, Fabian, 6210 Sursee (CH)
(74) Vertreter: Daub, Thomas

(56) Entgegenhaltungen:
- EP-A1- 2 135 580
- WO-A1-00/76420

## Beschreibung

### Stand der Technik

Die Erfindung betrifft eine Aufsteckbürstenvorrichtung für ein Zahnbürstenhandteil, insbesondere für ein elektrisches Zahnbürstenhandteil oder für ein manuelles Zahnbürstenhandteil. Weiter betrifft die Erfindung Borstenfeldgestaltungen für Aufsteckbürstenvorrichtungen.

Es ist bereits eine Aufsteckbürstenvorrichtung für ein Zahnbürstenhandteil, mit einer Anwendungseinheit, welche einen Kopfabschnitt mit einem Bürstenkopf, einen Aufsteckabschnitt und einen zwischen dem Kopfabschnitt und dem Aufsteckabschnitt angeordneten Halsabschnitt aufweist, und mit einer Schnittstellenaufnahmeeinheit, welche zu einer Aufnahme von zumindest einer Schnittstelle eines Zahnbürstenhandteils vorgesehen ist, vorgeschlagen worden.

Insbesondere aus der WO 2016/001831 A1, der EP 1 023 001 B1, der EP 1 682 032 B1, der US 9,724,180 B1, der EP 2 234 561 B1, der US 2011/0107536 A1, der DE 10 2012 006 723 A1 und der EP 3 558 158 A1 sind bereits Aufsteckbürstenvorrichtungen für ein Zahnbürstenhandteil bekannt.

WO 00/76420 A1 offenbart eine Aufsteckbürstenvorrichtung für ein Zahnbürstenhandteil, die alle technischen Merkmalen der Präambel von Anspruch 1 aufweist.

Die Aufgabe der Erfindung besteht insbesondere darin, eine gattungsgemäße Vorrichtung mit verbesserten Eigenschaften hinsichtlich einer Variabilität und einer Zuverlässigkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Aufsteckbürstenvorrichtung für ein Zahnbürstenhandteil, insbesondere für ein elektrisches Zahnbürstenhandteil, mit einer Anwendungseinheit, welche einen Kopfabschnitt mit einem Bürstenkopf, einen Aufsteckabschnitt und einen zwischen dem Kopfabschnitt und dem Aufsteckabschnitt angeordneten Halsabschnitt aufweist, und mit einer Schnittstellenaufnahmeeinheit, welche zumindest eine Schnittstellenaufnahme zu einer Aufnahme von zumindest einer Schnittstelle eines Zahnbürstenhandteils aufweist.

Es wird vorgeschlagen, dass die Schnittstellenaufnahmeeinheit separat ausgebildet ist und der Aufsteckabschnitt der Anwendungseinheit einen Aufnahmebereich zu einer verliersicheren, zumindest im Wesentlichen vollständigen Aufnahme der Schnittstellenaufnahmeeinheit aufweist. Die Aufsteckbürstenvorrichtung ist insbesondere von einer Aufsteckbürste gebildet. Die Aufsteckbürstenvorrichtung ist insbesondere von einer Aufsteckbürste für eine Wechselkopfzahnbürste, insbesondere einer elektrischen Zahnbürste, gebildet. Bei elektrischen Zahnbürsten sind insbesondere oszillierende Bewegungen, schwenkende Bewegungen, translatorische Bewegungen, vibrierende Bewegungen und/oder kombinierte, überlagerte Bewegungen bekannt. Kombinierte bzw. überlagerte Bewegungen können sich aus oszillierenden Bewegungen, schwenkenden Bewegungen, translatorischen Bewegungen, vibrierenden Bewegungen der Aufsteckbürste zusammensetzen. Das Zahnbürstenhandteil ist insbesondere von einer schwenkenden, elektrischen Zahnbürste gebildet, d.h. die Aufsteckbürsteneinheit mit dem Bürstenkopf schwenkt bzw. oszilliert um eine Achse parallel zur Längsachse der Schnittstelle bzw. Antriebsachse. Alternativ könnte die Aufsteckbürstenvorrichtung auch zu einer Kopplung mit einer rotierenden, oszillierenden elektrischen Zahnbürste vorgesehen sein, d.h. der Bürstenkopf rotiert bzw. oszilliert um eine Achse senkrecht zur Längsachse der Schnittstelle bzw. Antriebsachse. In dieser Ausgestaltungsvariante müsste die Schnittstellenaufnahmeeinheit insbesondere vorne mit funktioneller Geometrie ergänzt werden. Insbesondere müssten alle Teile für die Transformation der oszillierenden Längs-Schwenk-Bewegung in eine zur Längsachse der Schnittstelle senkrechten Schwenkbewegung vorgesehen sein. Alternativ könnte die Aufsteckbürstenvorrichtung auch für ein Wechselsystem für manuelle Zahnbürsten vorgesehen sein. Der Antrieb des Zahnbürstenhandteils kann daher insbesondere mechanisch, mittels Elektromotor und Getriebe, mittels eines Schwingankers (oszillierender Magnetantrieb ohne Getriebe) und/oder mittels eines Elektromotors erfolgen. Es ist jedoch auch denkbar, dass die Anwendungseinheit eine von einem Bürstenkopf verschiedene Ausbildung aufweist, wie beispielsweise als ein Interdentalreinigerkopf, wie insbesondere für eine Interdentalbürste mit eingedrehten Borsten, für einen Interdentalreiniger mit gespritzten Reinigungselementen und/oder für Interdentalreiniger mit Zahnseide, wie insbesondere Flosser, und/oder als ein Zungenreinigerkopf und/oder als ein Zahnstocher. Die Aufsteckbürstenvorrichtung könnte jedoch auch allgemein von einer Aufsteckbürste von einem Bürstenprodukt gebildet sein. Unter einem "Bürstenprodukt" soll insbesondere eine Mundhygienebürste und/oder eine Kosmetikbürste und/oder eine Haarbürste und/oder eine Haushaltsbürste verstanden werden. Als Mundhygienebürsten sind beispielsweise manuelle Zahnbürsten wie Mehrwegzahnbürsten, Wechselkopfzahnbürsten, Einwegzahnbürsten oder Single-Tuft-Bürsten, Interdentalreiniger, insbesondere mit eingedrehten Borsten, in gespritzter Form oder als Flosser, Zungenreiniger und/oder Zahnseide denkbar. Als Kosmetikbürsten sind beispielsweise Mascarabürsten, Nagellackpinsel, Gesichtsbürsten, Applikatoren, insbesondere auch Haarfärbe-Applikatoren, Massagegeräte, Make-up-Pinsel, Make-up-Schwamm, Strähnchenpinsel, Haarbürsten, Rasierpinsel und/oder Nassrasierer oder andere Körperpflegeprodukte denkbar. Als Haushaltsbürsten sind beispielsweise Abwaschbürsten oder Flaschenputzer denkbar.

Der Kopfabschnitt ist insbesondere an einem vorderen Ende der Anwendungseinheit angeordnet. Der Kopfbereich umfasst insbesondere einen Bürstenkopf mit einem Borstenfeld, einem Zungenreiniger oder dergleichen. Das Borstenfeld kann insbesondere auf verschiedene Arten realisiert sein, wie insbesondere mit Querreihen, in Längsrichtung mit zwei Senken, in der Mitte einer Erhebung sowie an den Enden je einer Erhebung oder in Querrichtung, insbesondere senkrecht zur Längsachse der Anwendungseinheit, frei von einer Profilierung, also insbesondere mit einem geraden Schnitt. Alternativ wäre denkbar, dass das Borstenfeld eine Adaption an die Zahnform und/oder an die Anwendung an den Zähnen aufweist. Ferner wäre denkbar, dass das Borstenfeld Weichelemente aufweist. Die Weichelemente können insbesondere aus der Weichkomponente geformt sein, welche für das restliche Produkt verwendet wird.

Die Anwendungseinheit weist insbesondere ein breites hinteres Ende auf, welches über den Halsabschnitt zu dem Kopfabschnitt überführt wird. Die Anwendungseinheit weist entlang einer Haupterstreckungsrichtung insbesondere einen Verlauf von einer größeren Breite im Bereich des Aufsteckabschnitts zu einer Verengung im Halsabschnitt zu einer größeren Breite im Kopfabschnitt, insbesondere gesehen in einer Ebene senkrecht zur Längsachse auf. Die Außenform der Anwendungseinheit weist insbesondere einen kontinuierlichen Verlauf auf. Die Anwendungseinheit weist insbesondere eine rundliche Form ohne Stufen auf. Die Außenform der Anwendungseinheit ist insbesondere auf eine Außengeometrie des Zahnbürstenhandteils oder eines Handgriffs angepasst. Insbesondere wird eine Außengeometrie des Zahnbürstenhandteils oder eines Handgriffs zumindest teilweise in der Außengeometrie der Anwendungseinheit fortgeführt. Die Anwendungseinheit weist insbesondere eine Gesamtlänge von 60 mm bis 100 mm, vorzugsweise von 75 mm bis 90 mm, auf. Ein hinteres Ende der Anwendungseinheit, insbesondere im Bereich des Aufsteckabschnitts und/oder des Halsabschnitts ist insbesondere im Wesentlichen rotationssymmetrisch oder zumindest spiegelsymmetrisch bezüglich der Längsachse der Schnittstelle, wobei von dem Halsabschnitt in Richtung des Kopfabschnitts ein fließender Übergang stattfindet und die Rotationssymmetrie verloren geht. In Längsrichtung weist die Anwendungseinheit insbesondere einen Verlauf mit kontinuierlichem Übergang zu dem Halsabschnitt und auch zu dem Kopfabschnitt auf. Ein Durchmesser, insbesondere eine maximale Höhe und eine maximale Breite, der Anwendungseinheit beträgt insbesondere von 13 mm bis 21 mm, vorzugsweise von 16 mm bis 19 mm. Der Halsabschnitt der Anwendungseinheit bildet insbesondere eine minimale Breite aus, welche insbesondere von 4 mm bis 7 mm, vorzugsweise von 4,5 mm bis 5,5 mm, beträgt. Eine minimale Höhe der Anwendungseinheit ist insbesondere nicht klar definierbar, da ein Verlauf vom hinteren Ende her besteht und sich eine minimalste Höhe insbesondere am vorderen Ende des Kopfabschnitts befindet. Eine schmalste Stelle des Halsabschnitts ist insbesondere im Bereich des Übergangs vom Halsabschnitt zu dem Kopfabschnitt. Der Übergang zwischen dem Halsabschnitt und dem Kopfabschnitt bildet insbesondere eine Taillierung mit einem minimalen Durchmesser aus. Der Kopfabschnitt weist insbesondere eine schmale lange, insbesondere ovale, Grundform auf. Der Kopfabschnitt weist insbesondere stetige Übergänge, daher insbesondere keine scharfen Kanten, auf, da sonst insbesondere eine Verletzungsgefahr bestehen würde. Parallel und / oder senkrecht zur Haupterstreckungsrichtung kann der Kopfabschnitt insbesondere flach mit einer konstanten Dimension und einer gleichbleibenden Kopfdicke ausgestaltet sein, mit einer generellen Wellenform sowie mit einer gegen den Halsabschnitt zunehmenden Dicke. Zusätzliche funktionale Elemente wie beispielsweise Zungenreiniger können diese Dimension zudem weiter beeinflussen. Senkrecht zur Borstenrichtung ist der Kopfabschnitt vorzugsweise oval, wobei insbesondere eine Stelle mit maximaler Breite existiert. Der Kopfabschnitt ist senkrecht zur Borstenrichtung insbesondere gerundet ausgebildet, sodass keine scharfen Kanten und/oder Übergänge bestehen. Da der Kopfabschnitt während der Anwendung direkt im Mund ist, sollte eine Verletzungsgefahr möglichst ausgeschlossen werden. Der Kopfabschnitt weist insbesondere eine maximale Breite von 7 mm bis 15 mm, vorzugsweise von 9 mm bis 13 mm, auf. Ferner weist der Kopfabschnitt eine Länge von 20 mm bis 35 mm, vorzugsweise von 22 mm bis 28 mm, auf. Des Weiteren weist der Kopfabschnitt insbesondere eine Dicke von 3 mm bis 7 mm, vorzugsweise von 3,5 mm bis 5,5 mm, auf. Zudem sind zusätzliche Varianten des Kopfabschnitts denkbar. Insbesondere kann der Kopfabschnitt einen Zungenreiniger auf der Rückseite aufweisen. Der Zungenreiniger kann insbesondere in Hartkomponenten und/oder Weichkomponenten realisiert sein. Bei einer Realisierung des Zungenreinigers in Weichkomponenten wäre insbesondere denkbar, dass die Weichkomponenten beispielsweise in einem Ring um eine Insel aus Hartkomponente oder der Zungenreiniger in einem Bett aus Weichkomponente realisiert ist. Bei einer Realisierung in Hart- und Weichkomponente wäre insbesondere denkbar, dass der Zungenreiniger aus beiden Komponenten beispielsweise auf einem Ring und auf einer Insel ausgestaltet ist. Der Zungenreiniger kann insbesondere verschiedene, einem Fachmann als sinnvoll erscheinende Formen aufweisen, wie beispielsweise in Form von Noppen, Lamellen in Kreisen und/oder Lamellen in Längs- oder Querstreifen, gerade, wellenförmig oder dergleichen. Vorzugsweise werden mit dem Zungenreiniger Oberflächenstrukturen ausgebildet, deren Ausdehnung mehrheitlich im Wesentlichen senkrecht zu deren Bewegungsrichtung steht. Vorzugsweise werden Oberflächenstrukturen, welche sich im Wesentlichen in Längsrichtung des Kopfabschnittes erstrecken, vorgesehen.

Die Anwendungseinheit, insbesondere der Kopfabschnitt der Anwendungseinheit, ist vorzugsweise zu einem direkten Kontakt mit einer Mundhöhle eines Nutzers vorgesehen. Alle Teilelemente der Anwendungseinheit können aus mindestens einer Hart- und/oder einer oder mehreren Weichkomponente/-n bestehen. Es sind konventionelle Hart- und/oder Weichkomponenten oder auch nachhaltige Hart- und/oder Weichkomponenten anwendbar. Die Anwendungseinheit besteht insbesondere zumindest zu einem Großteil aus einem Kunststoff, insbesondere aus einer Hartkomponente oder aus einem organischen Werkstoff wie Holz oder Bambus. Die Anwendungseinheit ist insbesondere von einem Aufsteckteil gebildet.

Im Rahmen dieser Offenbarung kommen nahezu beliebige Hartkomponenten und Weichkomponenten infrage, die der Fachmann zweckgemäß geeignet kombinieren und/oder auswählen wird. Als Hartkomponente kommen beispielsweise Styrolpolymerisate wie Styrolacrylnitril (SAN), Polystyrol (PS), Acrylnitrylbutadienstryrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephthalat (PET), insbesondere in Form von säuremodifiziertem Polyethylenterephthalat (PETA), glykolmodifiziertem Polyethylenterephthalat (PETG), Polybutylenterephthalat (PBT), säuremodifiziertem Polycyclohexylendimethylenterephthalat (PCT-A), glykolmodifiziertem Polycyclohexylendimethylenterephthalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphthalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen umfassen. Insbesondere Polyethylen (PE) und/oder Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf. Als Hartkomponente wird bevorzugt Polypropylen (PP) eingesetzt. Mindestens gewisse unter der Hartkomponente genannte Materialien können nachhaltige Materialien sein. Insbesondere Materialien mit Celluloseanteil sind zumindest teilweise biobasiert.

Vorteilhaft werden Hartkomponenten für stabile und/oder strukturtragende Elemente, insbesondere in einem Trägerelement der Anwendungseinheit und/oder der Schnittstellenaufnahmeeinheit und/oder dergleichen eingesetzt. Vorzugsweise weist die Anwendungseinheit eine einzige Hartkomponente auf, die aus einem der genannten Materialien oder auch aus einem Gemisch oder einer Kombination derselben ausgebildet sein kann. Es sind jedoch auch Kombinationen unterschiedlicher Hartkomponenten denkbar, wobei diese beispielsweise in einem Zwei- und/oder Mehrkomponentenspritzguss verarbeitet und/oder miteinander verklebt und/oder verschweißt, insbesondere ultraschallverschweißt, sein können. Alternativ oder zusätzlich können mehrere Hartkomponenten eingesetzt werden, die in einem Zwei- und/oder Mehrkomponentenspritzguss keinen Materialschluss eingehen. Insbesondere ist denkbar, dass in diesem Fall ein Formschluss, beispielsweise in Form zumindest eines Hinterschnitts und/oder zumindest eines Durchbruchs und/oder zumindest einer zumindest teilweisen Umspritzung oder dergleichen, zwischen Hartkomponenten erzeugt ist. Hierbei ist denkbar, dass beispielsweise eine zweite Hartkomponente, die insbesondere auf eine erste Hartkomponente gespritzt ist, nach einem Spritzguss schwindet und/oder schrumpft und vorteilhaft eine Schwundverbindung ausbildet. Geeignete Kombinationen können beispielsweise Polypropylen-Polyester, Polypropylen-Styrolacrylnitril oder andere Kombinationen sein. Die unter der Hartkomponente genannten Materialien können Biokunststoffe beziehungsweise nachhaltige Materialien sein.

Zu der/den erwähnten Hartkomponente(n) kann zusätzlich eine oder mehrere Weichkomponente(n) verwendet werden. Als Weichkomponenten kommen beispielsweise thermoplastische Styrol-Elastometer (TPE-S) wie etwa ein Styrol-Ethylen-Butylen-Styrol-Copolymer (SEBS), ein Styrol-Butadien-Styrol-Copolymer (SBS) oder dergleichen infrage. Zudem ist eine Verwendung thermoplastischer Polyurethan-Elastomere (TPE-U), thermoplastischer Polyamid-Elastomere (TPE-A), thermoplastischer Polyolefin-Elastomere (TPE-O), thermoplastischer Polyester-Elastomere (TPE-E) oder dergleichen denkbar. Weiterhin kann eine Weichkomponente beispielsweise zumindest ein Silikon umfassen. Vorteilhaft weist eine Weichkomponente eine Shore-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Materialschluss. Die unter der Weichkomponente genannten Materialien können Biokunststoffe bzw. nachhaltige Materialien sein.

Unter einer "Schnittstellenaufnahme" soll in diesem Zusammenhang insbesondere ein Aufnahmebereich der Aufsteckbürstenvorrichtung verstanden werden, der zu einer verliersicheren Aufnahme einer Schnittstelle, insbesondere einer Achse der Schnittstelle, des Zahnbürstenhandteils vorgesehen ist. Vorzugsweise ist die Schnittstellenaufnahme insbesondere zu einer kraft- und/oder formschlüssigen Aufnahme der Schnittstelle vorgesehen. Die Schnittstellenaufnahme bildet insbesondere einen Aufnahmebereich aus, in welchen die Schnittstelle des Zahnbürstenhandteils eingeschoben werden kann, wobei die Schnittstelle insbesondere ab einer definierten Einschubkraft in dem Aufnahmebereich mittels Kraft- und/oder Formschluss verrastet und/oder verklemmt. Vorzugsweise ist die Schnittstellenaufnahme auf einer dem Bürstenkopf abgewandten Seite der Aufsteckbürstenvorrichtung angeordnet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Darunter, dass die "Schnittstellenaufnahmeeinheit separat ausgebildet" ist, soll in diesem Zusammenhang insbesondere verstanden werden, dass die Schnittstellenaufnahmeeinheit von einem separaten Bauteil gebildet ist. Vorzugsweise ist die Schnittstellenaufnahmeeinheit nach einer Montage lediglich form- und/oder kraftschlüssig mit der Anwendungseinheit verbunden. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Alternativ können auch andere Verbindungsverfahren verwendet werden, wie z.B. Ultraschallschweißen, Reibschweißen, Kleben. Darunter, dass der Aufnahmebereich zu einer "zumindest im Wesentlichen vollständigen Aufnahme der Schnittstellenaufnahmeeinheit" vorgesehen ist, soll insbesondere verstanden werden, dass zumindest ein wesentlicher Teil der Schnittstellenaufnahmeeinheit in einem montierten Zustand der Schnittstellenaufnahmeeinheit von der Anwendungseinheit umgeben ist. Vorzugsweise sind zumindest 50%, vorzugsweise zumindest 70% und besonders bevorzugt zumindest 90% der Schnittstellenaufnahmeeinheit in zumindest einer Ebene vollständig von der Anwendungseinheit umgeben. Der Aufnahmebereich des Aufsteckabschnitts der Anwendungseinheit weist insbesondere eine Öffnung auf, durch welche die Schnittstellenaufnahmeeinheit bei einer Montage in den Aufnahmebereich eingebracht, wobei die Schnittstellenaufnahmeeinheit in einem montierten Zustand insbesondere frei von einer Überschneidung mit der Öffnung des Aufnahmebereichs ist. Optional kann es eine Überschneidung mit der Öffnung des Aufnahmebereichs geben, beispielsweise wenn die Schnittstellenaufnahmeeinheit derart verlängert wird, dass sie von außen sichtbar ist. Die Schnittstellenaufnahmeeinheit wird vorzugsweise unterschiedlich eingefärbt wie die Anwendungseinheit. Dadurch kann der Nutzer deren Funktion und Position besser antizipieren. Zusätzlich können die Anwendungseinheiten mehrerer Nutzer damit unterschieden werden. Der Aufnahmebereich ist insbesondere vom hinteren Ende her geformt. Insbesondere setzt sich der Aufnahmebereich vom hinteren Ende des Aufsteckabschnitts in Richtung des Halsabschnitts fort. Vorzugsweise ist der Aufnahmebereich in dem Aufsteckabschnitt sowie teilweise in dem Halsabschnitt angeordnet. Bevorzugt ist der Aufnahmebereich gegen das hintere Ende der Aufsteckbürstenvorrichtung gerichtet und daher in Richtung des Zahnbürstenhandteils offen.

Durch die erfindungsgemäße Ausgestaltung der Aufsteckbürstenvorrichtung kann insbesondere eine vorteilhaft zuverlässige Verbindung mit einer Schnittstelle bzw. einem Zahnbürstenhandteil erreicht werden. Es kann insbesondere eine vorteilhaft robuste Ausgestaltung der Schnittstellenaufnahmeeinheit erreicht werden. Insbesondere kann die Anwendungseinheit, insbesondere abhängig von einer eingesetzten Schnittstellenaufnahmeeinheit, für verschiedene Zahnbürstenhandteile mit unterschiedlichen Schnittstellen genutzt werden. Es kann insbesondere eine variable Nutzung und Herstellung der Aufsteckbürstenvorrichtung erreicht werden. Hierdurch kann insbesondere eine vorteilhaft variable und zuverlässige Aufsteckbürstenvorrichtung bereitgestellt werden.

Die Schnittstellenaufnahmeeinheit weist insbesondere die Funktion der Kopplung des Zahnbürstenhandteils bzw. deren Schnittstelle mit der Aufsteckbürstenvorrichtung auf. Die Kopplung kann dabei insbesondere sowohl mit einem Handgriff zu einer manuellen Zahnbürste als auch mit einem Handteil zu einer elektrischen Zahnbürste erfolgen. Es kann insbesondere eine einheitliche Schnittstellenaufnahmeeinheit für verschiedene Anwendungseinheiten bzw. Anwendungseinheiten mit unterschiedlichen Borstenfeldern erreicht werden. Hierdurch kann wiederum eine hohe Variantenvielfalt der Anwendungseinheit bei gleicher Schnittstellenaufnahmeeinheit erreicht werden. Alternativ oder zusätzlich kann ferner eine einheitliche Verbindung zwischen der Schnittstellenaufnahmeeinheit und der Anwendungseinheit bei Verwendung verschiedener Geometrien der Schnittstelle des Zahnbürstenhandteils erreicht werden. Die Schnittstellenaufnahmeeinheit erlaubt damit eine Verwendung unterschiedlicher Ausgestaltungen der Schnittstelle und damit die Verwendung von Zahnbürstenhandteilen unterschiedlicher Herkunft bzw. Hersteller.

Eine Modifikation der Schnittstelle kann an der Aufsteckbürstenvorrichtung somit insbesondere lediglich zu Modifikationen an der Schnittstellenaufnahmeeinheit führen. Ferner kann die Schnittstellenaufnahmeeinheit vorteilhaft komplexere Geometrien aufweisen, da sie separat geformt wird. Insbesondere können komplexe Klemmelemente geformt werden. Ferner wird vorteilhaft die Komplexität der Schnittstellenaufnahmeeinheit in der Anwendungseinheit der fertigen Aufsteckbürstenvorrichtung nicht wahrgenommen. Es können an der Anwendungseinheit insbesondere durchgehende Oberflächen geschaffen werden. Ferner kann zudem eine einfache Montage der Aufsteckbürstenvorrichtung geschaffen werden.

Ferner wird vorgeschlagen, dass die Aufsteckbürstenvorrichtung eine Haupterstreckungsrichtung aufweist, wobei eine Erstreckung des Aufnahmebereichs des Aufsteckabschnitts entlang der Haupterstreckungsrichtung größer, insbesondere wesentlich größer, ist, als eine Erstreckung der Schnittstellenaufnahmeeinheit entlang der Haupterstreckungsrichtung. Vorzugsweise liegt ein Erstreckungsbereich der Schnittstellenaufnahmeeinheit entlang der Haupterstreckungsrichtung vollständig innerhalb eines Erstreckungsbereichs des Aufnahmebereichs des Aufsteckabschnitts entlang der Haupterstreckungsrichtung. Alternativ kann der Erstreckungsbereich der Schnittstellenaufnahmeeinheit entlang der Haupterstreckungsrichtung bis an oder über das zahnbürstenhandteilseitige Ende des Erstreckungsbereichs des Aufnahmebereichs des Aufsteckabschnitts entlang der Haupterstreckungsrichtung zu liegen kommen. Dabei soll unter einer "Haupterstreckungsrichtung" eines Objekts insbesondere eine Richtung verstanden werden, welche parallel zu einer längsten Kante eines kleinsten geometrischen Quaders verläuft, welcher das Objekt gerade noch vollständig umschließt. Unter "wesentlich größer" soll in diesem Zusammenhang insbesondere verstanden werden, dass ein Wert der Erstreckung des Aufnahmebereichs zumindest 10%, vorzugsweise zumindest 20% und besonders bevorzugt zumindest 30% größer ist als ein Wert der Erstreckung der Schnittstellenaufnahmeeinheit. Dadurch kann insbesondere eine vorteilhaft sichere und zuverlässige Aufnahme der Schnittstellenaufnahmeeinheit erreicht werden.

Des Weiteren wird vorgeschlagen, dass die Schnittstellenaufnahmeeinheit einteilig ausgebildet ist und aus von der Anwendungseinheit verschiedenen Materialien vorzugsweise verschiedenen Hartkomponenten besteht. Die Materialeigenschaften der Schnittstellenaufnahmeeinheit sind auf die Montage in der Anwendungseinheit und die Verbindung mit der Schnittstelle ausgelegt. Die Materialeigenschaften der Anwendungseinheit sind vorzugsweise auf die Oberflächengüte, Flexibilität, das Gewicht, Qualitätsaspekte und das Anbringen des Borstenfeldes ausgelegt. Vorzugsweise weist das Material der Schnittstellenaufnahmeeinheit gegenüber einem Material eines Grundkörpers der Anwendungseinheit eine höhere, insbesondere ein wesentlich höhere, Härte und/oder Elastizität auf. Vorzugsweise besteht die Schnittstellenaufnahmeeinheit und der Grundkörper der Anwendungseinheit aus einer Hartkomponente. Die Schnittstellenaufnahmeeinheit besteht insbesondere zumindest zu einem Großteil aus einem Kunststoff. Die Schnittstellenaufnahmeeinheit besteht insbesondere aus POM. Die Schnittstellenaufnahmeeinheit weist insbesondere ein e-Modul von wenigstens 1800 N/mm2 und vorteilhaft von wenigstens 2100 N/mm2 und/oder von höchstens 3100 N/mm2 und vorteilhaft von höchstens 2800 N/mm2 auf, am meisten bevorzugt von 2300 N/mm2 auf. Die Schnittstellenaufnahmeeinheit wird vorzugsweise in einem Spritzgussverfahren hergestellt. Andere Materialien als Kunststoff für die Schnittstellenaufnahmeeinheit sind insbesondere nur bedingt möglich. Ferner sind für die Schnittstellenaufnahmeeinheit insbesondere keine besonderen Oberflächenbeschaffenheiten und/oder Oberflächenstrukturen vorgesehen. Die Anwendungseinheit besteht insbesondere zumindest zu einem Großteil, insbesondere vollständig, aus einer Hartkomponente, insbesondere aus Polypropylen. Die Anwendungseinheit besteht insbesondere aus Kunststoff, insbesondere PP. Der Kunststoff der Anwendungseinheit weist insbesondere ein e-Modul von wenigstens 1000 N/mm² und vorteilhaft von wenigstens 1300 N/mm² und/oder von höchstens 2400 N/mm² und vorteilhaft von höchstens 1800 N/mm² auf, am meisten bevorzugt von 1400 N/mm² auf. Die Anwendungseinheit wird insbesondere in einem Spritzgussverfahren hergestellt. Es ist jedoch auch eine Variante aus einem organischen Material wie Holz oder Bambus denkbar, wobei insbesondere die gleiche Schnittstellenaufnahmeeinheit genutzt werden könnte. Hierdurch könnte insbesondere eine Kombination von Ökologie und Funktionalität erreicht werden. Die Hartkomponente derSchnittstellenaufnahmeeinheit ist härter als die Hartkomponente der Anwendungseinheit. Die Schnittstelle ist jedoch vorzugsweise härter als die Schnittstellenaufnahmeeinheit. Die Hartkomponente der Schnittstellenaufnahmeeinheit verfügt über ein höheres e-Modul als die Hartkomponente der Anwendungseinheit. Bei einem Bruch beispielsweise durch einen Sturz/Schlag des Gerätes oder durch eine Überbeanspruchung (z.B. Alter, Dauerlauf, falsche Handhabung bei Verbinden bzw. Entfernen der Aufsteckbürstenvorrichtung mit dem Zahnbürstenhandteil) bricht die Verbindung zwischen der Schnittstellenaufnahmeeinheit und der Anwendungseinheit, wobei die Schnittstellenaufnahmeeinheit im Wesentlichen unbeschädigt bleibt. Vorzugsweise kann durch die separate Ausbildung der Schnittstellenaufnahmeeinheit eine Materialbeschaffenheit an die Anforderungen der Schnittstellenaufnahmeeinheit angepasst werden. Hierdurch kann insbesondere eine vorteilhafte Schnittstellenaufnahmeeinheit bereitgestellt werden. Es kann insbesondere eine vorteilhaft robuste Ausgestaltung der Schnittstellenaufnahmeeinheit erreicht werden. Mit einem Bruch in der Anwendung im Bereich der Aufsteckbürstenvorrichtung und vorzugsweise in der Schnittstellenaufnahmeeinheit wird bewusst vermieden, dass das Zahnbürstenhandteil bei einer Überbelastung Schaden nimmt. Es wird quasi eine Sollbruchstelle geschaffen. Der Bruch findet, wie beschrieben, vorzugsweise zwischen Schnittstellenaufnahmeeinheit und Anwendungseinheit statt. Es ist aber durchaus auch möglich, dass der Bruch, bei entsprechend stark belastbarer Schnittstelle zwischen Anwendungseinheit und Schnittstellenaufnahmeeinheit, nur die Schnittstellenaufnahmeeinheit betrifft.

Die Schnittstellenaufnahmeeinheit kann auch mehrteilig ausgeführt sein. Die Mehrteiligkeit kann dabei so realisiert werden, dass die Teile vor dem Einbringen in die Anwendungseinheit zusammensetzt werden. Beispielsweise durch Verrasten, Verkleben, Verschweißen etc. Weiter ist es aber auch möglich, dass die Verbindung ein bloßes Aneinanderliegen im montierten Zustand in der Anwendungseinheit ist. Dabei kann beispielsweise ein erstes Teil der Schnittstellenaufnahmeeinheit in den Aufnahmebereich eingebracht werden und ein zweites Teil der Schnittstellenaufnahmeeinheit nachgeschoben werden, wobei das erste Teil am zweiten Teil zur Anlage kommt und das zweite Teil für eine Verspannung sorgt und das Halten der beiden Teile in der Anwendungseinheit sicherstellt. Dabei kann das zweite Teil eine gewisse Rastung mit der Anwendungseinheit eingehen und parallel dazu mit dem ersten Teil der Schnittstellenaufnahmeeinheit eine Verspannung eingehen.

Die Schnittstellenaufnahmeeinheit weist insbesondere einen Anzug bzw. eine Verjüngung in Längsrichtung auf, wobei die Schnittstellenaufnahmeeinheit im Querschnitt zu einem vorderen Ende hin kleiner wird. Hierdurch kann insbesondere eine Montage in den Aufnahmebereich der Anwendungseinheit ermöglicht werden. Eine Querschnittsveränderung der Innengeometrie der Schnittstellenaufnahmeeinheit in Längsrichtung ist insbesondere an eine Schnittstelle des Zahnbürstenhandteils adaptiert. Die Schnittstellenaufnahmeeinheit weist insbesondere einen definierten Schnittstellenaufnahmebereich zu einer Aufnahme der Schnittstelle auf. Eine Gesamtlänge der Schnittstellenaufnahmeeinheit beträgt insbesondere von 18 mm bis 35 mm, vorzugsweise von 20 mm bis 25 mm oder von 30 mm bis 35 mm.

Vorzugsweise wäre denkbar, dass die Schnittstellenaufnahmeeinheit in Verbindung mit einer Anwendungseinheit aus einem organischen Material wie Holz oder Bambus für eine elektrische Zahnbürste eingesetzt wird. Es könnte insbesondere vorteilhaft eine Verbindung von Kunststoff und dem organischen Material bei der Aufsteckbürstenvorrichtung eingesetzt werden. Die Verbindung des Kunststoffs der Schnittstellenaufnahmeeinheit auf die Schnittstelle, insbesondere aus Metall als Metallachse oder aus Kunststoff als Kunststoffachse, könnte insbesondere bestehen bleiben. Es könnte daher insbesondere eine bekannte Performance sowie eine bekannte Stabilität erreicht werden.

Die Schnittstelle ist vorzugsweise aus Metall gestaltet, ist also eine Metallachse. Eingesetzt wird vorzugsweise ein Stahl mit guter Korrosionsbeständigkeit und guter Verarbeitbarkeit (Automatenstahl). Beispielsweise kann ein Stahl 1.4305 eingesetzt werden. Der ausgeprägte Schnittstellenbereich mit Riffelung liegt vorzugsweise mit seinem vorderen Ende zwischen 20 mm und 24 mm, vorzugsweise von 20,5 mm und 22 mm vom Austrittspunkt der Schnittstelle aus dem Zahnbürstenhandteil. Selbstverständlich können durch die Adaption der Schnittstellenaufnahmeeinheit andere Geometrien der Schnittstelle mit anderen Berührungspunkten ebenfalls genutzt werden.

Es wird ferner vorgeschlagen, dass die Schnittstellenaufnahmeeinheit zumindest einen ersten Fixierbereich aufweist, welcher zu einem direkten Kontakt mit dem Aufnahmebereich des Aufsteckabschnitts vorgesehen ist und einen zumindest annähernd dreieckigen Querschnitt aufweist. Vorzugsweise ist der erste Fixierbereich zu einer direkten formschlüssigen Verbindung mit dem Aufsteckabschnitt der Anwendungseinheit vorgesehen. Bevorzugt ist der erste Fixierbereich dazu vorgesehen, in dem Aufnahmebereich des Aufsteckabschnitts mit dem Aufsteckabschnitt der Anwendungseinheit zu verrasten. Der erste Fixierbereich bildet insbesondere eine erste Zone der Schnittstellenaufnahmeeinheit. Der erste Fixierbereich bildet insbesondere eine Haltezone der Schnittstellenaufnahmeeinheit. Die Gesamtlänge des ersten Fixierbereichs beträgt insbesondere von 4 mm bis 8 mm, vorzugsweise von 5 mm bis 7 mm. Eine Außenseite des ersten Fixierbereichs weist insbesondere einen im Wesentlichen dreieckigen Querschnitt mit gerundeten Ecken auf. Insbesondere weist der erste Fixierbereich auf der Außenfläche einen vorstehenden Ring auf. Der Ring ist insbesondere gegenüber der Grundform des ersten Fixierbereichs radial vorstehend ausgebildet. Der Ring dient insbesondere zu einer Verbindung zwischen der Schnittstellenaufnahmeeinheit und dem Aufsteckabschnitt der Anwendungseinheit. Der Ring weist, in einer Ebene parallel zu einer Haupterstreckungsrichtung der Schnittstellenaufnahmeeinheit betrachtet, insbesondere einen vorzugsweise im Wesentlichen rechteckigen Querschnitt auf. Es sind jedoch auch weitere Querschnittsformen denkbar, wie beispielsweise trapezförmig oder halbkreisförmig. Es ist insbesondere eine Form mit einer senkrechten Wand vorgesehen. Insbesondere ist die Form des Rings auf eine Ausnehmung in dem Aufnahmebereich des Aufsteckabschnitts abgestimmt. Vorzugsweise ist der Ring des ersten Fixierbereichs der Schnittstellenaufnahmeeinheit dazu vorgesehen, mit dem Aufsteckabschnitt der Anwendungseinheit zu verrasten. Der Ring weist insbesondere eine Länge, insbesondere eine Erstreckung parallel zu der Haupterstreckungsrichtung der Schnittstellenaufnahmeeinheit, von 0,5 mm bis 2 mm, vorzugsweise von 0,9 mm bis 1,5 mm, auf. Ferner weist der Ring insbesondere eine Höhe, insbesondere eine Erhöhung gegenüber der Grundform des ersten Fixierbereichs, von 0,1 mm bis 0,7 mm, vorzugsweise von 0,2 mm bis 0,5 mm, auf. Eine Mitte der Erhebung des Rings weist zu einem hinteren freien Ende der Schnittstellenaufnahmeeinheit insbesondere einen Abstand von 1 mm bis 4,5 mm, vorzugsweise von 2,5 mm bis 3,5 mm, auf. Die Mitte der Erhebung des Rings befindet sich insbesondere, relativ zu einer Länge des ersten Fixierbereichs, nach 25 % bis 65 %, vorzugsweise nach 40 % bis 60 % der Gesamtlänge gemessen von der Unterkante, das heißt der Kante am freien Ende des ersten Fixierbereichs. Der erste Fixierbereich der Schnittstellenaufnahmeeinheit weist insbesondere eine Öffnung für das Einbringen der Schnittstelle, insbesondere der Achse, des Zahnbürstenhandteils auf. Der erste Fixierbereich dient insbesondere zu einer Einschubmöglichkeit und/oder Zentrierung der Schnittstellenaufnahmeeinheit.

Ferner weist der Aufnahmebereich des Aufsteckabschnitts insbesondere einen zu dem ersten Fixierbereich korrespondierenden zweiten Teilaufnahmebereich der Anwendungseinheit auf. Der zweite Teilaufnahmebereich ist insbesondere von einem ersten Orientierungsbereich gebildet. Der zweite Teilaufnahmebereich weist insbesondere eine zylindrische Form mit einem im Wesentlichen dreieckigen Querschnitt mit abgerundeten Ecken auf. Der zweite Teilaufnahmebereich dient insbesondere zu einer ersten Ausrichtung der Schnittstellenaufnahmeeinheit, insbesondere bei einer Montage. Des Weiteren bildet der zweite Teilaufnahmebereich insbesondere einen ersten Verbindungsbereich. Der zweite Teilaufnahmebereich weist insbesondere eine umlaufende Ausnehmung auf, welche korrespondierend zu dem Ring des ersten Fixierbereichs der Schnittstellenaufnahmeeinheit ausgebildet ist. Der vorstehende Ring des ersten Fixierbereichs der Schnittstellenaufnahmeeinheit ist insbesondere dazu vorgesehen, in die Ausnehmung des zweiten Teilaufnahmebereichs des Aufnahmebereichs des Aufsteckabschnitts einzugreifen. Der zweite Teilaufnahmebereich weist als Grundform insbesondere einen geraden Zylinder auf, in welchen die Ausnehmung eingebracht ist. Die zylindrische Grundform weist einen dreieckigen Querschnitt mit gerundeten Ecken auf. Die zylindrische Grundform kann eine minimale Konizität bzw. Verjüngung aufweisen, damit die Formung der Ausnehmung bzw. die Entformung möglich ist. Der zweite Teilaufnahmebereich weist insbesondere eine Länge von 4 mm bis 8 mm, vorzugsweise von 5 mm bis 7 mm, auf. Die zylindrische Grundform des zweiten Teilaufnahmebereichs weist insbesondere eine Breite, insbesondere senkrecht zu den Borsten gemessen, von 4 mm bis 8 mm, vorzugsweise von 5 mm bis 7 mm, auf. Des Weiteren weist die zylindrische Grundform des zweites Teilaufnahmebereichs insbesondere eine Höhe, insbesondere in Borstenrichtung gemessen, von 5 mm bis 9 mm, vorzugsweise von 6 mm bis 8 mm, auf. Die eingelassene umlaufenden Ausnehmung weist eine Breite von 0,8 mm bis 2 mm, vorzugsweise von 1 mm bis 1,5 mm, auf. Ferner weist die eingelassene umlaufenden Ausnehmung eine Tiefe von 0,1 mm bis 0,7 mm, vorzugsweise von 0,2 mm bis 0,5 mm, auf. Die eingelassene umlaufende Ausnehmung ist korrespondierend zu dem Ring des ersten Fixierbereichs der Schnittstellenaufnahmeeinheit ausgebildet. Die eingelassene umlaufende Ausnehmung weist, in einer Ebene parallel zu einer Haupterstreckungsrichtung betrachtet, insbesondere eine rechteckige Querschnittsform auf. Es sind jedoch auch weitere Querschnittsformen denkbar, wie beispielsweise trapezförmig oder halbkreisförmig. Es ist insbesondere eine Form mit einer senkrechten Wand vorgesehen. Eine Mitte der eingelassenen umlaufenden Ausnehmung befindet sich insbesondere, relativ zu einer Länge des zweiten Teilaufnahmebereichs, nach 25 % bis 65 %, vorzugsweise nach 40 % bis 60 % der Gesamtlänge gemessen von der Unterkante, das heißt der Kante in Richtung der Öffnung des zweiten Teilaufnahmebereichs. Die Ausnehmung des zweiten Teilaufnahmebereichs ist insbesondere umlaufend ausgebildet. Es wäre jedoch auch denkbar, dass die Ausnehmung und/oder der Ring des ersten Fixierbereichs unterbrochen ist, wie beispielsweise nur noch zwei sich 180° gegenüberliegende Teilbereiche der Ausnehmung und/oder des Rings. Dadurch kann insbesondere eine vorteilhafte Verbindung zwischen der Schnittstellenaufnahmeeinheit und der Anwendungseinheit erreicht werden. Es kann insbesondere eine vorteilhafte Fixierung der Schnittstellenaufnahmeeinheit in dem Aufnahmebereich des Aufsteckabschnitts erreicht werden.

Es wird weiter vorgeschlagen, dass die Schnittstellenaufnahmeeinheit zumindest einen von dem ersten Fixierbereich beabstandeten zweiten Fixierbereich aufweist, welcher zu einem direkten Kontakt mit dem Aufnahmebereich des Aufsteckabschnitts vorgesehen ist und einen zumindest annähernd dreieckigen Querschnitt aufweist, wobei der Querschnitt des zweiten Fixierbereichs gegenüber dem Querschnitt des ersten Fixierbereichs verdreht ist. Der zweite Fixierbereich ist insbesondere anders als der erste Fixierbereich orientiert, was insbesondere eine gewisse Verdrehsicherung bringt. Der zweite Fixierbereich bildet insbesondere eine dritte Zone der Schnittstellenaufnahmeeinheit. Der zweite Fixierbereich bildet insbesondere eine Zentrierzone aus. Der zweite Fixierbereich dient insbesondere zu einer Zentrierung der Schnittstellenaufnahmeeinheit in dem Aufnahmebereich des Aufsteckabschnitts. Der zweite Fixierbereich weist insbesondere eine Gesamtlänge von 3 mm bis 8 mm, vorzugsweise von 5 mm bis 7 mm, auf. Eine Außenseite des zweiten Fixierbereichs weist insbesondere eine zylindrische Form mit einem dreieckigen Querschnitt mit abgerundeten Ecken auf. Der zweite Fixierbereich ist insbesondere frei von einer inneren Ausnehmung. Ein Ende der Schnittstelle des Zahnbürstenhandteils erstreckt sich in einem aufgenommenen Zustand bis zu einem hinteren Ende am Ende einer Federzone. Die Schnittstelle greift nicht in den zweiten Fixierbereich ein.

Es ist grundsätzlich möglich, bei entsprechender Ausgestaltung, den ersten und den zweiten Fixierbereich zu vertauschen. So würde der erste Fixierbereich im vorderen Bereich der Schnittstellenaufnahmeeinheit angeordnet und der zweite Fixierbereich im hinteren Bereich der Schnittstellenaufnahmeeinheit. Weiter ist es möglich, die beiden Fixierbereiche direkt nebeneinander anzuordnen, die Bereiche würden so direkt aneinander anliegen. Die Reihenfolge der Anordnung kann vom vorderen Ende der Schnittstellenaufnahmeeinheit her so sein, dass zuerst der erste Fixierbereich und dann der zweite Fixierbereich angeordnet ist, es kann aber auch zuerst der zweite Fixierbereich und dann der erste Fixierbereich angeordnet sein.

Je nach Ausgestaltung kann auch nur ein Fixierbereich realisiert sein, sodass die weiteren Fixiereigenschaften auf andere Weise realisiert werden.

Weiter ist es möglich, die Fixierbereiche miteinander zu kombinieren. So können die in den Fixierbereichen realisierten Elemente kombiniert werden. So kann die Kombination aus Ring und Ausnehmung des ersten Fixierbereichs im Konus des zweiten Fixierbereichs realisiert werden.

Die Federzone ist vorzugsweise zwischen dem ersten Fixierbereich und dem zweiten Fixierbereich angeordnet. Die Federzone verbindet den ersten Fixierbereich und den zweiten Fixierbereich.

Insgesamt weist die Schnittstellenaufnahmeeinheit entlang der Haupterstreckungsrichtung insbesondere genau drei Zonen auf, und zwar die Haltezone, welche den ersten Fixierbereich ausbildet, die Federzone und die Zentrierzone, welche den zweiten Fixierbereich ausbildet. Der zweite Fixierbereich stellt insbesondere eine eindeutige Ausrichtung der Schnittstellenaufnahmeeinheit in dem Aufnahmebereich, insbesondere bei einer Montage, sicher. Ferner dient der zweite Fixierbereich insbesondere als Haltebereich zu einem Festhalten der Schnittstellenaufnahmeeinheit gegenüber der Anwendungseinheit. Die Schnittstellenaufnahmeeinheit liegt in dem zweiten Fixierbereich insbesondere rundum an dem Aufnahmebereich des Aufsteckabschnitts an. Der zweite Fixierbereich dient insbesondere ferner zu einer Kraftübertragung sowie zu einem Verpressen während der Montage. Ferner weist der Aufnahmebereich des Aufsteckabschnitts insbesondere einen zu dem zweiten Fixierbereich korrespondierenden vierten Teilaufnahmebereich auf. Der vierte Teilaufnahmebereich ist insbesondere von einer Einsteckzone gebildet. Der vierte Teilaufnahmebereich dient insbesondere zu einer weiteren Ausrichtung und Verdrehsicherung der Schnittstellenaufnahmeeinheit, insbesondere bei einer Montage. Der vierte Teilaufnahmebereich weist insbesondere eine zylindrische Form mit einem im Wesentlichen dreieckigen Querschnitt mit abgerundeten Ecken auf. Der Zylinder kann eine minimale Konizität aufweisen, damit die Formung der Ausnehmung und/oder die Entformung in der Herstellung möglich ist. Der vierte Teilaufnahmebereich weist eine Länge von 3 mm bis 8 mm, vorzugsweise von 5 mm bis 6,5 mm, auf. Ferner weist der vierte Teilaufnahmebereich insbesondere eine Breite, vorzugsweise senkrecht zur Haupterstreckungsrichtung gemessen, von 3 mm bis 6 mm, vorzugsweise von 4 mm bis 5 mm, auf. Zudem weist der vierte Teilaufnahmebereich vorzugsweise eine Höhe, insbesondere in Borstenrichtung bzw. senkrecht zur Haupterstreckungsrichtung gemessen, von 3 mm bis 6 mm, vorzugsweise von 4 mm bis 5 mm, auf. Insbesondere dient der vierte Teilaufnahmebereich dazu, den zweiten Fixierbereich zu halten. Der vierte Teilaufnahmebereich weist insbesondere eine leichte Konizität auf. Der Querschnitt des vierten Teilaufnahmebereichs mit der leicht konischen Form dient insbesondere dazu, eine optimale Fixierung der Schnittstellenaufnahmeeinheit in der Anwendungseinheit zu ermöglichen. Beim Einschieben der Schnittstellenaufnahmeeinheit findet der Kontakt zwischen den Flächen des vierten Teilaufnahmebereichs des Aufnahmebereichs und dem zweiten Fixierbereich insbesondere erst spät statt, sodass die Kraft zum Einschieben bzw. Montieren erst am Schluss des Einschiebens ansteigt. Ferner kann durch die Konizität insbesondere die Entformung während der Herstellung ermöglicht werden. Des Weiteren dient der vierte Teilaufnahmebereich insbesondere zu einer Kraftübertragung. Die Querschnittsform ist insbesondere so gewählt, dass die Kraftübertragung von der Schnittstelle über die Schnittstellenaufnahmeeinheit auf die Anwendungseinheit möglich ist. Die Seitenflächen des Querschnitts des zweiten Fixierbereichs bilden an dem vierten Teilaufnahmebereich Anschlagsflächen, die insbesondere eine gute Kraftübertragung ermöglichen.

Wird der Aufbau der Fixierbereiche verändert, so kann dies auch zu einer Veränderung der Schnittstellenaufnahmeeinheit führen. Beispielsweise kann der Federabschnitt in Bezug auf die Fixierbereiche anders angeordnet sein. So kann der Federabschnitt vom vorderen Ende der Schnittstellenaufnahmeeinheit her so angeordnet sein, dass zuerst die Fixierbereiche oder ein kombinierter oder nur ein Fixierbereich angeordnet ist und der Federabschnitt dahinterliegt. Damit kommt die Schnittstelle beim Einführen in die Schnittstellenaufnahme in der Schnittstellenaufnahmeeinheit als erstes mit dem Federabschnitt in Berührung.

Der Aufnahmebereich der Anwendungseinheit weist insbesondere bis fünf Teilaufnahmebereiche auf, welche entlang der Haupterstreckungsrichtung hintereinander angeordnet sind. Ein erster Teilaufnahmebereich ist insbesondere von einer Einlaufzone gebildet. Ein dritter Teilaufnahmebereich ist insbesondere von einer Federzone gebildet. Ein fünfter Teilaufnahmebereich ist insbesondere von einem Leerraum gebildet. Der zweite und der vierte Teilaufnahmebereich bilden je einen Fixierbereich aus. An den ersten Teilaufnahmebereich grenzt insbesondere eine Öffnung des Aufnahmebereichs des Aufsteckabschnitts an. Der fünfte Teilaufnahmebereich bildet insbesondere ein geschlossenes Ende des Aufnahmebereichs des Aufsteckabschnitts aus. Der dritte Teilaufnahmebereich ist genau zwischen dem zweiten Teilaufnahmebereich und dem vierten Teilaufnahmebereich angeordnet. Der Übergang von dem zweiten Teilaufnahmebereich zu dem dritten Teilaufnahmebereich ist insbesondere von einem Durchmesser- und/oder Querschnittssprung gebildet. Der Übergang von dem dritten Teilaufnahmebereich zu dem vierten Teilaufnahmebereich ist insbesondere von einem Durchmesser- und/oder Querschnittssprung auf allen Seiten gebildet. Der Übergang von dem ersten Teilaufnahmebereich zu dem zweiten Teilaufnahmebereich ist insbesondere von einer nicht stetigen Stufe und/oder einem nicht stetigen Schritt gebildet. Der zweite Teilaufnahmebereich ist insbesondere zentrisch zu dem ersten Teilaufnahmebereich angeordnet. Dadurch kann insbesondere eine vorteilhafte Verbindung zwischen der Schnittstellenaufnahmeeinheit und der Anwendungseinheit erreicht werden. Es kann insbesondere eine vorteilhafte Fixierung der Schnittstellenaufnahmeeinheit in dem Aufnahmebereich des Aufsteckabschnitts erreicht werden. Ferner kann insbesondere eine vorteilhafte Verdrehsicherung erreicht werden.

Eine Verbindung zwischen der Schnittstellenaufnahmeeinheit und der Anwendungseinheit erfolgt im Wesentlichen über den ersten Fixierbereich der Schnittstellenaufnahmeeinheit im Zusammenspiel mit dem zweiten Teilaufnahmebereich der Anwendungseinheit und den zweiten Fixierbereich der Schnittstellenaufnahmeeinheit im Zusammenspiel mit dem vierten Teilaufnahmebereich der Anwendungseinheit. Die Fixierung erfolgt insbesondere durch die Rastung des Rings des ersten Fixierbereichs der Schnittstellenaufnahmeeinheit in der Ausnehmung in dem zweiten Teilaufnahmebereich der Anwendungseinheit und durch die Klemmung des zweiten Fixierbereichs der Schnittstellenaufnahmeeinheit in dem vierten Teilaufnahmebereich der Anwendungseinheit. Der Ring liegt insbesondere auf einer der Öffnung des Aufnahmebereichs zugewandten Seite an der Ausnehmung des zweiten Teilaufnahmebereichs an. Ferner wird insbesondere der zweite Fixierbereich in dem vierten Teilaufnahmebereich gedrückt und zentriert. Die Winkel des zweiten Fixierbereichs und des vierten Teilaufnahmebereichs sind zueinander passend. Eine flächige Berührung findet insbesondere erst statt, wenn die Schnittstellenaufnahmeeinheit komplett eingeführt ist. Eine Kraftübertragung findet in diesem Bereich zwischen dem zweiten Fixierbereich und dem vierten Teilaufnahmebereich statt. In einem montierten Zustand der Schnittstellenaufnahmeeinheit gibt es eine Verspannung zwischen dem Ring des ersten Fixierbereichs und der Klemmung des zweiten Fixierbereichs. Es entsteht insbesondere eine Haltekraft zwischen der Schnittstellenaufnahmeeinheit und der Anwendungseinheit zwischen 5 kg und 20 kg, vorzugsweise zwischen 7,5 kg und 12,5 kg. Eine Montagekraft, also die Kraft die benötigt wird, um die Schnittstellenaufnahmeeinheit in die Anwendungseinheit zu montieren, beträgt insbesondere von 10 kg bis 21 kg vorzugsweise von 13 kg bis 19 kg. Es sind insbesondere verschiedene Einstellungsmöglichkeiten für die Haltekräfte der Schnittstellenaufnahmeeinheit in der Anwendungseinheit denkbar. Wesentliche Faktoren sind insbesondere die Ausnehmung in dem zweiten Teilaufnahmebereich und der Ring des ersten Fixierbereichs sowie die Toleranzen zwischen den berührenden Flächen.

Ein erster Teilaufnahmebereich des Aufnahmebereichs des Aufsteckabschnitts ist insbesondere von einer Einlaufzone gebildet. Der erste Teilaufnahmebereich ist von einer Freistellung gebildet. In dem ersten Teilaufnahmebereich weist die Anwendungseinheit insbesondere keinen Kontakt mit der Schnittstellenaufnahmeeinheit und/oder dem Zahnbürstenhandteil auf. Die Schnittstelle des Zahnbürstenhandteils ist in dem ersten Teilaufnahmebereich insbesondere freistehend ohne Berührung zu der Anwendungseinheit und/oder der Schnittstellenaufnahmeeinheit. Weiter können im ersten Teilaufnahmebereich auch weitere Geometrien des Zahnbürstenhandteils liegen, beispielsweise wenn die Schnittstelle aus einem vorstehenden Stumpen tritt und der Stumpen in der Aufsteckbürstenvorrichtung "versteckt" werden soll. Die Gesamtlänge des ersten Teilaufnahmebereichs beträgt insbesondere von 5 mm bis 10 mm, vorzugsweise von 6 mm bis 8 mm. Der erste Teilaufnahmebereich weist insbesondere einen ersten Teilbereich in Form eines geraden Kreiszylinders auf. Der erste Teilbereich weist insbesondere eine Länge von 2 mm bis 4 mm, vorzugsweise von 2,5 mm bis 3,5 mm, auf. Der Durchmesser des ersten Teilbereichs des ersten Teilaufnahmebereichs beträgt insbesondere von 7 mm bis 13 mm, vorzugsweise von 9 mm bis 11 mm. An ein vorderes Ende des ersten Teilbereichs schließt vorzugsweise ein zweiter Teilbereich an, welcher einen Anzug gegen das Zentrum der Ausnehmung ausbildet. Der zweite Teilbereich bildet insbesondere eine kegelstumpfförmige Ausnehmung aus. Die Länge des zweiten Teilbereichs des ersten Teilaufnahmebereichs beträgt insbesondere von 3 mm bis 5 mm, vorzugsweise von 3,5 mm bis 4,5 mm. Ein kleinster Durchmesser des zweiten Teilbereichs, insbesondere auf einer dem ersten Teilbereich abgewandten Seite, beträgt insbesondere von 6 mm bis 12 mm, vorzugsweise von 8 mm bis 10 mm. An einer Innenseite des ersten Teilaufnahmebereichs befinden sich insbesondere in die Ausnehmung ragende Podeste. Die Podeste setzen sich insbesondere von dem ersten Teilbereich in den zweiten Teilbereich des ersten Teilaufnahmebereichs fort. Die Podeste erstrecken sich insbesondere zumindest im Wesentlichen parallel zu der Haupterstreckungsrichtung der Schnittstellenaufnahmeeinheit. Die Podeste sind insbesondere in Umfangsrichtung gleichmäßig verteilt angeordnet. Vorzugsweise sind die Podeste symmetrisch zu einer sich durch eine Mittelachse der Anwendungseinheit erstreckenden Ebene angeordnet. Es sind insbesondere immer zwei und zwei Podeste über Kreuz symmetrisch, insbesondere punktsymmetrisch, angeordnet. Die Ausrichtung der Podeste ist insbesondere immer so, dass sie für die Funktion mit einem entsprechenden Gegenelement korrespondieren. Die Funktion der Podeste besteht insbesondere darin, die Aufsteckbürstenvorrichtung zu lagern. Elektrische Zahnbürsten sind meist mit einem wiederaufladbaren Akku versehen, um diesen zu laden gibt es zum Produkt eine Ladestation. Auf der Ladestation hat es Lagerpositionen für Aufsteckbürstenvorrichtungen, insbesondere für Bürstenköpfe, sodass beispielsweise in einem Haushalt ein Handgerät für 2 Personen nutzbar ist bzw., dass Aufsteckbürstenvorrichtungen von zwei Personen gelagert werden können. Die Geometrie der Lagerstumpfe an den Lagerpositionen, die dazu vorgesehen sind, dass die Aufsteckbürsten darauf gesteckt werden, sind anders geformt als die grundsätzliche Schnittstellengeometrie der Aufsteckbürstenvorrichtung. Die Podeste bringen so mit sich, dass die Aufsteckbürstenvorrichtungen an sich einerseits auf das Zahnbürstenhandgerät passen und andererseits auch auf die Ladestation gesteckt werden können. Die Podeste sind insbesondere so geformt, dass sie die Klemmung zwischen Aufsteckbürstenvorrichtung und Ladegerät ermöglichen. Die Podeste weisen insbesondere jeweils eine Breite von 1 mm bis 3 mm, vorzugsweise von 1,5 mm bis 2,5 mm, auf. Vorzugsweise weisen die Podeste ferner eine Höhe von 0,1 mm bis 1 mm, vorzugsweise von 0,1 mm bis 0,4 mm, auf. Die Länge der Podeste korrespondiert insbesondere mit der Höhe der Lagerstumpfe am Ladegerät. Insbesondere entspricht die Länge vorzugsweise mindestens der Höhe der Lagerstumpfe, insbesondere von 2 mm bis 10 mm, vorzugsweise von 3,5 mm bis 6,5 mm.

Der fünfte Teilaufnahmebereich kann insbesondere von einem Leerraum gebildet sein. Ein Übergang von dem vierten Teilaufnahmebereich zu dem fünften Teilaufnahmebereich ist insbesondere von einem Durchmesser- und/oder Querschnittssprung auf allen Seiten gebildet. Die Gesamtlänge des fünften Teilaufnahmebereichs beträgt insbesondere von 0,5 mm bis 3 mm, vorzugsweise von 1,5 mm bis 2,5 mm. Der Querschnitt ist insbesondere gegenüber dem vorhergehenden Querschnitt des vierten Teilaufnahmebereichs verkleinert. Insbesondere ist der fünfte Teilaufnahmebereich gegenüber der montierten Schnittstellenaufnahmeeinheit zentriert. Insbesondere ist der Angusspunkt der Schnittstellenaufnahmeeinheit zentral auf der Endfläche des zweiten Fixierbereichs angeordnet. Vorzugsweise dient der fünfte Teilaufnahmebereich zu einer Aufnahme des Angusspunkts der Schnittaufnahmeeinheit. Der fünfte Teilaufnahmebereich bildet insbesondere einen Leerbereich im montierten Zustand. Vorzugsweise dient der fünfte Teilaufnahmebereich insbesondere als Kompressionsbereich für eine gestaute Luft bei einer Montage der Schnittstellenaufnahmeeinheit in dem Aufnahmebereich. Ferner bildet der fünfte Teilaufnahmebereich insbesondere eine Freistellung für den Angusspunkt der Schnittaufnahmeeinheit. Durch die Freistellung im montierten Zustand ist es insbesondere möglich, dass die Montage sowohl bei einem flachen als auch bei einem vorstehenden Angusspunkt möglich ist.

Ferner geht die Erfindung aus von einer Aufsteckbürstenvorrichtung. Es wird vorgeschlagen, dass die Schnittstellenaufnahmeeinheit zumindest einen Federabschnitt aufweist, welcher dazu vorgesehen ist, in einem aufgenommenen Zustand einer Schnittstelle des Zahnbürstenhandteils, eine Spannkraft auf die Schnittstelle des Zahnbürstenhandteils auszuüben. Vorzugsweise ist der Federabschnitt von der Federzone gebildet, welche zwischen dem ersten Fixierbereich der Schnittstellenaufnahmeeinheit und dem zweiten Fixierbereich der Schnittstellenaufnahmeeinheit angeordnet ist. Unter einem "Federabschnitt" soll in diesem Zusammenhang insbesondere ein Abschnitt der Schnittstellenaufnahmeeinheit verstanden werden, welcher zumindest ein Federelement zur Herstellung einer Klemmverbindung aufweist. Unter einem "Federelement" soll insbesondere ein federelastisches Element zur Herstellung einer Klemmverbindung verstanden werden, das dazu vorgesehen ist, bei einer Montage elastisch ausgelenkt zu werden. Vorzugsweise soll darunter insbesondere ein makroskopisches Element verstanden werden, das zumindest eine Erstreckung aufweist, die in einem normalen Betriebszustand um zumindest 10%, insbesondere um wenigstens 20% und vorzugsweise um mindestens 30% elastisch veränderbar bzw. verdrängbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 0,5 mm, insbesondere von wenigstens 1 mm und vorzugsweise von mindestens 2 mm verstanden werden. Der Federabschnitt erstreckt sich insbesondere zwischen dem ersten Fixierbereich und dem zweiten Fixierbereich. Der Federabschnitt weist vorzugsweise eine Gesamtlänge von 8 mm bis 13 mm, vorzugsweise von 9,5 mm bis 11,5 mm, auf. Der Federabschnitt weist insbesondere eine zumindest annähernd kreiszylindrische Grundform auf. Der Federabschnitt weist insbesondere eine zylindrische Grundform mit einem kreisabschnittsförmigen Querschnitt auf. Die zylindrische Grundform bildet insbesondere einen Teil des Grundkörpers der Schnittstellenaufnahmeeinheit. Die Grundform des Federabschnitts weist vorzugsweise eine Stufe auf. Der Federabschnitt weist an einer Außenseite nur einzelne Berührungspunkte und/oder -flächen zu der Anwendungseinheit auf. Der Federabschnitt ist insbesondere grundsätzlich freigestellt. Auf einer Innenseite weist der Federabschnitt einen Aufnahmebereich zur Aufnahme eines Teilbereichs, insbesondere des freien Endes, der Schnittstelle des Zahnbürstenhandteils auf. Der Aufnahmebereich des Federabschnitts bildet insbesondere einen wichtigen Interaktionsbereich zu der Schnittstelle des Zahnbürstenhandteils. Der Federabschnitt dient insbesondere zu einem Sicherstellen einer eindeutigen Ausrichtung der Schnittstelle, insbesondere der Achse, zu der Aufsteckbürstenvorrichtung. Die Schnittstelle liegt in einem aufgenommenen Zustand insbesondere auf der Vorderseite an der Innenseite des Federabschnitts an. Die Grundform des Federabschnitts bildet insbesondere eine halbrohrförmige Wanne zur Aufnahme der Schnittstelle. Es bildet sich insbesondere eine Wanne, wobei der Abschluss der Wanne eine Freistellung bildet. In einem vorderen Bereich des Federabschnitts, auf einer dem zweiten Fixierbereich zugewandten Seite, weist die Grundform des Federabschnitts insbesondere ein Sackloch auf. Im mittleren und hinteren Bereich des Federbereichs weist der Federabschnitt insbesondere zumindest ein Federelement auf, welches gegenüber der Schnittstelle und gegenüber der Grundform angeordnet ist. Die Grundform des Federbereichs ist oben insbesondere schalenförmig. Hierdurch kann insbesondere zuverlässig eine Übertragung der Bewegung der Schnittstelle erreicht werden. Ferner kann hierdurch insbesondere zuverlässig eine drehfeste Fixierung der Schnittstelle des Zahnbürstenhandteils erreicht werden.

Die Schnittstellenaufnahmeeinheit kann zwei, drei, vier oder mehr Federabschnitte aufweisen, welche dazu vorgesehen sind, in einem aufgenommenen Zustand einer Schnittstelle des Zahnbürstenhandteils, eine Spannkraft auf die Schnittstelle des Zahnbürstenhandteils auszuüben.

Vorzugsweise ist der dritte Teilaufnahmebereich des Aufnahmebereichs des Aufsteckabschnitts, welcher als Federzone ausgebildet ist, zu dem Federabschnitt korrespondierend ausgebildet. Der dritte Teilaufnahmebereich ist insbesondere außermittig zu dem zweiten Teilaufnahmebereich angeordnet. Eine Geometrie des Aufnahmebereichs auf einer der Vorderseite und der Rückseite der Anwendungseinheit zugewandten Seite des Aufnahmebereichs setzt sich zwischen dem zweiten Teilaufnahmebereich und dem dritten Teilaufnahmebereich fort. Auf einer der rechten und linken Seite der Anwendungseinheit abgewandten Seite des Aufnahmebereichs befindet sich zwischen dem zweiten Teilaufnahmebereich und dem dritten Teilaufnahmebereich ein Durchmessersprung. Die der Rückseite der Anwendungseinheit zugewandte Seite des Aufnahmebereichs bildet insbesondere eine Auflagezone für ein Federelement des Federabschnitts der Schnittstellenaufnahmeeinheit. Der dritte Teilaufnahmebereich weist insbesondere eine Gesamtlänge von 8 mm bis 13 mm, vorzugsweise von 10 mm bis 11,5 mm, auf. Die Gesamtlänge steht insbesondere im Zusammenspiel mit dem zumindest einen Federelement des Federabschnitts der Schnittstellenaufnahmeeinheit.

Die Schnittstellenaufnahmeeinheit muss im korrespondierenden Bereich vorzugsweise gleich lang sein wie der dritte Teilaufnahmebereich der Anwendungseinheit. Die Länge der Schnittstellenaufnahmeeinheit ist insbesondere so gewählt, dass das zumindest eine Federelement des Federabschnitts wie benötigt funktioniert. Der dritte Teilaufnahmebereich weist insbesondere eine kreisförmige Querschnittsform mit einer Ausstülpung auf. Die Ausstülpung ist auf der Rückseite des Aufnahmebereichs angeordnet. Die Ausstülpung korrespondiert insbesondere mit der Rückseite der Schnittstellenaufnahmeeinheit. Ein höchster Punkt, insbesondere ein der Vorderseite zugewandter Punkt, des Aufnahmebereichs setzt sich von dem zweiten Teilaufnahmebereich in den dritten Teilaufnahmebereich fort. Dies dient insbesondere zu einem Einfahren der Schnittstellenaufnahmeeinheit bei einer Montage, wobei bei einem Einfahren sich die Vorderseite der Schnittstellenaufnahmeeinheit insbesondere auf einer stetigen Fläche befindet.

Des Weiteren wird vorgeschlagen, dass der Federabschnitt der Schnittstellenaufnahmeeinheit zumindest ein Stegfederelement und zumindest ein Bogenfederelement aufweist, welche jeweils, in einem aufgenommenen Zustand einer Schnittstelle des Zahnbürstenhandteils, dazu vorgesehen sind, eine Spannkraft auf die Schnittstelle des Zahnbürstenhandteils auszuüben. Vorzugsweise sind das Stegfederelement und das Bogenfederelement jeweils dazu vorgesehen, auf einen gemeinsamen Punkt eine Spannkraft auszuüben. Bevorzugt ist das Stegfederelement und das Bogenfederelement jeweils dazu vorgesehen, in einem gemeinsamen Bereich eine Spannkraft auf die Schnittstelle des Zahnbürstenhandteils auszuüben. Unter einem "Stegfederelement" soll in diesem Zusammenhang insbesondere ein stegförmiges Federelement verstanden werden. Vorzugsweise weist das Stegfederelement in einem entspannten Zustand eine rechteckige Grundform auf. Bevorzugt ist eine Längserstreckung des Stegfederelements wesentlich größer, insbesondere zumindest 2-mal, vorzugsweise zumindest 3-mal und besonders bevorzugt zumindest 5-mal größer, als eine Quererstreckung des Stegfederelements. Besonders bevorzugt weist das Stegfederelement zumindest ein freies Ende auf. Unter einem "Bogenfederelement" soll in diesem Zusammenhang insbesondere ein bogenförmiges Federelement verstanden werden. Vorzugsweise weist das Bogenfederelement eine kreisbogenförmige Grundform auf. Das Stegfederelement und das Bogenfederelement sind vorzugsweise auf einer Rückseite der Schnittstellenaufnahmeeinheit angeordnet. Insbesondere sind das Stegfederelement und das Bogenfederelement auf eine Form der Schnittstelle des Zahnbürstenhandteils abgestimmt, sodass insbesondere verschiedene Anordnungen und Ausgestaltungen möglich sind. Das Stegfederelement und das Bogenfederelement wirken insbesondere zusammen. Dadurch kann insbesondere zuverlässig eine Übertragung der Bewegung der Schnittstelle erreicht werden. Ferner kann hierdurch insbesondere zuverlässig eine drehfeste Fixierung der Schnittstelle des Zahnbürstenhandteils erreicht werden.

Es wird ferner vorgeschlagen, dass das zumindest eine Stegfederelement und das zumindest eine Bogenfederelement einstückig ausgebildet sind. Unter "einstückig" soll in diesem Zusammenhang insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorzugsweise sind das zumindest eine Stegfederelement und das zumindest eine Bogenfederelement zumindest teilweise seriell hintereinandergeschaltet. Das zumindest eine Stegfederelement und das zumindest eine Bogenfederelement üben eine Federkraft insbesondere zumindest im Wesentlichen senkrecht zu der Haupterstreckungsrichtung der Schnittstellenaufnahmeeinheit aus. In einem Betriebszustand sind das zumindest eine Stegfederelement und das zumindest eine Bogenfederelement insbesondere zwischen der Anwendungseinheit und der Schnittstelle verspannt. Das zumindest eine Stegfederelement und das zumindest eine Bogenfederelement weisen vorzugsweise zwei Anlageflächen auf. Das zumindest eine Bogenfederelement stützt sich insbesondere mit einem Podest außen auf dem Bogen an der Innenseite des Aufnahmebereichs des Aufsteckabschnitts ab. Das zumindest eine Stegfederelement stützt sich insbesondere innen durch ein Podest auf einer Federzunge des Stegfederelements an der Schnittstelle des Zahnbürstenhandteils ab. Das zumindest eine Stegfederelement und das zumindest eine Bogenfederelement bilden gemeinsam insbesondere ein Klemmteil des Federabschnitts aus. Der Federabschnitt weist vorzugsweise ein Klemmteil auf, es wäre jedoch auch möglich, dass der Federabschnitt beispielsweise zwei, drei, vier oder mehrere Klemmteile aufweist. Das Klemmteil befindet sich insbesondere im hinteren Bereich des Federabschnitts. Das Bogenfederelement ist insbesondere zu einer Abstützung an einer Innenseite der Anwendungseinheit vorgesehen. Das Bogenfederelement ist insbesondere von einem bogenförmigen und/oder brückenartigen Federelement gebildet. Das Bogenfederelement dient insbesondere zu einer Verbindung zwischen dem Stegfederelement und dem Grundkörper der Schnittstellenaufnahmeeinheit. Vorzugsweise ist das Bogenfederelement mit einem ersten Ende mit dem Stegfederelement verbunden und mit einem zweiten Ende mit dem Grundkörper der Schnittstellenaufnahmeeinheit verbunden. Das Bogenfederelement weist auf einer Außenseite des Bogens insbesondere ein Podest auf. Das Podest weist insbesondere eine Länge von 1 mm bis 4,5 mm, vorzugsweise von 2,5 mm bis 3,5 mm, auf. Ferner weist das Podest insbesondere eine Breite von 1 mm bis 3,5 mm, vorzugsweise von 1,5 mm bis 2,5 mm, auf. Das Podest des Bogenfederelements dient insbesondere zu einer sicheren Abstützung des Bogenfederelements in dem Aufnahmebereich des Aufsteckabschnitts der Anwendungseinheit. Ferner bildet das Podest insbesondere einen Abstützpunkt des Federsystems. Insbesondere kann mittels des Podests bzw. insbesondere der Höhe des Podests des Bogenfederelements eine Kraft eingestellt werden, die schlussendlich auf die Schnittstelle des Zahnbürstenhandteils wirkt. Mittels einer größeren Höhe des Podests kann beispielsweise eine höhere Kraft erzeugt werden, da das Bogenfederelement im montierten Zustand in Richtung der Schnittstellenaufnahme gedrückt wird. Das Stegfederelement ist insbesondere seitlich und hinten freigestellt. Vorzugsweise ist das Stegfederelement im Wesentlichen freistehend ausgebildet. Das Stegfederelement erstreckt sich in einem entspannten Zustand parallel zu der Haupterstreckungsrichtung, insbesondere etwas von einer Mittelachse der Schnittstellenaufnahmeeinheit entfernt. Eine Breite der seitlichen Freistellung, insbesondere auf einer Seite gemessen, beträgt insbesondere von 0,1 mm bis 1 mm, vorzugsweise von 0,25 mm bis 0,75 mm. Eine Länge der Freistellung insgesamt entlang der Haupterstreckungsrichtung beträgt insbesondere von 5 mm bis 11 mm, vorzugsweise von 8 mm bis 9,5 mm. Eine Länge der Freistellung entspricht insbesondere einer Länge des Klemmelements mit dem Stegfederelement und dem Bogenfederelement. Das Klemmelement mit dem Stegfederelement und dem Bogenfederelement ist dazu vorgesehen, eine Klemmkraft auf die Schnittstelle des Zahnbürstenhandteils auszuüben. Die Klemmkraft definiert die Abzugskraft der Aufsteckbürstenvorrichtung von der Schnittstelle des Zahnbürstenhandteils. Die Klemmkraft ist insbesondere kleiner als die Kraft zum Entfernen der Schnittstellenaufnahmeeinheit aus der Anwendungseinheit. Vorzugsweise wird die Klemmkraft über eine Abzugskraft definiert, daher insbesondere die Kraft, die benötigt wird, um die montierte Aufsteckbürstenvorrichtung von der Schnittstelle des Zahnbürstenhandteils zu entfernen. Die Abzugskraft ist insbesondere ein Zusammenspiel zwischen der Schnittstelle des Zahnbürstenhandteils und der Aufsteckbürstenvorrichtung. Bei der Aufsteckbürstenvorrichtung bestehen insbesondere mehrere Einstellungsmöglichkeiten für eine Haltekraft, insbesondere durch Anpassung der Schnittstellenaufnahmeeinheit auf der Schnittstelle. Es kann beispielsweise eine Toleranz zwischen den berührenden Flächen, eine Vorspannung der Federelemente, eine Höhe des Podests auf dem Bogenfederelement, eine Höhe des Podests auf dem Stegfederelement eingestellt werden. Vorzugsweise ist der Querschnitt der Schnittstellenaufnahmeeinheit und der Schnittstelle des Zahnbürstenhandteils aufeinander abgestimmt. Insbesondere sowohl Querschnitte direkt aneinander anliegender Stellen sowie Querschnitte freigestellter Stellen. Die Schnittstelle des Zahnbürstenhandteils ist in einem verbundenen Zustand des Zahnbürstenhandteils mit der Aufsteckbürstenvorrichtung insbesondere in einer Flucht mit einer Borstenfläche der Aufsteckbürstenvorrichtung. Insbesondere drückt ein Podest des Stegfederelements zu einer Kraftübertragung und Fixierung der Schnittstelle auf eine geriffelte Fläche der Schnittstelle. Ein Abzugsgewicht der Aufsteckbürstenvorrichtung von der Schnittstelle beträgt insbesondere von 0,75 kg bis 3,5 kg, vorzugsweise von 1,2 kg bis 2,8 kg. Dadurch kann insbesondere eine zuverlässige Fixierung der Schnittstelle erreicht werden. Es kann insbesondere eine Langlebigkeit der Schnittstellenaufnahmeeinheit erreicht werden. Ferner kann insbesondere zuverlässig eine Übertragung der Bewegung der Schnittstelle erreicht werden. Ferner kann hierdurch insbesondere zuverlässig eine drehfeste Fixierung der Schnittstelle des Zahnbürstenhandteils erreicht werden.

Es wird weiter vorgeschlagen, dass das zumindest ein Stegfederelement und das zumindest eine Bogenfederelement jeweils mit einem Ende mit einem Grundkörper der Schnittstellenaufnahmeeinheit verbunden sind, wobei die Enden voneinander abgewandt sind. Vorzugsweise ist das zumindest eine Stegfederelement mit einem vorderen Ende mit einem Grundkörper der Schnittstellenaufnahmeeinheit und mit einem hinteren Ende mit dem Bogenfederelement verbunden, wobei die Enden voneinander abgewandt sind. Bevorzugt ist das zumindest eine Bogenfederelement mit einem hinteren Ende mit einem Grundkörper der Schnittstellenaufnahmeeinheit und mit einem vorderen Ende mit dem Stegfederelement verbunden, wobei die Enden voneinander abgewandt sind.

Ebenso ist eine gespiegelte Anordnung möglich. Nämlich dass das zumindest eine Stegfederelement mit einem hinteren Ende mit einem Grundkörper der Schnittstellenaufnahmeeinheit und mit einem vorderen Ende mit dem Bogenfederelement verbunden ist, wobei die Enden voneinander abgewandt sind. Somit ist das zumindest eine Bogenfederelement mit einem vorderen Ende mit einem Grundkörper der Schnittstellenaufnahmeeinheit und mit einem hinteren Ende mit dem Stegfederelement verbunden, wobei die Enden voneinander abgewandt sind.

Das Stegfederelement ist dadurch insbesondere über das Bogenfederelement zusätzlich mit dem Grundkörper der Schnittstellenaufnahmeeinheit verbunden und umgekehrt.

Die Verbindung des Stegfederelements und des Bogenfederelements mit der Schnittstellenaufnahmeeinheit passiert jeweils an einem Ende des entsprechenden Elements. In Bezug auf die eingeführte Schnittstelle bzw. deren Längsachse liegt die Verbindung des Stegfederelements zur Schnittstellenaufnahmeeinheit tiefer als die Verbindung des Bogenfederelements zur Schnittstellenaufnahmeeinheit. Die Höhendifferenz beträgt zwischen 0,5 mm und 3 mm, vorzugsweise zwischen 0,9 und 2 mm. Die Verbindungen Stegfederelement-Schnittstelleaufnahmeeinheit und Bogenfederelement-Schnittstellenaufnahmeeinheit liegen vorzugsweise auf einer Längsachse und sind seitlich nicht verschoben.

Ferner wäre denkbar, dass das Stegfederelement an einem vorderen Ende, an welchem das Stegfederelement mit dem Grundkörper der Schnittstellenaufnahmeeinheit verbunden ist, eine Materialschwächung aufweist, insbesondere in der Art eines Filmscharniers. Hierdurch kann insbesondere eine Haltekraft reduziert werden und/oder es kann mehr Kraft über die Abstützung durch das Bogenfederelement erzeugt werden. Das Stegfederelement und das Bogenfederelement bilden gemeinsam insbesondere einen entlang der Haupterstreckungsrichtung der Schnittstellenaufnahmeeinheit verlaufenden Steg, welcher sich zumindest annähernd über den gesamten Federabschnitt erstreckt. Dadurch kann insbesondere eine zuverlässige Fixierung der Schnittstelle erreicht werden. Es kann insbesondere eine Langlebigkeit der Schnittstellenaufnahmeeinheit erreicht werden. Ferner kann insbesondere zuverlässig eine Übertragung der Bewegung der Schnittstelle erreicht werden. Ferner kann hierdurch insbesondere zuverlässig eine drehfeste Fixierung der Schnittstelle des Zahnbürstenhandteils erreicht werden.

Zudem wird vorgeschlagen, dass das zumindest eine Bogenfederelement dazu vorgesehen ist, sich an einer Innenfläche des Aufnahmebereichs des Aufsteckabschnitts abzustützen. Das Bogenfederelement ist insbesondere zu einer Abstützung an einer Innenseite der Anwendungseinheit vorgesehen. Vorzugsweise ist das zumindest eine Bogenfederelement insbesondere dazu vorgesehen, zumindest teilweise eine Spannkraft zwischen der Innenfläche des Aufnahmebereichs des Aufsteckabschnitts und der Schnittstelle des Zahnbürstenhandteils zu erzeugen. Das Bogenfederelement stützt sich insbesondere an einem von den Enden entfernten Mittelbereich an der Innenfläche des Aufnahmebereichs des Aufsteckabschnitts ab. Dadurch kann insbesondere vorteilhaft eine Spannung aufgebaut werden. Es kann insbesondere vorteilhaft eine hohe Klemmkraft erzeugt werden. Insbesondere kann dadurch vorteilhaft ein unstetiger Verlauf der Klemmkraft während einer Verbindung der Schnittstelle mit der Aufsteckbürstenvorrichtung erreicht werden.

Ferner wird vorgeschlagen, dass das zumindest eine Bogenfederelement zumindest ein Podest aufweist, welches zu einer Anlage an der Innenfläche des Aufnahmebereichs des Aufsteckabschnitts vorgesehen ist. Das Podest ist insbesondere auf einer Außenseite des Bogens des Bogenfederelements angeordnet. Das Podest ist vorzugsweise von einem rechteckigen Podest gebildet. Insbesondere bildet das Podest eine Erhebung gegenüber einer Grundform des Bogenfederelements aus. Besonders bevorzugt bildet das Podest insbesondere einen von einer Mittelachse der Schnittstellenaufnahmeeinheit entferntesten Punkt des Bogenfederelements aus. Das Podest weist insbesondere eine Länge von 1 mm bis 4,5 mm, vorzugsweise von 2,5 mm bis 3,5 mm, auf. Ferner weist das Podest insbesondere eine Breite von 1 mm bis 3,5 mm, vorzugsweise von 1,5 mm bis 2,5 mm, auf. Das Podest des Bogenfederelements dient insbesondere zu einer sicheren Abstützung des Bogenfederelements in dem Aufnahmebereich des Aufsteckabschnitts der Anwendungseinheit. Ferner bildet das Podest insbesondere einen Abstützpunkt des Klemmelements mit dem Stegfederelement und dem Bogenfederelement. Insbesondere kann mittels des Podests bzw. insbesondere der Höhe des Podests des Bogenfederelements eine Kraft eingestellt werden, die schlussendlich auf die Schnittstelle des Zahnbürstenhandteils wirkt. Mittels einer größeren Höhe des Podests kann beispielsweise eine höhere Kraft erzeugt werden, da das Bogenfederelement im montierten Zustand in Richtung der Schnittstellenaufnahme gedrückt wird. Dadurch kann insbesondere vorteilhaft eine Spannung aufgebaut werden. Es kann insbesondere vorteilhaft eine hohe Klemmkraft erzeugt werden. Insbesondere kann dadurch vorteilhaft ein unstetiger Verlauf der Klemmkraft während einer Verbindung der Schnittstelle mit der Aufsteckbürstenvorrichtung erreicht werden.

Des Weiteren wird vorgeschlagen, dass das zumindest eine Stegfederelement ein freies Ende aufweist, welches eine Federzunge ausbildet. Vorzugsweise weist das Stegfederelement ein hinteres freies Ende auf. Ein einem unteren Ende zugewandtes Ende des Stegfederelements ist insbesondere frei von einer Verbindung mit dem Grundkörper der Schnittstellenaufnahmeeinheit ausgebildet. Das Stegfederelement bildet vorzugsweise eine Lanze in Längsrichtung aus. Das Stegfederelement bildet insbesondere hinter einer Verbindung mit dem Bogenfederelement eine freistehende Federzunge aus. Die Federzunge ist dazu ausgeformt, dass die Schnittstelle des Zahnbürstenhandteils korrekt in die Ausnehmung eingeführt wird und sich nicht in der Federgeometrie verhakt. Insbesondere kann dadurch vorzugsweise eine Zentrierung der Schnittstelle des Zahnbürstenhandteils beim Einführen in die Schnittstellenaufnahme unterstützt werden und weiter kann vermieden werden, dass sich die Schnittstelle bzw. die Metallachse des Zahnbürstenhandteils in freistehenden Strukturen des Stegfederelements und/oder des Bogenfederelements verhakt. Dadurch kann insbesondere eine vorteilhafte Kopplung der Schnittstelle des Zahnbürstenhandteils mit der Aufsteckbürstenvorrichtung erreicht werden. Es kann insbesondere eine vorteilhafte Zentrierung der Schnittstelle des Zahnbürstenhandteils in der Schnittstellenaufnahmeeinheit erreicht werden.

Es wird ferner vorgeschlagen, dass das zumindest eine Stegfederelement zumindest ein Podest aufweist, welches dazu vorgesehen ist, eine Klemmkraft des Federabschnitts auf die Schnittstelle, beispielsweise eine Metall- oder Kunststoffachse des Zahnbürstenhandteils, einzuleiten. Das zumindest eine Stegfederelement stützt sich insbesondere innen durch das Podest an der Schnittstelle des Zahnbürstenhandteils ab. Das Podest ist vorzugsweise von einem rechteckigen Podest gebildet. Insbesondere bildet das Podest eine Erhebung gegenüber einer Grundform des Stegfederelements aus. Besonders bevorzugt bildet das Podest insbesondere einen der Mittelachse der Schnittstellenaufnahmeeinheit nächstliegenden Punkt des Stegfederelements aus. Das Podest weist insbesondere eine Länge von 1,5 mm bis 4,5 mm, vorzugsweise von 2,5 mm bis 3,5 mm, auf. Ferner weist das Podest insbesondere eine Breite von 1 mm bis 3,5 mm, vorzugsweise von 1,5 mm bis 2,5 mm, auf. Das Podest ist insbesondere direkt anschließend an eine Anbindungsstelle des Bogenfederelements an das Stegfederelement angeordnet. Das Podest ist insbesondere auf einer dem Bogenfederelement abgewandten Seite des Stegfederelements angeordnet. Die Position und/oder Form des Podests ist insbesondere auf die Schnittstelle des Zahnbürstenhandteils angestimmt. Das Podest muss insbesondere auf die zugehörige flache und/oder geriffelte Fläche der Schnittstelle passen. Das Podest dient insbesondere als Berührungspunkt zu der Schnittstelle des Zahnbürstenhandteils. Über das Podest wird insbesondere eine Klemmkraft auf die Schnittstelle eingeleitet. Mit dem Podest wird insbesondere viel Kraft auf eine kleine Fläche projiziert. Es wird insbesondere die Haftreibung gegenüber einer vollständigen Auflage reduziert. Hierdurch kann wiederum entsprechend die Schnittstelle des Zahnbürstenhandteils vorteilhaft eingeführt und auch vorteilhaft wieder entnommen werden. Gleichzeitig kann insbesondere eine vorteilhafte Fixierung erreicht werden.

Die beschriebenen Teilaufnahmebereiche der Aufnahme können wie beschrieben angeordnet sein. Es ist jedoch auch möglich, die Anordnung anders zu wählen oder auch gewisse Teilaufnahmebereiche wegzulassen.

Beispielsweise kann der fünfte Teilaufnahmebereich weggelassen werden, beispielsweise wenn der Anguss der Schnittstellenaufnahmeeinheit anders angeordnet ist. Die andere Anordnung kann beispielsweise eine andere Position bedeuten oder auch eine andere geometrische Ausgestaltung der Position (wie Anguss in einer Vertiefung, sodass dieser nicht an anderen Geometrien anstossen kann).

Beispielsweise kann ein erster Teilaufnahmebereich weggelassen werden, wenn beispielsweise keine Aufsteckmöglichkeit mittels Podesten zur Lagerung auf der Ladestation nötig ist oder wenn keine weiteren Teile des Zahnbürstenhandteils darin Platz finden müssen. So würde die Schnittstelle direkt in den zweiten Teilaufnahmebereich eingeführt werden und der erste Teilaufnahmebereich würde weggelassen und somit auch nicht durchquert.

Die Anordnung insbesondere des zweiten und vierten Teilaufnahmebereichs wie auch des dritten Teilaufnahmebereichs hängt direkt mit der Gestaltung der Schnittstellenaufnahmeeinheit zusammen. Die entsprechenden Bereiche müssen miteinander korrespondieren. So bringt eine andere Anordnung der Fixierbereiche - wie vorher beschrieben - natürlich auch eine veränderte Anordnung des zweiten und vierten Teilaufnahmebereichs. Entsprechend sind auch Weglassungen möglich, beispielsweise wenn die Fixierbereiche der Schnittstellenaufnahme kombiniert werden, braucht es auch nur ein entsprechend geformtes Gegenstück an der Anwendungseinheit.

Es wird weiter vorgeschlagen, dass der Bürstenkopf ein definiertes Borstenfeld aufweist. Es ist insbesondere denkbar, dass der Bürstenkopf ein Borstenfeld mit zumindest zwei wesentlich differierenden Borstenbündeln aufweist. Vorzugsweise weist der Bürstenkopf eine Vielzahl wesentlich differierender Borstenbündel auf. Unter "wesentlich differierenden Borstenbündeln" soll in diesem Zusammenhang insbesondere verstanden werden, dass sich die zumindest zwei Borstenbündel wesentlich zumindest hinsichtlich ihrer Form und/oder ihrer Ausrichtung voneinander unterscheiden. Vorzugsweise weisen die Borstenbündel eine wesentlich differierende Form und/oder eine wesentlich differierende Ausrichtung auf. Unter einer "wesentlich differierenden Form" der Borstenbündel soll in diesem Zusammenhang insbesondere verstanden werden, dass eine Grundfläche eines ersten Borstenbündels, insbesondere bei einer beliebigen Ausrichtung, sich zumindest zu 10%, vorzugsweise zumindest zu 30% und besonders bevorzugt zumindest zu 50% von einer Grundfläche des zweiten Borstenbündels unterscheidet. Vorzugsweise bildet maximal 80%, vorzugsweise maximal 60% und besonders bevorzugt maximal 40% einer Fläche der Grundfläche des ersten Borstenbündels und/oder des zweiten Borstenbündels bei einer Überlagerung eine Schnittmenge. Unter einer "wesentlich differierenden Ausrichtung" soll in diesem Zusammenhang insbesondere verstanden werden, dass eine Ausrichtung der Borsten eines ersten Borstenbündels zumindest 10°, vorzugsweise zumindest 20° und besonders bevorzugt zumindest 30° von einer Ausrichtung der Borsten eines zweiten Borstenbündels abweicht. Dadurch kann insbesondere eine vorteilhafte Reinigungsleistung erreicht werden.

Die Borstenbündel können mittelseines ankerlosen Hot-Tufting-Verfahrens im Bürstenkopf beziehungsweise im Lochfeld verankert sein. Es sind jedoch auch andere, einem Fachmann als sinnvoll erscheinende Herstellungsverfahren zur Herstellung der Borstenbündel denkbar. Spezifisch für das Verfahren weisen die Borstenlöcher in dem Bürstenkopf in der Draufsicht gesehen grundsätzlich geschlossene Konturen auf, wobei alle möglichen geometrischen Formen Anwendung finden können. Die Borstenbündel bzw. ihre Grundflächen können kreisförmig, kreisringförmig, kreissegmentförmig, sternförmig, dreieckig, polygonförmig, rechteckig oder quadratisch, etc. ausgebildet sein. Es können ferner unterschiedliche Borsten in verschiedene Borstenbündel innerhalb eines Borstenfelds eingesetzt werden oder aber auch innerhalb eines Borstenbündels. Vorzugsweise sind die Borstenbündel ferner spiegelsymmetrisch zu einer Längsachse und/oder zur Querachse des Bürstenkopfs und/oder punktsymmetrisch, vorzugsweise zu einem geometrischen Mittelpunkt des Bürstenkopfs, ausgebildet. Eine Topografie, also insbesondere die Oberfläche nutzungsseitiger Borstenenden oder Reinigungselemente, ist innerhalb eines Borstenfelds vorzugsweise flach, domförmig, wannenförmig, cupförmig, zinnenförmig, kegelförmig, reihenförmig und/oder in Form von Logos oder Buchstaben, die erhöht und/oder eingelassen sind, ausgestaltet. Bei dem Verfahren wird zunächst der Grundkörper der Aufsteckbürste mit Sacklöchern bzw. Aussparungen im Kopfbereich gespritzt. Anschließend werden Borsten bündelweise bereitgestellt und bündelweise verschmolzen. Darauffolgend wird der Grundkörper in dem Kopfabschnitt etwa auf eine Glasübergangstemperatur erwärmt. Schließlich werden die verschmolzenen Borstenenden in die Sacklöcher bzw. Aussparungen eingeführt und die Borstenbündel mit Druck in dem Bürstenkopf verankert. Dabei wird die Größe der Sacklöcher reduziert bzw. die Geometrie verformt und die Borstenbündel so verankert.

Zumindest einige oder alle der Borsten sind vorteilhaft konventionell extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT) gefertigt, wobei beliebige andere Materialien denkbar sind. Ferner ist denkbar, dass zumindest einige der Borsten eine Zuspitzung und/oder einen veränderlichen Querschnitt aufweisen. Vorzugsweise sind die Borsten aus einem einzelnen, insbesondere auch gemischten, Material ausgebildet. Es sind aber auch Borsten mit mehreren Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein. Die Borsten können dabei sowohl aus einem Material als auch aus mehreren Materialien, insbesondere durch Coextrusion, extrudiert werden.

Insbesondere kommen Borsten infrage mit einem kreisrunden Querschnitt, wobei beliebige andere Querschnitte wie beispielsweise polygonale, dreieckige, rechteckige, quadratische, elliptische, sternförmige, trapezförmige, parallelogrammförmige, rhombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig aber auch unregelmäßig angeordnet sein. Insbesondere können sich in Gruppen angeordnete und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, einer Geometrie, einer Anspitzung und dergleichen, insbesondere abwechselnd, unterscheiden. Vorzugsweise weisen die Borsten für Mundhygieneanwendungen einen Durchmesser, insbesondere senkrecht zu deren Längsachse, von wenigstens 0,075 mm und/oder von höchstens 0,25 mm auf. Vorteilhaft weisen die Borsten eine Querschnittsfläche, insbesondere senkrecht zu deren Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden. Im Fall von zugespitzten Borsten ist insbesondere Polyester (PBT) als Material geeignet, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch auch gewellte und/oder gedrillte und/oder wendelförmige und/oder gedrehte Borsten denkbar sowie insbesondere aus Kombinationen unterschiedlicher Borsten. Ferner sind Borsten mit einer glatten Oberfläche denkbar, ebenso wie Borsten mit texturierter Oberfläche.

Ferner werden die Borsten, insbesondere als Borstenbündel, vorzugsweise mittels zumindest eines Ankerstanzens, eines Anchor-Free-Tuftings (AFT), eines In-Mold-Tuftings (IMT)oder dergleichen im Bürstenkopf verankert, insbesondere an dem Borstenträger befestigt. Vorzugsweise weist der Borstenträger eine Mehrzahl von, insbesondere gebohrten und/oder bei einem Spritzguss geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Anwendungselements und/oder des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens.

Alternativ sind, wie erwähnt, auch ankerlose Verfahren denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist denkbar, dass Borstenbündel zunächst vereinzelt werden, Borstenbündel verschmolzen werden und/oder Borstenenden insbesondere anschließend zu deren Befestigung umspritzt werden. Hierbei können vorteilhaft Borstenbündel zusammengeführt werden. Möglich ist hierbei eine Herstellung mittels In-Mold-Tuftings (IMT), wobei vorteilhaft bei dem Umspritzen der Borstenenden ein Grundkörper, beispielsweise des Bürstenkopfs und/oder der Griffeinheit und/oder der Befestigungseinheit, geformt wird. Ebenso ist denkbar, dass, insbesondere im Rahmen einer Integrated Anchorless Production, Borsten zunächst mit einem oder mehreren Plättchen oder dergleichen umspritzt werden und diese Plättchen anschließend wiederum umspritzt werden, beispielsweise um den Bürstenkopf und/oder die Griffeinheit auszubilden.

Ferner ist denkbar, zunächst mittels Spritzgießens Borstenplättchen mit Durchgangslöchern zu fertigen, durch welche anschließend Borsten geführt werden. Vorzugsweise werden die Borsten anschließend auf einer Rückseite verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verschweißt und/oder verklebt werden, vorzugsweise mittels eines Ultraschallschweißens. Als bekanntes Herstellungsverfahren ist in diesem Zusammenhang Boucherie AFT (Anchor Free Tufting) zu nennen, das insbesondere ein Zusammenführen von Borstenbündeln ermöglicht.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf.

Vorzugsweise erfolgt anschließend ein Überspritzen, insbesondere mit zumindest einer Weichkomponente, der verschmolzenen Bereiche und/oder des Bürstenkopfs. Hierbei kommt beispielsweise ein Boucherie-AMR-Verfahren, welches insbesondere kein Zusammenführen von Borstenbündeln ermöglicht, oder ein AMR+-Verfahren, welches insbesondere ein Zusammenführen von Borsten ermöglicht, infrage.

Zudem ist denkbar, zunächst einen Bürstenkopf mit Sacklöchern, beispielsweise mittels Spritzgießens und/oder mittels eines Bohrens der Sacklöcher, zu fertigen. Borsten werden in diesem Fall insbesondere zu Bündeln zusammengelegt und an einem Ende verschmolzen und/oder anderweitig verbunden. Der Bürstenkopf wird anschließend, insbesondere auf eine Glastemperatur seines Materials, erwärmt. Sodann können vorteilhaft Borstenbündel in die Sacklöcher eingeführt und mittels eines Andrückens an dem Bürstenkopf verankert werden. Insbesondere verformen sich hierbei die erwärmten Sacklöcher, sodass die Borstenbündel in denselben verankert werden.

Alternativ oder zusätzlich zu gestanzten und/oder angeklebten und/oder angeschweißten Borsten sind auch angespritzte Borsten und/oder eingedrehte Borsten, wie insbesondere für Interdentalbürsten, denkbar. Die angespritzten Borsten können insbesondere während eines Mehrkomponentenspritzgießens gemeinsam mit der Anwendungseinheit, der Griffeinheit und/oder der Befestigungseinheit gefertigt sein, oder nachträglich an einen Grundkörper der Anwendungseinheit angespritzt sein. Für die angespritzten Borsten kann dafür eine Hartkomponente, eine Weichkomponente oder ein spezielles Material für gespritzte Borsten verwendet werden.

Ein weiteres mögliches Verfahren zur Beborstung des Bürstenkopfs stellt das Eindrehen dar, wobei eine zylindrische Bürste entsteht. Hierbei wird beispielsweise Borsten von einer Rolle zugeführt, wobei insbesondere mehrere Borsten stränge auf einer Rolle aufgewickelt sind. Für die Maschinenbeschickung sind jeweils mehrere Rollen vorgespannt, denn jede Borste in der Bürste entspricht einem Borstenstrang. Die Borsten werden in der Breite korrekt ausgebreitet, damit sie die Breite haben, in welcher sie in die Bürste eingeführt werden. Die Borsten werden so vorgezogen, dass sie anschließend für den nächsten Schritt freistehen, d.h. dass ein Draht darüber geführt werden kann. Anschließend wird ein Draht ab einer Rolle auf die Maschine zugeführt, d.h. abgewickelt und in den Prozess eingeführt. Der Draht wird auf eine Länge geschnitten, welche grösser ist als die abgewickelte Länge der eingedrehten Bürste, das endgültige Ablängen erfolgt nach dem Eindrehen. Der Draht wird zu einem U gebogen, damit die offene Seite anschließend über die Borsten geschoben werden kann, um die Borsten einzufädeln. Der Draht wird am Boden des U's gehalten. Darauffolgend wird das offene Drahtende geklemmt, damit die Borsten zwischen den Drahtstücken halten. Die Borsten werden auf eine Länge geschnitten, welche grösser ist als die Endlänge in der Bürste, damit die Bürste anschließend, wenn die Borsten eingedreht sind, korrekt geschnitten werden kann. Der Draht wird gedreht, sodass die Borsten zwischen dem Draht eingeklemmt und damit fixiert werden. Nachdem die Borsten im Draht fixiert sind, werden sie auf die korrekte Länge geschnitten und profiliert. Nachdem der Bürstenteil fertiggestellt ist, wird der überschüssige Draht abgeschnitten.

Vorzugsweise gehen Materialien gespritzter Borsten bei einem Spritzgussprozess, insbesondere einem Zwei- und/oder Mehrkomponentenspritzgießen, keinen Materialschluss mit anderen Weichkomponenten und/oder Hartkomponenten des Mundhygienemittels ein. Bevorzugt werden gespritzte Borsten vielmehr mittels eines Formschlusses, beispielsweise mittels zumindest eines Hinterschnitts und/oder zumindest eines Durchbruchs und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Es ist jedoch auch eine Verbindung mittels zumindest eines Materialschlusses denkbar.

Für sämtliche erwähnte mögliche Spritzgussprozesse ist grundsätzlich ein Ein-, Zwei- und/oder Mehrkomponentenspritzguss denkbar. Verwendete Materialien, insbesondere unterschiedlicher Weichkomponenten und/oder Hartkomponenten, können hierbei, wie erwähnt, stoffschlüssig und/oder formschlüssig verbunden werden und/oder sein. Auch eine Ausbildung von gelenkigen Verbindungen mittels geeigneter Spritzgussschritte ist denkbar. Es kommen grundsätzlich beispielsweise Heißkanalverfahren, Kaltkanalverfahren und/oder Co-Injektionsverfahren infrage.

Alternativ oder zusätzlich zu einem als Bürstenkopf ausgebildeten Reinigungselement kann die Aufsteckbürste auch zumindest einen Zungenreiniger und/oder zumindest ein Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein. Ferner sind verschiedene Ausgestaltungen für die Borsten des Bürstenkopfs denkbar.

Vorzugsweise können die Borsten von gespritzten Borsten gebildet sein, welche im Unterschied zu konventionellen, extrudierten Borsten mittels Spritzgusses hergestellt sind. Es sind verschiedene, einem Fachmann als sinnvoll erscheinende Materialien für gespritzte Borsten denkbar. Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien denkbar, beispielsweise thermoplastische Polyester-Elastomere (TPE-E), thermoplastische Polyamid-Elastometer (TPE-A) oder dergleichen. Materialien für gespritzt Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-Härte eines Materials gespritzter Borsten vorteilhaft höher als eine Shore-Härte übriger verwendeter Weichkomponenten, beispielsweise für Griffelemente, Massageelemente, weitere Reinigungselemente oder dergleichen. Während des Spritzgussprozesses, insbesondere des Zwei- oder Mehrkomponentenspritzgussprozesses, gehen Materialien für gespritzte Borsten in der Regel mit den anderen eingesetzten Weich- und/oder Hartmaterialien keinen Materialschluss ein. Folglich wird für allfällige Verbindungen mit anderen Hart- bzw. Weichmaterialien ein Formschluss vorgesehen, wie beispielsweise mittels eines Hinterschnitts und/oder in Form von Durchbrüchen und/oder in Form von teilweisen und/oder vollständigen Umspritzungen. Das zweite verspritzte Material für gespritzte Borsten schwindet bei der Abkühlung auf das erste verspritzte Hart- oder Weichmaterial und bildet dann insbesondere eine Schwundverbindung.

Ebenso können für die Hartkomponente, die Weichkomponente und/oder das Material für gespritzte Borsten Biokunststoffe herangezogen werden, welche insbesondere aus nachwachsenden Rohstoffen gewonnen sein können, biologisch abbaubar, insbesondere kompostierbar, sein können und/oder aus einem recycelten und/oder recycelbaren Material bestehen können. Vorzugsweise ist das Material insbesondere aus einem Kunststoff gebildet. Vorzugsweise ist das biologisch abbaubare, insbesondere kompostierbare, und/oder recycelte und/oder recycelbare Material von einem Biokunststoff, insbesondere aus einem Kunststoff auf Basis nachwachsender Rohstoffe und/oder aus einem biologisch abbaubaren Kunststoff, gebildet. Das Material kann daher insbesondere fossil-basiert und bioabbaubar sein, wie beispielsweise PVOH, PCL, PBAT, PET oder PBS, auf nachwachsenden Rohstoffen basieren und bioabbaubar sein, wie beispielsweise PLA, PHA, Cellophane oder Stärke-Blends, oder auf nachwachsenden Rohstoffen basieren und nicht bioabbaubar sein, wie beispielsweise Ca, Bio-PE, Bio-PP, Bio-PA, Bio-PET. Es sind verschiedene, einem Fachmann als sinnvoll erscheinende Biokunststoffe denkbar, wie beispielsweise stärkebasierte Biokunststoffe, cellulosebasierte Biokunststoffe, Polyhydroxy-Alkanoate, wie insbesondere Polyhydroxybuttersäure (PHB), Polymilchsäure (PLA), aliphatische und/oder aromatische Copolyester, oder weitere Biokunststoffe wie beispielsweise Lignin-basierte Biokunststoffe. Bevorzugt kann die Anwendungseinheit bzw. die Griffeinheit zu einem Großteil aus einem biologisch abbaubaren, insbesondere kompostierbaren, und/oder einem recycelten Material bestehen. Vorzugsweise besteht das Mundhygienemittel nur aus einer Komponente. Insbesondere weist das Mundhygienemittel eine Hartkomponente auf. Der materielle Volumenkörper der Anwendungseinheit bzw. Griffeinheit kann zumindest zu einem Großteil aus der Hartkomponente bestehen. Die Hartkomponente und/oder die Weichkomponente und/oder das Material für gespritzte Borsten besteht insbesondere aus einem Biokunststoff, welcher insbesondere aus nachwachsenden Rohstoffen gewonnen sein kann. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze / der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können.

Ferner besteht zudem die Möglichkeit der farblichen Kennzeichnung der Aufsteckbürstenvorrichtung durch eine farbige Schnittstellenaufnahmeeinheit. Insbesondere könnte dabei die Schnittstellenaufnahmeeinheit so verlängert werden, dass die Schnittstellenaufnahmeeinheit von außen noch sichtbar ist. Insbesondere könnte die Schnittstellenaufnahmeeinheit bis zu einer Mantelfläche reichen. Vorzugsweise könnte die Schnittstellenaufnahmeeinheit verschiedene Farben aufweisen, wobei die Anwendungseinheit unverändert bleibt. Hierdurch könnte insbesondere eine Unterscheidung zuhause im Bad erreicht werden. Alternativ könnte eine farbliche Kennzeichnung auch durch einen Ring erfolgen. Dies könnte insbesondere durch eine Gestaltung der Anwendungseinheit im Mehrkomponentenspritzguss mittels beispielsweise zwei Komponenten erreicht werden, wobei an der Anwendungseinheit im unteren Bereich ein farbiger Ring angespritzt sein könnte. Alternativ könnte die Anwendungseinheit mit einem separaten elastischen Ring ähnlich einem Dichtring versehen werden, wobei die Anwendungseinheit insbesondere eine Ausnehmung und/oder eine Nut im unteren Bereich aufweist, in welcher der Ring eingefügt wird. Der Ring kann beispielsweise zumindest teilweise aus einem Elastomer bestehen. Der Ring wird nach dem Spritzgussprozess montiert.

Alternativ oder zusätzlich könnte die Aufsteckbürstenvorrichtung neben der Verwendung für eine elektrische Zahnbürste auch für eine Handzahnbürste eingesetzt werden. Die Aufsteckbürstenvorrichtung kann insbesondere auch für eine Wechselkopf-Handzahnbürste verwendet werden. Die Schnittstelle kann dabei insbesondere sowohl eine Achse aufweisen, wie beispielsweise aus Metall, analog zu einer elektrischen Zahnbürste, oder die Schnittstelle kann einen angepassten Kunststoff-Zapfen aufweisen.

Ferner kann die Anwendungseinheit von einer Gestaltung der Anwendungseinheit im Mehrkomponentenspritzguss mittels beispielsweise zwei Komponenten gebildet sein. Beispielsweise können Weichelemente im Borstenfeld eingesetzt werden (z.B. als Reinigungselemente, Massageelemente etc.). Alternativ können weiche Partien auf der Oberfläche der Anwendungseinheit eingesetzt werden, welche zu einem Schutz vor Verletzungen bei der Anwendung, der Hilfe bei einer Montage und/oder Demontage der Aufsteckbürstenvorrichtung und/oder welche als Zungenreiniger dienen. Weiche Partien auf der Oberfläche der Anwendungseinheit, welche Verletzungen verhindern sollen, werden v.a. mindestens teilweise am umlaufenden Rand oder auf der Rückseite des Bürstenkopfes angebracht. Zudem könnte mittels einer Weichkomponente im Bereich der Abstützung des Innenteils eine Einstellbarkeit der Federfunktion realisiert werden und/oder Vibrationen gedämpft werden, wie insbesondere im Bereich der Schnittstelle. Des Weiteren kann die Schnittstellenaufnahmeeinheit von einer Gestaltung der Schnittstellenaufnahmeeinheit im Mehrkomponentenspritzguss mittels beispielsweise zwei Komponenten gebildet sein. Beispielsweise können Umspritzungen zur Verbesserung der Funktion, Umspritzungen des Klemmelements, um beispielsweise eine Rückstellkraft zu verbessern und/oder einzustellen, und/oder Füllungen von Ausnehmungen vorgesehen sein, welche die Rückstellkraft des Klemmelements verbessern und/oder einstellen.

Ferner geht die Erfindung aus von einem Aufsteckbürstensystem mit einer Aufsteckbürstenvorrichtung nach einem der vorhergehenden Ansprüche und mit einer weiteren von der Schnittstellenaufnahmeeinheit verschiedenen, separat ausgebildeten Schnittstellenaufnahmeeinheit, welche zu einer Aufnahme von zumindest einer weiteren, von der Schnittstelle verschiedenen Schnittstelle eines Zahnbürstenhandteils vorgesehen ist. Vorzugsweise weisen die Schnittstelle und die weitere Schnittstelle differierende Formen und/oder Dimensionierungen auf, wobei die Schnittstellenaufnahmeeinheiten jeweils zu einer verliersicheren Aufnahme einer der Schnittstellen geeignet sind. Durch die erfindungsgemäße Ausgestaltung des Systems kann die Anwendungseinheit der Aufsteckbürstenvorrichtung insbesondere für verschiedene Zahnbürstenhandteile genutzt werden. Es kann insbesondere eine universelle Nutzung der Aufsteckbürste erreicht werden.

Die weitere Schnittstellenaufnahmeeinheit kann insbesondere für eine weitere, als Achse ausgebildete Schnittstelle vorgesehen sein. Die Längendifferenz gängiger Achsen bzw. Schnittstellen beträgt insbesondere ca. 6 mm. Bei langen Schnittstellen könnte das Klemmelement der weiteren Schnittstellenaufnahmeeinheit insbesondere im vorderen Bereich der weiteren Schnittstellenaufnahmeeinheit angeordnet werden. Es könnte insbesondere ein freischwebendes Klemmelement realisiert werden, welches sich an der Anwendungseinheit abstützt und/oder vorspannt. Ferner könnte insbesondere ein Schnapper auf der Rückseite vorgesehen sein, welcher in einer Ausnehmung der weiteren Schnittstelle verrastet. Alternativ wäre denkbar, dass die weitere Schnittstellenaufnahmeeinheit lediglich zu einer Flächenpressung vorne vorgesehen ist. Ferner könnte auch hier insbesondere ein Schnapper auf der Rückseite vorgesehen sein, welcher in einer Ausnehmung der weiteren Schnittstelle verrastet.

Des Weiteren geht die Erfindung aus von einer elektrischen Zahnbürste mit einem elektrischen Zahnbürstenhandteil und mit der Aufsteckbürstenvorrichtung. Eine Schnittstelle des Zahnbürstenhandteils weist insbesondere eine an die Aufsteckbürstenvorrichtung angepasste Oberflächenbeschaffenheit und Oberflächenstruktur auf. Insbesondere weist die Schnittstelle eine Klemmfläche und eine Auflagefläche auf. Die Klemmfläche weist insbesondere eine Länge von 2 mm bis 5 mm, vorzugsweise von 3 mm bis 4 mm, auf. Ferner weist die Klemmfläche insbesondere eine Breite von 1,5 mm bis 3,5 mm, vorzugsweise von 2 mm bis 3 mm, auf. Ferner weist die Schnittstelle außerhalb eines Gehäuses des Zahnbürstenhandteils insbesondere eine freie Länge von 15 mm bis 35 mm, vorzugsweise von 20 mm bis 30 mm, auf. Die Aufsteckbürstenvorrichtung muss dabei insbesondere die über die Schnittstelle übertragene Leistung des Zahnbürstenhandteils umsetzen können. Insbesondere muss die Schnittstellenaufnahmeeinheit die Leistung der Schnittstelle aufnehmen und an die Anwendungseinheiten weitergeben können. Bei einer Überlastung, insbesondere bei einem Versagen des Drehmoments, muss insbesondere die Verbindung zwischen der Schnittstelle und der Schnittstellenaufnahmeeinheit und/oder die Verbindung zwischen der Schnittstellenaufnahmeeinheit und der Anwendungseinheit versagen bevor der Motor des Zahnbürstenhandteils Schaden nimmt.

Das Zahnbürstenhandteil beziehungsweise die darin untergebrachte Antriebseinheit weist nachfolgend beschriebene Leistungsdaten auf. Der Antrieb hat eine Geschwindigkeit von 200 Hz bis 400 Hz, vorzugsweise von 260 Hz bis 350 Hz. Die Geschwindigkeit entspricht 24'000 bis 48'000 Hin- und Herbewegungen, vorzugsweise 30'000 bis 42'000 Hin- und Herbewegungen (seitliche Auslenkungen). Die Auslenkung der Schnittstelle (z.B. der Metallachse) beträgt zwischen 3° und 14°, gemessen von maximaler Auslenkung zu maximaler Auslenkung. Das Zahnbürstenhandteil weist insbesondere ein Drehmoment von 15 mNm bis 35 mNm, vorzugsweise von 20 mNm bis 30 mNm auf.

Die Begriffe "axial" und "radial" sind in diesem Zusammenhang insbesondere auf eine Haupterstreckungsachse der Aufsteckbürste und/oder des elektrischen Zahnbürstenhandteils bezogen, sodass der Ausdruck "axial" insbesondere eine Richtung bezeichnet, die parallel oder koaxial zu einer der Haupterstreckungsachsen verläuft. Ferner bezeichnet der Ausdruck "radial" im Folgenden insbesondere eine Richtung, die senkrecht zu einer der Haupterstreckungsachsen verläuft. Vorzugsweise verläuft die Haupterstreckungsachse der Aufsteckbürste parallel zu der Haupterstreckungsachse des elektrischen Zahnbürstenhandteils. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt, und insbesondere einen geometrischen Mittelpunkt des Objekts schneidet.

Ferner sollen die Begriffe "Oberseite" oder "Vorderseite" der Zahnbürste in diesem Zusammenhang insbesondere als jene Seite der Zahnbürste verstanden werden, auf welcher der Daumen aufgelegt wird. Die Ober - oder Vorderseite ist normalerweise auch jene Seite, auf welche das Borstenfeld, insbesondere des Bürstenkopfes der Aufsteckbürste, gerichtet ist. Als "Unterseite" oder "Rückseite" der Zahnbürste soll insbesondere jene Seite verstanden werden, die dem Borstenfeld des Bürstenkopfs abgewandt ist. Des Weiteren sind die Begriffe "linke Seite" und "rechte Seite" jeweils auf eine Betrachtung der Vorderseite bezogen. Als "Unterseite des Kopfplättchens" wird jene Seite bezeichnet, welche in die Ausnehmung des Grundkörpers gelegt wird und in Richtung Unterseite der Zahnbürste zeigt. Entsprechend zeigt die "Oberseite des Kopfplättchens" in Richtung der Oberseite der Zahnbürste. Die Anwendungseinheit kann insbesondere "zusammengesetzt" sein, aus einem Grundkörper und einem Kopfplättchen, welches mit Borsten und/oder Reinigungselementen besetzt ist.

Die erfindungsgemäße Aufsteckbürste, das elektrische Zahnbürstenhandteil, die elektrische Zahnbürste, das System sowie das Verfahren sollen hierbei nicht auf die oben beschriebene Anwendung und Ausführungsform beschränkt sein. Insbesondere können die erfindungsgemäße Aufsteckbürste, das elektrische Zahnbürstenhandteil, die elektrische Zahnbürste, das System sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische 3D-Ansicht einer erfindungsgemäßen Aufsteckbürstenvorrichtung,
- Fig. 2: eine Draufsicht der erfindungsgemäßen Aufsteckbürstenvorrichtung von vorne,
- Fig. 3: eine Draufsicht der erfindungsgemäßen Aufsteckbürstenvorrichtung von der Seite,
- Fig. 4: eine Draufsicht der erfindungsgemäßen Aufsteckbürstenvorrichtung von hinten,
- Fig. 5: einen Längsschnitt der erfindungsgemäßen Aufsteckbürstenvorrichtung,
- Fig. 6: eine Draufsicht einer Anwendungseinheit der erfindungsgemäßen Aufsteckbürstenvorrichtung von vorne,
- Fig. 7: eine 3D-Ansicht der Anwendungseinheit der erfindungsgemäßen Aufsteckbürstenvorrichtung,
- Fig. 8: einen Längsschnitt der Anwendungseinheit der erfindungsgemäßen Aufsteckbürstenvorrichtung von der Seite,
- Fig. 9: einen Längsschnitt der Anwendungseinheit der erfindungsgemäßen Aufsteckbürstenvorrichtung von oben,
- Fig. 10: die Anwendungseinheit der erfindungsgemäßen Aufsteckbürstenvorrichtung in einer schematischen Schnittdarstellung entlang der Schnittlinie X-X,
- Fig. 11: die Anwendungseinheit der erfindungsgemäßen Aufsteckbürstenvorrichtung in einer schematischen Schnittdarstellung entlang der Schnittlinie XI-XI,
- Fig. 12: die Anwendungseinheit der erfindungsgemäßen Aufsteckbürstenvorrichtung in einer schematischen Schnittdarstellung entlang der Schnittlinie XII-XII,
- Fig. 13: die Anwendungseinheit der erfindungsgemäßen Aufsteckbürstenvorrichtung in einer schematischen Schnittdarstellung entlang der Schnittlinie XIII-XIII,
- Fig. 14: die Anwendungseinheit der erfindungsgemäßen Aufsteckbürstenvorrichtung in einer schematischen Schnittdarstellung entlang der Schnittlinie XIV-XIV,
- Fig. 15: eine 3D-Ansicht einer Schnittstellenaufnahmeeinheit der Aufsteckbürstenvorrichtung von einer Aufsteckseite her,
- Fig. 16: eine 3D-Ansicht der Schnittstellenaufnahmeeinheit der Aufsteckbürstenvorrichtung von einem freien Ende her,
- Fig. 17: eine Draufsicht der Schnittstellenaufnahmeeinheit der Aufsteckbürstenvorrichtung von hinten,
- Fig. 18: eine Draufsicht der Schnittstellenaufnahmeeinheit der Aufsteckbürstenvorrichtung von der Seite,
- Fig. 19: eine Draufsicht der Schnittstellenaufnahmeeinheit der Aufsteckbürstenvorrichtung von vorne,
- Fig. 20: eine Draufsicht der Schnittstellenaufnahmeeinheit der Aufsteckbürstenvorrichtung entlang der Längsachse vom freien Ende her,
- Fig. 21: eine Draufsicht der Schnittstellenaufnahmeeinheit der Aufsteckbürstenvorrichtung entlang der Längsachse von einer Aufsteck-Seite her,
- Fig. 22: einen Längsschnitt durch die Schnittstellenaufnahmeeinheit der Aufsteckbürstenvorrichtung von der Seite,
- Fig. 23: einen Längsschnitt durch die Schnittstellenaufnahmeeinheit der Aufsteckbürstenvorrichtung von hinten,
- Fig. 24: die Schnittstellenaufnahmeeinheit der erfindungsgemäßen Aufsteckbürstenvorrichtung in einer schematischen Schnittdarstellung entlang der Schnittlinie XXIV-XXIV,
- Fig. 25: die Schnittstellenaufnahmeeinheit der erfindungsgemäßen Aufsteckbürstenvorrichtung in einer schematischen Schnittdarstellung entlang der Schnittlinie XXV-XXV,
- Fig. 26: die Schnittstellenaufnahmeeinheit der erfindungsgemäßen Aufsteckbürstenvorrichtung in einer schematischen Schnittdarstellung entlang der Schnittlinie XXVI-XXVI,
- Fig. 27: die Schnittstellenaufnahmeeinheit der erfindungsgemäßen Aufsteckbürstenvorrichtung in einer schematischen Schnittdarstellung entlang der Schnittlinie XXVII-XXVII,
- Fig. 28: die Schnittstellenaufnahmeeinheit der erfindungsgemäßen Aufsteckbürstenvorrichtung in einer schematischen Schnittdarstellung entlang der Schnittlinie XXVIII-XXVIII,
- Fig. 29: einen Längsschnitt durch die Aufsteckbürstenvorrichtung mit einer aufgenommenen Schnittstelle von der Seite und
- Fig. 30: einen Längsschnitt durch die Aufsteckbürstenvorrichtung mit der aufgenommenen Schnittstelle von oben.

### Beschreibung des Ausführungsbeispiels

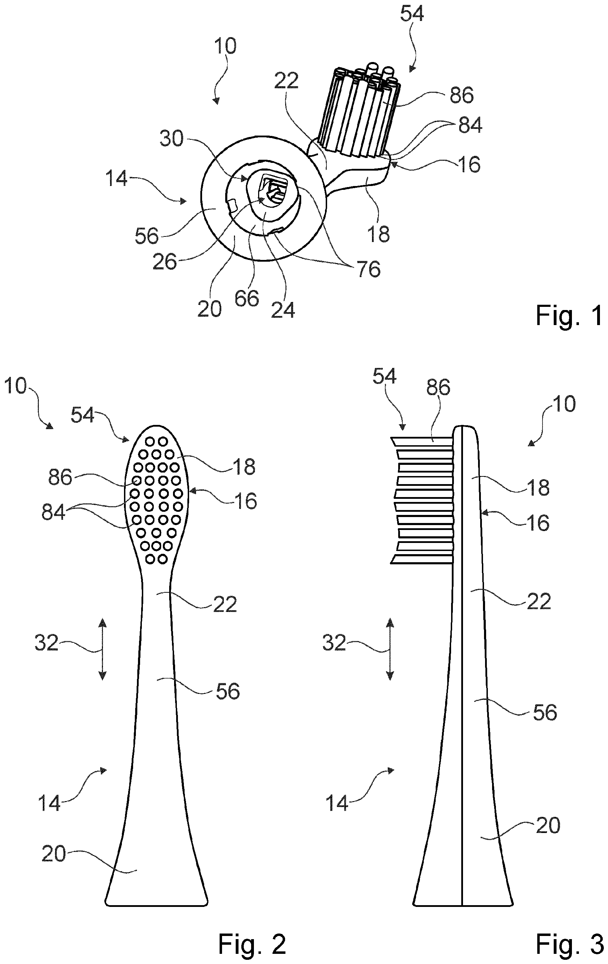

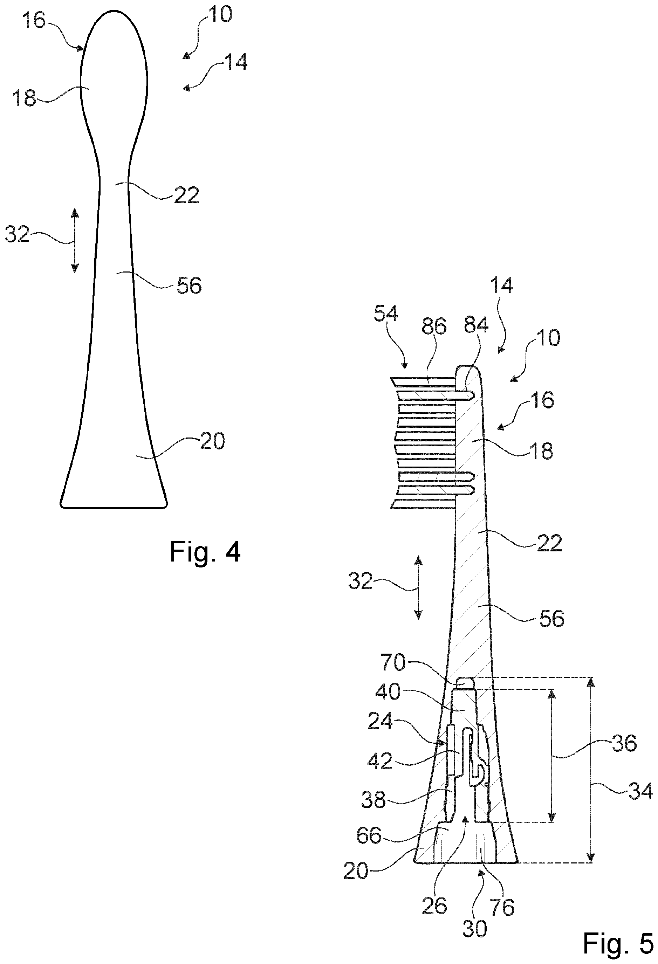

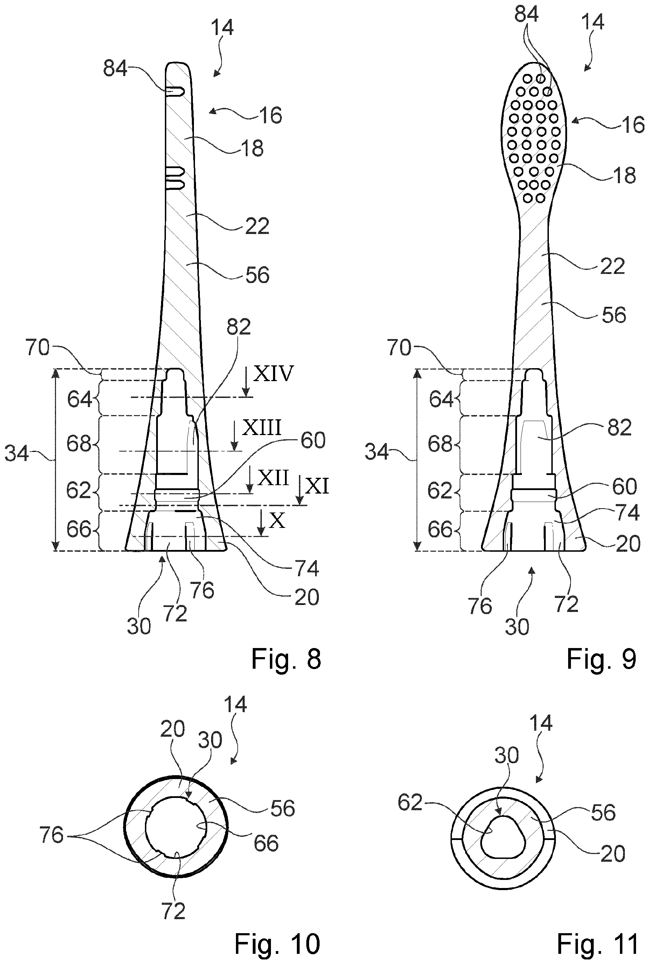

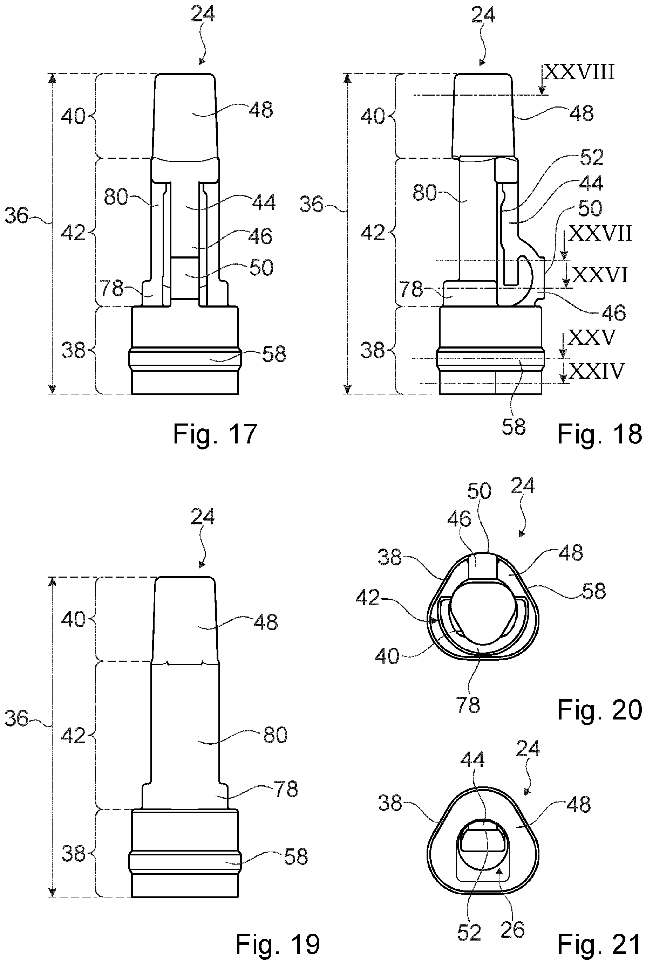

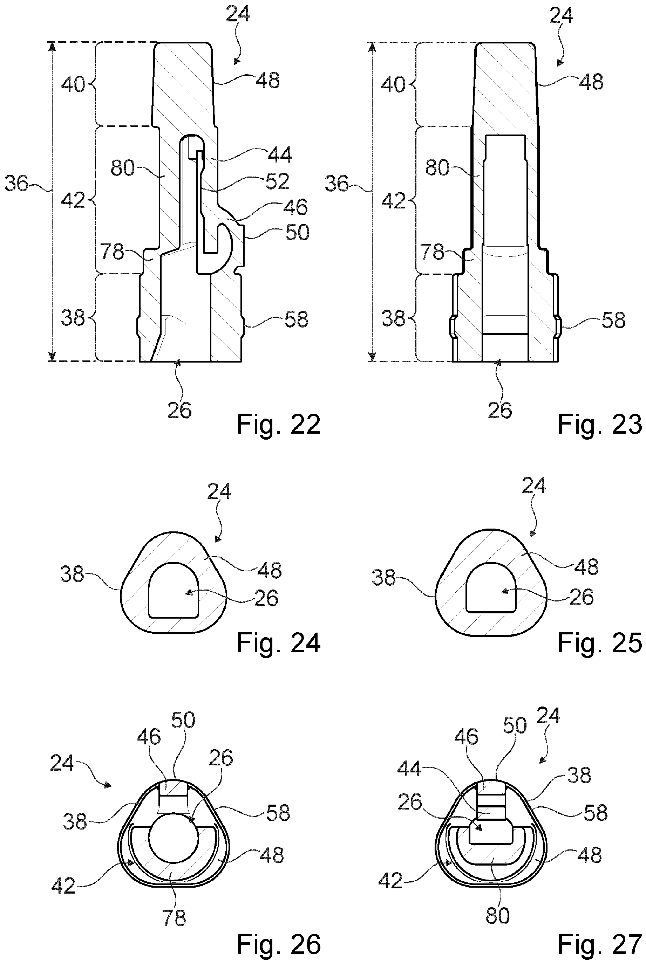

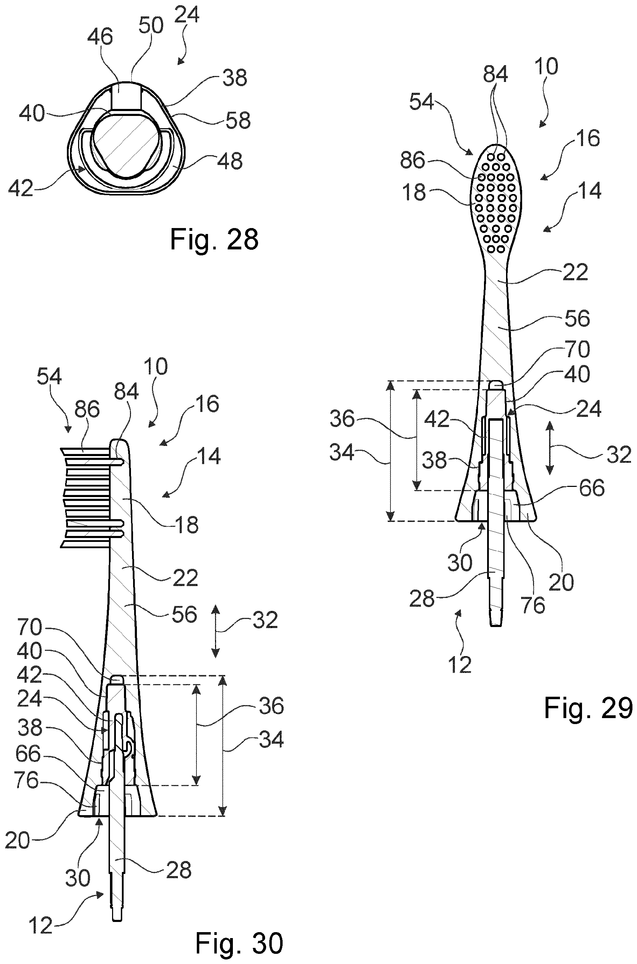

Die Figuren 1 bis 30 zeigen eine Aufsteckbürstenvorrichtung 10. Die Aufsteckbürstenvorrichtung 10 ist für ein Zahnbürstenhandteil 12 vorgesehen. Die Aufsteckbürstenvorrichtung 10 ist für ein elektrisches Zahnbürstenhandteil 12 vorgesehen. Die Aufsteckbürstenvorrichtung 10 ist von einer Wechselbürste gebildet. Grundsätzlich ist die Anwendung der Aufsteckbürstenvorrichtung 10 und/oder einer Schnittstellenaufnahmeeinheit 24 bzw. Schnittstelle 28 für elektrische Zahnbürsten mit schwenkender Bewegung oder mit vibrierender Bewegung ausgelegt. Die Aufsteckbürstenvorrichtung 10 und/oder die Schnittstellenaufnahmeeinheit 24 kann jedoch auch für andere Produkte eingesetzt werden, wie beispielsweise manuelle Zahnbürsten, wie insbesondere Mehrwegzahnbürsten, wie z.B. Wechselkopfzahnbürsten, alternative elektrische Zahnbürsten, wie insbesondere mit translatorischen und/oder drehenden Bewegungen, mit Aufsteckteilen mit Interdentalreinigern, wie insbesondere Interdentalbürsten mit eingedrehten Borsten und/oder Zungenreiniger.

Im Folgenden wird auf die Figuren 1 bis 30 Bezug genommen, welche unterschiedliche Ansichten der Aufsteckbürstenvorrichtung 10 zeigen. Aufgrund der unterschiedlichen Ansichten sind einige Elemente nicht in sämtlichen Figuren dargestellt und entsprechend nicht in sämtlichen Figuren mit Bezugszeichen versehen.

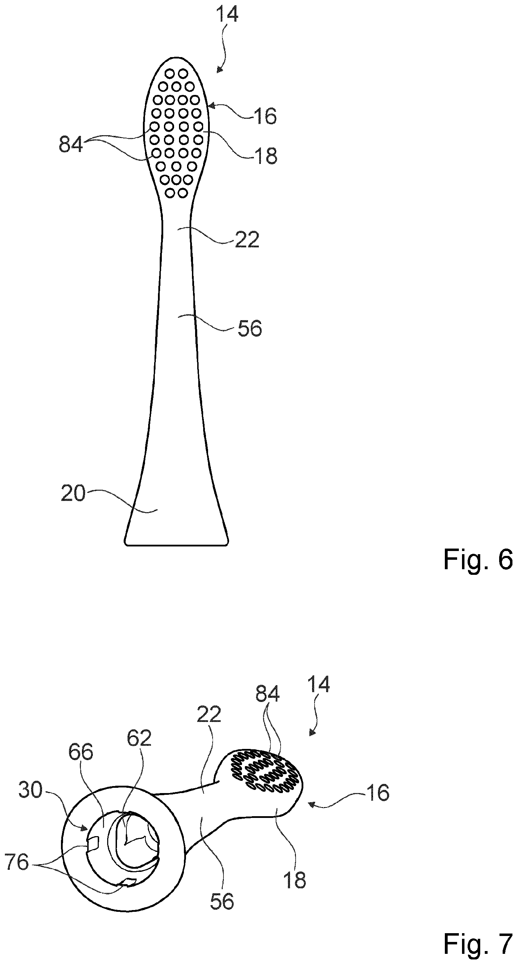

Die Aufsteckbürstenvorrichtung 10 weist eine Anwendungseinheit 14 auf. Die Anwendungseinheit 14 ist in den Figuren 6 bis 14 separat dargestellt. Die Anwendungseinheit 14 weist einen Kopfabschnitt 16 auf. Der Kopfabschnitt 16 umfasst einen Bürstenkopf 18. Ferner weist die Anwendungseinheit 14 einen Aufsteckabschnitt 20 auf. Des Weiteren weist die Anwendungseinheit 14 einen zwischen dem Kopfabschnitt 16 und dem Aufsteckabschnitt 20 angeordneten Halsabschnitt 22 auf. Der Kopfabschnitt 16, der Aufsteckabschnitt 20 und der Halsabschnitt 22 sind jeweils räumliche Abschnitte der Anwendungseinheit 14 der Aufsteckbürstenvorrichtung 10. Der Kopfabschnitt 16, der Aufsteckabschnitt 20 und der Halsabschnitt 22 sind jeweils axiale Teilabschnitte der Anwendungseinheit 14 der Aufsteckbürstenvorrichtung 10. Ferner besteht die Anwendungseinheit 14 der Aufsteckbürstenvorrichtung 10 vorteilhaft aus genau drei Abschnitten, und zwar dem Kopfabschnitt 16, dem Halsabschnitt 22 und dem Aufsteckabschnitt 20. Die Abschnitte grenzen vorteilhaft direkt aneinander an. Der Kopfabschnitt 16, der Aufsteckabschnitt 20 und der Halsabschnitt 22 erstrecken sich gemeinsam in axialer Richtung über die gesamte Aufsteckbürstenvorrichtung 10.

Eine generelle Form der Anwendungseinheit 14 der Aufsteckbürstenvorrichtung 10 bildet von einer Vorderseite aus betrachtet einen Verlauf von einer größeren Breite im Aufsteckabschnitt 20 zu einer Verengung im Halsabschnitt 22 zu einer größeren Breite im Kopfabschnitt 16. Der Bürstenkopf 18 der Aufsteckbürstenvorrichtung 10 weist eine schmale, lange Grundform auf. Der Bürstenkopf 18 der Aufsteckbürstenvorrichtung 10 ist von einer Vorderseite aus betrachtet im Wesentlichen elliptisch geformt. Von der Seite weist der Bürstenkopf 18 eine leicht abnehmende Dicke auf. Es wäre jedoch auch denkbar, dass der Bürstenkopf 18 von der Seite einen Verlauf, wie beispielsweise eine Wellenform oder eine konstante Dicke aufweist. Ferner können zusätzliche funktionale Elemente wie beispielsweise Zungenreiniger diese Dimension des Bürstenkopfs 18 beeinflussen. Der Bürstenkopf 18 hat frei von Borsten eine Höhe von 3 mm bis 7 mm, vorzugsweise von 3,5 mm bis 5,5 mm. Der Bürstenkopf 18 weist ferner eine Länge von 20 mm bis 35 mm, vorzugsweise von 22 mm bis 28 mm, auf. Der Bürstenkopf 18 ist frei von scharfen Kanten. Die Anwendungseinheit 14 ist ferner in dem Halsabschnitt 22 und dem Aufsteckabschnitt 20 im Wesentlichen rotationssymmetrisch geformt, wobei in Richtung des Kopfabschnitts 16 ein fließender Übergang stattfindet und die Rotationssymmetrie verloren geht. Der Übergang zwischen dem Halsabschnitt 22 und dem Kopfabschnitt 16 erfolgt vorzugsweise über eine Taillierung, welche einen minimalen Durchmesser der Anwendungseinheit 14 der Aufsteckbürstenvorrichtung 10 ausbildet. Alternativ wäre jedoch auch ein Verlauf frei von einer Taillierung denkbar. Die Anwendungseinheit 14 der Aufsteckbürstenvorrichtung 10 ist dabei in dem Halsabschnitt 22 kegelförmig, wobei ein Durchmesser zu dem Aufsteckabschnitt 20 zunimmt. In dem Aufsteckabschnitt 20 wird eine Kegelform des Halsabschnitts 22 fortgesetzt, wobei die Anwendungseinheit 14 in dem Aufsteckabschnitt 20 zu einem freien Ende hin zudem konkav kegelförmig ausgebildet ist. An dem freien Ende des Aufsteckabschnitts 20 ist eine Standfläche angeordnet. Die Standfläche ist an einem freien, dem Bürstenkopf 18 abgewandten Ende des Aufsteckabschnitts 20 ausgebildet. Ein Grundkörper 56 der Anwendungseinheit 14 bildet die Standfläche aus. Die Standfläche ist von einer ringförmigen Fläche des Grundkörpers 56 gebildet, welche um eine Längsachse angeordnet ist. Die Standfläche ermöglicht es, die Aufsteckbürstenvorrichtung 10 auf eine plane Fläche zu stellen, sodass sich eine Haupterstreckungsrichtung 32 der Aufsteckbürstenvorrichtung 10 im Wesentlichen senkrecht zu der Fläche erstreckt. Ob die Standfläche ihre Funktion effektiv ausführen kann, hängt von verschiedenen Faktoren ab, die den Schwerpunkt beeinflussen, wie beispielsweise eine Gestaltung eines Borstenfelds 54, insbesondere der Borstenlänge, und/oder eine Masseverteilung im Körper.

Die Aufsteckbürstenvorrichtung 10 weist eine axiale Länge von 60 mm bis 100 mm, vorzugsweise von 75 mm bis 90 mm, auf. Ferner weist die Aufsteckbürstenvorrichtung 10 in dem Kopfabschnitt 16 eine Breite von 7 mm bis 15 mm, vorzugsweise von 9 mm bis 13 mm, auf. In Längsrichtung weist die Anwendungseinheit 14 einen Verlauf mit kontinuierlichem Übergang zu dem Halsabschnitt 22 und auch zu dem Kopfabschnitt 16 auf. Ein Durchmesser, insbesondere eine maximale Höhe und eine maximale Breite, der Anwendungseinheit 14 beträgt von 13 mm bis 21 mm, vorzugsweise von 16 mm bis 19 mm. Der Halsabschnitt 22 der Anwendungseinheit 14 bildet eine minimale Breite aus, welche von 4 mm bis 7 mm, vorzugsweise von 4,5 mm bis 5,5 mm, beträgt. Eine minimale Höhe der Anwendungseinheit 14 nicht klar definierbar, da ein Verlauf vom hinteren Ende her besteht und sich eine minimalste Höhe insbesondere am vorderen Ende des Kopfabschnitts 16 befindet. Eine schmalste Stelle des Halsabschnitts 22 ist im Bereich des Übergangs vom Halsabschnitt 22 zu dem Kopfabschnitt 16.

Ferner weist die Anwendungseinheit 14 den tragenden Grundkörper 56 auf. Der tragende Grundkörper 56 weist eine Hartkomponente auf. Der tragende Grundkörper 56 besteht aus einer Hartkomponente. Grundsätzlich wäre jedoch auch denkbar, dass der Grundkörper 56 aus mehreren verschiedenen Hartkomponenten besteht. Insbesondere könnten dadurch verschiedene Eigenschaften an verschiedenen Körperpartien des Grundkörpers 56 mit den verschiedenen Komponenten erreicht werden. Alternativ können Kunststoffe verschiedener Dichte eingesetzt werden. Für vibrierende Zahnbürsten wie Schall, Ultraschall, etc. kann die Gewichtsverteilung am Produkt für die Ausbreitung der Schwingungen extrem relevant sein. Beispielsweise könnten Komponenten des Grundkörpers 56 der Anwendungseinheit 14 oder auch andere Komponenten mit hoher Dichte ausgeführt werden, um das Gewicht zu erhöhen, um Schwingung zu optimieren.

Ferner kann durch schwere Bereiche eine gewisse Gewichtsverteilung erreicht werden, um eine optimale Schwingung zu erhalten. Beispielsweise kann mit einem zweiten schweren Hartmaterial, insbesondere 2K Spritzguss, vorzugsweise sogar innen, nicht sichtbar ein Ring eingespritzt werden. Ferner sind auch drei Hartkomponenten und/oder eine Kombination mit Weichkomponenten denkbar. Der tragende Grundkörper 56 bildet eine tragende Struktur der Anwendungseinheit 14 aus. Der tragende Grundkörper 56 erstreckt sich von dem Aufsteckabschnitt 20 über den Halsabschnitt 22 hin zu dem Kopfabschnitt 16. Der Grundkörper 56 ist einstückig ausgebildet. Grundsätzlich wäre jedoch auch denkbar, dass der Grundkörper 56 zumindest teilweise unterbrochen ist und die Anwendungseinheit 14 beispielsweise ein bewegliches Gelenk aufweist, über welches der Bürstenkopf 18 beweglich gelagert ist.

Der Bürstenkopf 18 weist das definierte Borstenfeld 54 auf. Der Bürstenkopf 18 weist ein Lochfeld 84 auf. Ein dargestelltes Lochfeld 84 des Bürstenkopfs 18 ist, wie dargestellt, ausgelegt für den Einsatz des konventionellen Ankerstanzverfahrens zur Bildung von Borstenbündeln 86. Das Lochfeld 84 weist drei Bereiche auf. Das Lochfeld 84 weist einen vorderen Bereich auf, der gegen das freie Ende gerichtet ist. Der vordere Bereich weist zwei Querreihen auf. Eine vorderste Reihe weist zwei Löcher auf, während eine zweite Reihe drei Löcher aufweist. Das Lochfeld 84 weist eine steigende Anzahl von Löchern gegen einen mittleren Bereich des Lochfelds 84 auf. Der mittlere Bereich des Lochfelds 84 ist im Zentrum des Lochfelds 84 angeordnet und weist fünf Querreihen auf. Die Querreihen weisen jeweils vier Löcher auf. Des Weiteren weist das Lochfeld 84 einen hinteren Bereich auf, der gegen den Bürstenhals gerichtet ist. Der hintere Bereich weist drei Querreihen auf. Eine erste an den mittleren Bereich angrenzende Querreihe weist drei Löcher auf. Anschließend folgt eine weitere Reihe mit drei Löchern. Am freien Ende ist nochmals eine Querreihe mit zwei Löchern vorgesehen. Die Lochanzahl sinkt gegen den Halsabschnitt 22. Damit die verschiedenen Bereiche geschaffen werden können, sind die Löcher in Querreihen angeordnet, damit ein Verdrängen und somit ein Schneiden/Profilieren der Borsten optimal möglich ist.

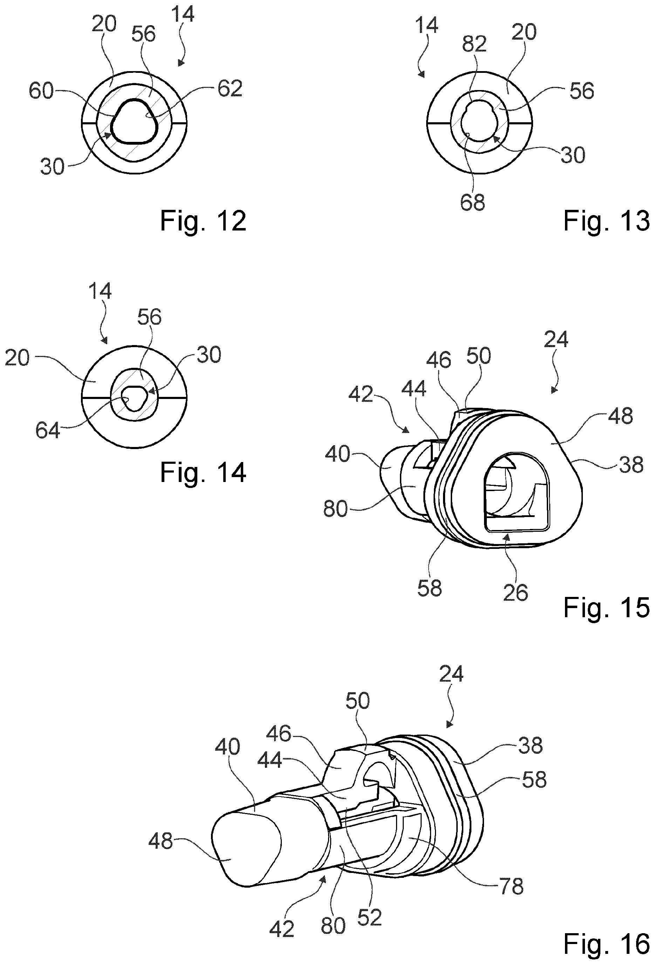

Die Aufsteckbürstenvorrichtung 10 weist ferner die Schnittstellenaufnahmeeinheit 24 auf, welche eine Schnittstellenaufnahme 26 zu einer Aufnahme von der Schnittstelle 28 eines Zahnbürstenhandteils 12 aufweist. Die Schnittstellenaufnahmeeinheit 24 ist in den Figuren 15 bis 28 separat dargestellt. Die Schnittstellenaufnahmeeinheit 24 ist separat ausgebildet. Der Aufsteckabschnitt 20 der Anwendungseinheit 14 weist einen Aufnahmebereich 30 zu einer verliersicheren, zumindest im Wesentlichen vollständigen Aufnahme der Schnittstellenaufnahmeeinheit 24 auf. Der Aufnahmebereich 30 ist zu einer vollständigen Aufnahme der Schnittstellenaufnahmeeinheit 24 vorgesehen. Eine Erstreckung 34 des Aufnahmebereichs 30 des Aufsteckabschnitts 20 entlang der Haupterstreckungsrichtung 32 der Aufsteckbürstenvorrichtung 10 ist größer als eine Erstreckung 36 der Schnittstellenaufnahmeeinheit 24 entlang der Haupterstreckungsrichtung 32. Ein Erstreckungsbereich der Schnittstellenaufnahmeeinheit 24 liegt entlang der Haupterstreckungsrichtung 32 vollständig innerhalb eines Erstreckungsbereichs des Aufnahmebereichs 30 des Aufsteckabschnitts 20 entlang der Haupterstreckungsrichtung 32.

Die Schnittstellenaufnahmeeinheit 24 ist einteilig ausgebildet. Die Schnittstellenaufnahmeeinheit 24 besteht aus einem von der Anwendungseinheit 14 verschiedenen Material. Das Material der Schnittstellenaufnahmeeinheit 24 weist gegenüber einem Material des Grundkörpers 56 der Anwendungseinheit 14 eine höhere, Härte auf. Die Schnittstellenaufnahmeeinheit 24 und der Grundkörper 56 der Anwendungseinheit 14 bestehen aus einer Hartkomponente. Die Schnittstellenaufnahmeeinheit 24 besteht aus einem Kunststoff. Die Schnittstellenaufnahmeeinheit 24 besteht aus POM. Die Schnittstellenaufnahmeeinheit 24 weist ein e-Modul von 2300 MPa auf. Die Schnittstellenaufnahmeeinheit 24 wird in einem Spritzgussverfahren hergestellt. Die Anwendungseinheit 14 besteht insbesondere zumindest zu einem Großteil, insbesondere vollständig, aus einer Hartkomponente. Die Anwendungseinheit 14 besteht aus Polypropylen. Der Kunststoff der Anwendungseinheit 14 weist ein e-Modul von 1400 MPa auf. Die Anwendungseinheit 14 wird in einem Spritzgussverfahren hergestellt.

Ferner weist die Schnittstellenaufnahmeeinheit 24 einen ersten Fixierbereich 38 auf, welcher zu einem direkten Kontakt mit dem Aufnahmebereich 30 des Aufsteckabschnitts 20 vorgesehen ist und einen zumindest annähernd dreieckigen Querschnitt aufweist. Der erste Fixierbereich 38 ist zu einer direkten formschlüssigen Verbindung mit dem Aufsteckabschnitt 20 der Anwendungseinheit 14 vorgesehen. Der erste Fixierbereich 38 ist dazu vorgesehen, in dem Aufnahmebereich 30 des Aufsteckabschnitts 20 mit dem Aufsteckabschnitt 20 der Anwendungseinheit 14 zu verrasten. Der erste Fixierbereich 38 ist dazu vorgesehen, in dem Aufnahmebereich 30 des Aufsteckabschnitts 20 mit dem Aufsteckabschnitt 20 der Anwendungseinheit 14 im zweiten Teilaufnahmebereich 62 zu verrasten. Der erste Fixierbereich 38 bildet eine erste Zone der Schnittstellenaufnahmeeinheit 24. Der erste Fixierbereich 38 bildet eine Haltezone der Schnittstellenaufnahmeeinheit 24. Die Gesamtlänge des ersten Fixierbereichs 38 beträgt von 4 mm bis 8 mm, vorzugsweise von 5 mm bis 7 mm. Eine Außenseite des ersten Fixierbereichs 38 weist einen dreieckigen Querschnitt mit gerundeten Ecken auf. Ferner weist der erste Fixierbereich 38 auf der Außenfläche einen vorstehenden Ring 58 auf. Der Ring 58 ist gegenüber der Grundform des ersten Fixierbereichs 38 radial vorstehend und umlaufend ausgebildet. Der Ring 58 dient insbesondere zu einer Verbindung zwischen der Schnittstellenaufnahmeeinheit 24 und dem Aufsteckabschnitt 20. Der Ring 58 weist, in einer Ebene parallel zu einer Haupterstreckungsrichtung der Schnittstellenaufnahmeeinheit 24 betrachtet, einen annähernd rechteckigen Querschnitt auf. Es sind jedoch auch weitere Querschnittsformen denkbar, wie beispielsweise trapezförmig oder halbkreisförmig. Die Form des Rings 58 ist auf eine Ausnehmung 60 in dem Aufnahmebereich 30 des Aufsteckabschnitts 20 abgestimmt. Die Form des Rings 58 ist auf eine Ausnehmung 60 im zweiten Teilaufnahmebereich 62 in dem Aufnahmebereich 30 des Aufsteckabschnitts 20 abgestimmt. Der Ring 58 des ersten Fixierbereichs 38 der Schnittstellenaufnahmeeinheit 24 ist dazu vorgesehen, mit dem Aufsteckabschnitt 20 der Anwendungseinheit 14 zu verrasten. Der Ring 58 weist eine Länge, insbesondere eine Erstreckung parallel zu der Haupterstreckungsrichtung der Schnittstellenaufnahmeeinheit 24, von 0,5 mm bis 2 mm, vorzugsweise von 0,9 mm bis 1,5 mm, auf. Ferner weist der Ring 58 eine Höhe, insbesondere eine Erhöhung gegenüber der Grundform des ersten Fixierbereichs 38, von 0,1 mm bis 0,7 mm, vorzugsweise von 0,2 mm bis 0,5 mm, auf. Eine Mitte der Erhebung des Rings 58 weist zu einem hinteren freien Ende der Schnittstellenaufnahmeeinheit 24 einen Abstand von 1 mm bis 4,5 mm, vorzugsweise von 2,5 mm bis 3,5 mm, auf. Die Mitte der Erhebung des Rings 58 befindet sich, relativ zu einer Länge des ersten Fixierbereichs 38, nach 25 % bis 65 %, vorzugsweise nach 40 % bis 60 % der Gesamtlänge des ersten Fixierbereichs 38 gemessen von der Unterkante das heißt der Kante am freien Ende des ersten Fixierbereichs 38. Der erste Fixierbereich 38 der Schnittstellenaufnahmeeinheit 24 weist ferner eine Öffnung für das Einbringen der Schnittstelle 28 des Zahnbürstenhandteils 12 auf. Die Öffnung ist von einer Öffnung der Schnittstellenaufnahme 26 gebildet. Der erste Fixierbereich 38 weist eine sich durch den gesamten ersten Fixierbereich 38 erstreckende Ausnehmung auf, welche einen Teil der Schnittstellenaufnahme 26 bildet. Die Ausnehmung weist einen halbseitig rechteckigen und halbseitig halbkreisförmigen Querschnitt auf. Die Ausnehmung bildet einen ersten Abschnitt der Schnittstellenaufnahme 26 aus. Die Schnittstellenaufnahme 26 ist ferner zu der Öffnung hin geweitet. Die rechteckige Halbseite der Ausnehmung vergrößert sich zu der Öffnung hin kontinuierlich. Der erste Fixierbereich 38 dient zu einer Einschubmöglichkeit und einer Zentrierung der Schnittstellenaufnahmeeinheit 24.

Ferner weist der Aufnahmebereich 30 des Aufsteckabschnitts 20 einen zu dem ersten Fixierbereich 38 korrespondierenden zweiten Teilaufnahmebereich 62 auf. Der zweite Teilaufnahmebereich 62 ist von einem ersten Orientierungsbereich gebildet. Der zweite Teilaufnahmebereich 62 weist eine zylindrische Form mit einem dreieckigen Querschnitt mit abgerundeten Ecken auf. Der zweite Teilaufnahmebereich 62 dient zu einer ersten Ausrichtung der Schnittstellenaufnahmeeinheit 24, insbesondere bei einer Montage. Des Weiteren bildet der zweite Teilaufnahmebereich 62 einen ersten Verbindungsbereich. Der zweite Teilaufnahmebereich 62 weist die umlaufende Ausnehmung 60 auf, welche korrespondierend zu dem Ring 58 des ersten Fixierbereichs 38 ausgebildet ist. Der vorstehende Ring 58 des ersten Fixierbereichs 38 ist dazu vorgesehen, in die Ausnehmung 60 des zweiten Teilaufnahmebereichs 62 einzugreifen. Der zweite Teilaufnahmebereich 62 weist als Grundform insbesondere einen geraden Zylinder auf, in welchen die Ausnehmung 60 eingebracht ist. Die zylindrische Grundform weist einen dreieckigen Querschnitt mit gerundeten Ecken auf. Die zylindrische Grundform kann eine minimale Konizität aufweisen, damit die Formung der Ausnehmung bzw. die Entformung möglich ist. Der zweite Teilaufnahmebereich 62 weist eine Länge von 4 mm bis 8 mm, vorzugsweise von 5 mm bis 7 mm, auf. Die zylindrische Grundform des zweiten Teilaufnahmebereichs 62 weist eine Breite, insbesondere senkrecht zu den Borsten gemessen, von 4 mm bis 8 mm, vorzugsweise von 5 mm bis 7 mm, auf. Des Weiteren weist die zylindrische Grundform des zweiten Teilaufnahmebereichs 62 eine Höhe, insbesondere in senkrecht zur Haupterstreckungsrichtung gemessen, von 5 mm bis 9 mm, vorzugsweise von 6 mm bis 8 mm, auf. Die eingelassene umlaufenden Ausnehmung 60 weist eine Breite von 0,8 mm bis 2 mm, vorzugsweise von 1 mm bis 1,5 mm, auf. Ferner weist die eingelassene umlaufende Ausnehmung 60 eine Tiefe von 0,1 mm bis 0,7 mm, vorzugsweise von 0,2 mm bis 0,5 mm, auf. Die eingelassene umlaufende Ausnehmung 60 ist korrespondierend zu dem Ring 58 des ersten Fixierbereichs 38 ausgebildet. Die eingelassene umlaufende Ausnehmung 60 weist, in einer Ebene parallel zu der Haupterstreckungsrichtung 32 betrachtet, insbesondere eine rechteckig Querschnittsform auf. Eine Mitte der eingelassenen umlaufenden Ausnehmung 60 befindet sich relativ zu einer Länge des zweiten Teilaufnahmebereichs 62 nach 25 % bis 65 %, vorzugsweise nach 40 % bis 60 %, der Gesamtlänge des zweiten Teilaufnahmebereichs 62 gemessen von der Unterkante des zweiten Teilaufnahmebereichs 62. Die Ausnehmung 60 des zweiten Teilaufnahmebereichs 62 ist umlaufend ausgebildet. Es wäre jedoch auch denkbar, dass die Ausnehmung 60 und/oder der Ring 58 des ersten Fixierbereichs 38 unterbrochen ist.

Ferner weist die Schnittstellenaufnahmeeinheit 24 einen von dem ersten Fixierbereich 38 beabstandeten zweiten Fixierbereich 40 auf, welcher zu einem direkten Kontakt mit dem Aufnahmebereich 30 des Aufsteckabschnitts 20 vorgesehen ist und einen zumindest annähernd dreieckigen Querschnitt aufweist. Der Querschnitt des zweiten Fixierbereichs 40 ist gegenüber dem Querschnitt des ersten Fixierbereichs 38 verdreht. Der Querschnitt des zweiten Fixierbereichs 40 ist gegenüber dem Querschnitt des ersten Fixierbereichs 38 um 180° bzw. um 60° verdreht. Der zweite Fixierbereich 40 ist anders als der erste Fixierbereich 38 orientiert, was eine gewisse Verdrehsicherung bringt. Der zweite Fixierbereich 40 bildet eine dritte Zone der Schnittstellenaufnahmeeinheit 24 aus. Der zweite Fixierbereich 40 bildet eine Zentrierzone aus. Der zweite Fixierbereich 40 dient zu einer Zentrierung der Schnittstellenaufnahmeeinheit 24 in dem Aufnahmebereich 30 des Aufsteckabschnitts 20. Der zweite Fixierbereich 40 weist eine Gesamtlänge von 3 mm bis 8 mm, vorzugsweise von 5 mm bis 7 mm, auf. Eine Außenseite des zweiten Fixierbereichs 40 weist eine zylindrische Form mit einem dreieckigen Querschnitt mit abgerundeten Ecken auf. Der zweite Fixierbereich 40 ist frei von einer inneren Ausnehmung. Der zweite Fixierbereich 40 ist frei von der Schnittstellenaufnahme 26. Ein Ende der Schnittstelle 28 des Zahnbürstenhandteils 12 erstreckt sich in einem aufgenommenen Zustand bis zu einem hinteren Ende am Ende eines Federabschnitts 42 der Schnittstellenaufnahmeeinheit 24. Die Schnittstelle 28 greift nicht in den zweiten Fixierbereich 40 ein. Der Federabschnitt 42 ist zwischen dem ersten Fixierbereich 38 und dem zweiten Fixierbereich 40 angeordnet. Der Federabschnitt 42 verbindet den ersten Fixierbereich 38 und den zweiten Fixierbereich 40. insgesamt weist die Schnittstellenaufnahmeeinheit 24 entlang der Haupterstreckungsrichtung 32 genau drei Zonen auf, und zwar die Haltezone, welche den ersten Fixierbereich 38 ausbildet, eine Federzone, welche den Federabschnitt 42 ausbildet, und die Zentrierzone, welche den zweiten Fixierbereich 40 ausbildet. Der zweite Fixierbereich 40 stellt eine eindeutige Ausrichtung der Schnittstellenaufnahmeeinheit 24 in dem Aufnahmebereich 30, insbesondere bei einer Montage, sicher. Ferner dient der zweite Fixierbereich 40 als Haltebereich zu einem Festhalten der Schnittstellenaufnahmeeinheit 24 gegenüber der Anwendungseinheit 14. Die Schnittstellenaufnahmeeinheit 24 liegt in dem zweiten Fixierbereich 40 rundum an dem Aufnahmebereich 30 des Aufsteckabschnitts 20 der Anwendungseinheit 14 an. Der zweite Fixierbereich 40 dient ferner zu einer Kraftübertragung sowie zu einer Verpressung während der Montage. Ferner weist der Aufnahmebereich 30 des Aufsteckabschnitts 20 der Anwendungseinheit 14 einen zu dem zweiten Fixierbereich 40 korrespondierenden vierten Teilaufnahmebereich 64 auf. Der vierte Teilaufnahmebereich 64 ist von einer Einsteckzone gebildet. Der vierte Teilaufnahmebereich 64 dient zu einer weiteren Ausrichtung und Verdrehsicherung der Schnittstellenaufnahmeeinheit 24, insbesondere bei einer Montage. Der vierte Teilaufnahmebereich 64 weist eine zylindrische Form mit einem dreieckigen Querschnitt mit abgerundeten Ecken auf. Der Zylinder kann eine minimale Konizität aufweisen, damit die Formung und/oder die Entformung des Aufnahmebereichs 30 möglich ist. Der vierte Teilaufnahmebereich 64 weist eine Länge von 3 mm bis 8 mm, vorzugsweise von 5 mm bis 6,5 mm, auf. Ferner weist der vierte Teilaufnahmebereich 64 eine Breite, vorzugsweise senkrecht zu den Borsten gemessen, von 3 mm bis 6 mm, vorzugsweise von 4 mm bis 5 mm, auf. Zudem weist der vierte Teilaufnahmebereich 64 eine Höhe, insbesondere in Borstenrichtung gemessen, von 3 mm bis 6 mm, vorzugsweise von 4 mm bis 5 mm, auf. Insbesondere dient der vierte Teilaufnahmebereich 64 dazu, den zweiten Fixierbereich 40 zu halten. Der Querschnitt des vierten Teilaufnahmebereichs 64 mit der leicht konischen Form dient ferner dazu, eine optimale Fixierung der Schnittstellenaufnahmeeinheit 24 in der Anwendungseinheit 14 zu ermöglichen. Beim Einschieben der Schnittstellenaufnahmeeinheit 24 findet der Kontakt mit der Fläche des vierten Teilaufnahmebereichs 64 des Aufnahmebereichs 30 erst spät statt, sodass die Kraft erst am Schluss des Einschiebens auftritt. Ferner kann durch die Konizität die Entformung während der Herstellung ermöglicht werden. Des Weiteren dient der vierte Teilaufnahmebereich 64 zu einer Kraftübertragung.

Der Aufnahmebereich 30 der Anwendungseinheit 14 weist fünf Teilaufnahmebereiche 62, 64, 66, 68, 70 auf, welche entlang der Haupterstreckungsrichtung 32 hintereinander angeordnet sind. Ein erster Teilaufnahmebereich 66 ist von einer Einlaufzone gebildet.

Ein dritter Teilaufnahmebereich 68 ist von einer Federzone gebildet. Ein fünfter Teilaufnahmebereich 70 ist von einem Leerraum gebildet. An den ersten Teilaufnahmebereich 66 grenzt eine Öffnung des Aufnahmebereichs 30 des Aufsteckabschnitts 20 der Anwendungseinheit 14 an. Der fünfte Teilaufnahmebereich 70 bildet ein geschlossenes Ende des Aufnahmebereichs 30 des Aufsteckabschnitts 20 aus. Der dritte Teilaufnahmebereich 68 ist genau zwischen dem zweiten Teilaufnahmebereich 62 und dem vierten Teilaufnahmebereich 64 angeordnet. Der Übergang von dem zweiten Teilaufnahmebereich 62 zu dem dritten Teilaufnahmebereich 68 ist von einem Durchmesser- und/oder Querschnittssprung gebildet. Der Übergang von dem dritten Teilaufnahmebereich 68 zu dem vierten Teilaufnahmebereich 64 ist von einem Durchmesser- und/oder Querschnittssprung auf allen Seiten gebildet. Der Übergang von dem ersten Teilaufnahmebereich 66 zu dem zweiten Teilaufnahmebereich 62 ist von einer nicht stetigen Stufe und/oder einem nicht stetigen Schritt gebildet. Der zweite Teilaufnahmebereich 62 ist zentrisch zu dem ersten Teilaufnahmebereich 66 angeordnet.

Eine Verbindung zwischen der Schnittstellenaufnahmeeinheit 24 und der Anwendungseinheit 14 erfolgt im Wesentlichen über den ersten Fixierbereich 38 im Zusammenspiel mit dem zweiten Teilaufnahmebereich 62 und den zweiten Fixierbereich 40 im Zusammenspiel mit dem vierten Teilaufnahmebereich 64. Die Fixierung erfolgt durch die Rastung des Rings 58 des ersten Fixierbereichs 38 in der Ausnehmung 60 in dem zweiten Teilaufnahmebereich 62 und durch die Klemmung des zweiten Fixierbereichs 40 in dem vierten Teilaufnahmebereich 64. Der Ring 58 liegt auf einer der Öffnung des Aufnahmebereichs 30 zugewandten Seite an der Ausnehmung 60 des zweiten Teilaufnahmebereichs 62 an. Ferner wird der zweite Fixierbereich 40 in den vierten Teilaufnahmebereich 64 gedrückt und zentriert. Die Winkel des zweiten Fixierbereichs 40 und des vierten Teilaufnahmebereichs 64 sind zueinander passend. In einem montierten Zustand der Schnittstellenaufnahmeeinheit 24 gibt es eine Verspannung zwischen dem Ring 58 des ersten Fixierbereichs 38 und der Klemmung des zweiten Fixierbereichs 40. Es entstehen eine Haltekraft zwischen der Schnittstellenaufnahmeeinheit 24 und der Anwendungseinheit 14 zwischen 5 kg und 20 kg, vorzugsweise zwischen 7,5 kg und 12,5 kg. Eine Montagekraft, also die Kraft die benötigt wird, um die Schnittstellenaufnahmeeinheit 24 in die Anwendungseinheit 14 zu montieren, beträgt von 10 kg bis 21 kg, vorzugsweise von 13 kg bis 19 kg.

Der erste Teilaufnahmebereich 66 des Aufnahmebereichs 30 des Aufsteckabschnitts 20 ist von einer Einlaufzone gebildet. Der erste Teilaufnahmebereich 66 ist von einer Freistellung gebildet. In dem ersten Teilaufnahmebereich 66 weist die Anwendungseinheit 14 keinen Kontakt mit der Schnittstellenaufnahmeeinheit 24 und dem Zahnbürstenhandteil 12 auf. Die Schnittstelle 28 des Zahnbürstenhandteils 12 ist in dem ersten Teilaufnahmebereich 66 freistehend ohne Berührung zu der Anwendungseinheit 14 und der Schnittstellenaufnahmeeinheit 24. Die Gesamtlänge des ersten Teilaufnahmebereichs 66 beträgt von 5 mm bis 10 mm, vorzugsweise von 6 mm bis 8 mm. Der erste Teilaufnahmebereich 66 weist einen ersten Teilbereich 72 in Form eines geraden Kreiszylinders auf. Der erste Teilbereich 72 weist eine Länge von 2 mm bis 4 mm, vorzugsweise von 2,5 mm bis 3,5 mm, auf. Der Durchmesser des ersten Teilbereichs 72 des ersten Teilaufnahmebereichs 66 beträgt von 7 mm bis 13 mm, vorzugsweise von 9 mm bis 11 mm. An ein vorderes Ende des ersten Teilbereichs 72 schließt ein zweiter Teilbereich 74 an, welcher einen Anzug gegen das Zentrum des Aufnahmebereichs 30 aufweist. Der zweite Teilbereich 74 bildet eine kegelstumpfförmige Ausnehmung aus. Die Länge des zweiten Teilbereichs 74 des ersten Teilaufnahmebereichs 66 beträgt von 3 mm bis 5 mm, vorzugsweise von 3,5 mm bis 4,5 mm. Ein kleinster Durchmesser des zweiten Teilbereichs 74, insbesondere auf einer dem ersten Teilbereich 72 abgewandten Seite, beträgt von 6 mm bis 12 mm, vorzugsweise von 8 mm bis 10 mm. An einer Innenseite des ersten Teilaufnahmebereichs 66 befinden sich in die Ausnehmung ragende Podeste 76. Die Podeste 76 setzen sich von dem ersten Teilbereich 72 in den zweiten Teilbereich 74 des ersten Teilaufnahmebereichs 66 fort. Die Podeste 76 erstrecken sich zumindest im Wesentlichen parallel zu der Erstreckungsrichtung 36 der Schnittstellenaufnahmeeinheit 24. Die Podeste 76 sind in Umfangsrichtung gleichmäßig verteilt angeordnet. Die Podeste 76 sind symmetrisch zu einer sich durch eine Mittelachse der Schnittstellenaufnahmeeinheit 24 erstreckenden Ebene angeordnet. Es sind immer zwei und zwei Podeste 76 über Kreuz symmetrisch, insbesondere punktsymmetrisch, angeordnet. Die Ausrichtung der Podeste 76 ist immer so, dass sie für die Funktion mit einem entsprechenden Gegenelement korrespondieren. Die Funktion der Podeste 76 besteht darin, die Aufsteckbürstenvorrichtung 10 zu lagern. Auf einer Ladestation für das Zahnbürstenhandteil 12 hat es Lagerpositionen für Aufsteckbürstenvorrichtungen 10, sodass beispielsweise in einem Haushalt ein Handgerät für 2 Personen nutzbar ist. Die Geometrie der Lagerstumpfe an den Lagerpositionen, die dazu vorgesehen sind, dass die Aufsteckbürstenvorrichtungen 10 darauf gesteckt werden, sind anders geformt als die grundsätzliche Schnittstellengeometrie der Aufsteckbürstenvorrichtung 10. Die Podeste 76 bringen so mit sich, dass die Aufsteckbürstenvorrichtungen 10 an sich einerseits auf das Zahnbürstenhandgerät 12 passen und andererseits auch auf die Ladestation gesteckt werden können. Die Podeste 76 sind so geformt, dass sie die Klemmung zwischen Aufsteckbürstenvorrichtung 10 und Ladestation ermöglichen. Die Podeste 76 weisen eine Breite von 1 mm bis 3 mm, vorzugsweise von 1,5 mm bis 2,5 mm, auf. Die Podeste 76 weisen ferner eine Höhe von 0,1 mm bis 1 mm, vorzugsweise von 0,1 mm bis 0,4 mm, auf. Die Länge der Podeste 76 korrespondiert mit der Höhe der Lagerstumpfe am Ladegerät. Insbesondere entspricht die Länge mindestens der Höhe der Lagerstumpfe, also insbesondere von 2 mm bis 10 mm, vorzugsweise von 3,5 mm bis 6,5 mm.

Der fünfte Teilaufnahmebereich 70 ist von einem Leerraum gebildet. Ein Übergang von dem vierten Teilaufnahmebereich 64 zu dem fünften Teilaufnahmebereich 70 ist von einem Durchmesser- und/oder Querschnittssprung auf allen Seiten gebildet. Die Gesamtlänge des fünften Teilaufnahmebereichs 70 beträgt von 0,5 mm bis 3 mm, vorzugsweise von 1,5 mm bis 2,5 mm. Der Querschnitt ist gegenüber dem vorhergehenden Querschnitt des vierten Teilaufnahmebereichs 64 verkleinert. Der fünfte Teilaufnahmebereich 70 ist gegenüber der montierten Schnittstellenaufnahmeeinheit 24 zentriert. Der fünfte Teilaufnahmebereich 70 dient zu einer Aufnahme eines Angusspunkts der Schnittstellenaufnahmeeinheit 24. Der Angusspunkt der Schnittstellenaufnahme 26 liegt an einem vorderen Ende des zweiten Fixierbereichs 40. Der fünfte Teilaufnahmebereich 70 bildet einen Leerbereich im montierten Zustand. Vorzugsweise dient der fünfte Teilaufnahmebereich 70 zudem als Kompressionsbereich für eine gestaute Luft bei einer Montage der Schnittstellenaufnahmeeinheit 24 in dem Aufnahmebereich 30. Ferner bildet der fünfte Teilaufnahmebereich 70 eine Freistellung für den Angusspunkt der Schnittstellenaufnahmeeinheit 24. Durch die Freistellung im montierten Zustand ist eine Montage sowohl bei einem flachen als auch bei einem vorstehenden Angusspunkt möglich.

Die Schnittstellenaufnahmeeinheit 24 weist ferner den Federabschnitt 42 auf. Der Federabschnitt 42 ist vorgesehen, in einem aufgenommenen Zustand der Schnittstelle 28 des Zahnbürstenhandteils 12, eine Spannkraft auf die Schnittstelle 28 des Zahnbürstenhandteils 12 auszuüben. Der Federabschnitt 42 erstreckt sich zwischen dem ersten Fixierbereich 38 und dem zweiten Fixierbereich 40. Der Federabschnitt 42 weist eine Gesamtlänge von 8 mm bis 13 mm, vorzugsweise von 9,5 mm bis 11,5 mm, auf. Der Federabschnitt 42 weist eine zumindest annähernd kreiszylindrische Grundform auf. Der Federabschnitt 42 weist eine zylindrische Grundform mit einem kreisabschnittsförmigen Querschnitt auf. Die zylindrische Grundform bildet insbesondere einen Teil des Grundkörpers 48 der Schnittstellenaufnahmeeinheit 24. Die Grundform des Federabschnitts 42 weist einen ersten Teilbereich 78 auf. Der erste Teilbereich 78 grenzt direkt an den ersten Fixierbereich 38 an und ist auf einer Vorderseite der Schnittstellenaufnahmeeinheit 24 angeordnet. Der erste Teilbereich 78 weist einen kreisabschnittsförmigen Querschnitt mit einer halbzylindrischen, zu einer Rückseite hin geöffneten Ausnehmung auf. Die halbzylindrische Ausnehmung bildet ein Teil der Schnittstellenaufnahme 26. Die halbzylindrische Ausnehmung bildet einen zweiten Abschnitt der Schnittstellenaufnahme 26. Die Grundform des Federabschnitts 42 weist ferner einen zweiten Teilbereich 80 auf. Der zweite Teilbereich 80 grenzt direkt an den zweiten Fixierbereich 40 an und ist auf einer Vorderseite der Schnittstellenaufnahmeeinheit 24 angeordnet. Der zweite Teilbereich 80 ist zwischen dem ersten Teilbereich 78 und dem zweiten Fixierbereich 40 angeordnet. Der zweite Teilbereich 80 weist einen gegenüber dem ersten Teilbereich 78 verkleinerten kreisabschnittsförmigen Querschnitt auf, welcher zu einer Vorderseite hin abgeflacht ist. Der zweite Teilbereich 80 weist eine rechteckige, zu einer Rückseite hin geöffnete Ausnehmung auf. Die rechteckige Ausnehmung bildet ein Teil der Schnittstellenaufnahme 26. Die rechteckige Ausnehmung bildet einen dritten Abschnitt der Schnittstellenaufnahme 26. Die rechteckige Ausnehmung bildet einen letzten Abschnitt der Schnittstellenaufnahme 26, in welcher die Schnittstelle 28 verklemmt wird. Die rechteckige Ausnehmung und die halbzylindrische Ausnehmung sind auf einer Innenseite des Federabschnitts 42 angeordnet und bilden einen Aufnahmebereich zur Aufnahme eines Teilbereichs, insbesondere des freien Endes, der Schnittstelle 28 des Zahnbürstenhandteils 12. Der Aufnahmebereich des Federabschnitts 42 bildet einen wichtigen Interaktionsbereich zu der Schnittstelle 28 des Zahnbürstenhandteils 12. Der Federabschnitt 42 dient zu einem Sicherstellen einer eindeutigen Ausrichtung der Schnittstelle 28, insbesondere der Achse, zu der Aufsteckbürstenvorrichtung 10. Die Schnittstelle 28 liegt in einem aufgenommenen Zustand auf der Vorderseite an der Innenseite des Federabschnitts 42 an. Die Grundform des Federabschnitts 42 bildet insgesamt eine halbrohrförmige Wanne zur Aufnahme der Schnittstelle 28. Es bildet sich insbesondere eine Wanne, wobei der Abschluss der Wanne eine Freistellung bildet. In einem vorderen Bereich des Federabschnitts 42, auf einer dem zweiten Fixierbereich 40 zugewandten Seite, weist der zweite Teilbereich 80 der Grundform des Federabschnitts 42 ein Sackloch auf. Der Federabschnitt 42 weist an einer Außenseite nur einzelne Berührungspunkte und/oder -flächen zu der Anwendungseinheit 14 auf. Der Federabschnitt 42 ist grundsätzlich freigestellt.

Der dritte Teilaufnahmebereich 68 des Aufnahmebereichs 30 des Aufsteckabschnitts 20, welcher als Federzone ausgebildet ist, ist zu dem Federabschnitt 42 korrespondierend ausgebildet. Der dritte Teilaufnahmebereich 68 ist außermittig zu dem zweiten Teilaufnahmebereich 62 angeordnet. Eine Geometrie des Aufnahmebereichs 30 auf einer der Rückseite der Anwendungseinheit 14 zugewandten Seite des Aufnahmebereichs 30 setzt sich zwischen dem zweiten Teilaufnahmebereich 62 und dem dritten Teilaufnahmebereich 68 fort. Auf einer linken und rechten Seite der Anwendungseinheit 14 abgewandten Seite des Aufnahmebereichs 30 befindet sich zwischen dem zweiten Teilaufnahmebereich 62 und dem dritten Teilaufnahmebereich 68 ein Durchmessersprung. Die der Rückseite der Anwendungseinheit 14 zugewandte Seite des Aufnahmebereichs 30 bildet eine Auflagezone für ein Federelement des Federabschnitts 42 der Schnittstellenaufnahmeeinheit 24. Der dritte Teilaufnahmebereich 68 weist eine Gesamtlänge von 8 mm bis 13 mm, vorzugsweise von 10 mm bis 11,5 mm, auf. Die Gesamtlänge steht im Zusammenspiel mit dem Federabschnitt 42 der Schnittstellenaufnahmeeinheit 24. Die Schnittstellenaufnahmeeinheit 24 muss im korrespondierenden Bereich vorzugsweise gleich lang sein wie der dritte Teilaufnahmebereich 68 der Anwendungseinheit 14. Die Länge der Schnittstellenaufnahmeeinheit 24 ist so gewählt, dass der Federabschnitt 42 wie benötigt funktioniert. Der dritte Teilaufnahmebereich 68 weist eine kreisförmige Querschnittsform mit einer Ausstülpung 82 auf. Die Ausstülpung 82 ist auf der Rückseite des Aufnahmebereichs 30 angeordnet. Die Ausstülpung 82 korrespondiert mit der Rückseite der Schnittstellenaufnahmeeinheit 24. Ein höchster Punkt, insbesondere ein der Vorderseite zugewandter Punkt, des Aufnahmebereichs 30 setzt sich von dem zweiten Teilaufnahmebereich 62 in den dritten Teilaufnahmebereich 66 fort. Dies dient zu einem Einfahren der Schnittstellenaufnahmeeinheit 24 bei einer Montage, wobei bei einem Einfahren sich die Vorderseite der Schnittstellenaufnahmeeinheit 24 auf einer stetigen Fläche befindet.

Der Federabschnitt 42 weist ein Stegfederelement 44 und ein Bogenfederelement 46 auf. Das Stegfederelement 44 und das Bogenfederelement 46 sind jeweils in einem aufgenommenen Zustand der Schnittstelle 28 des Zahnbürstenhandteils 12 dazu vorgesehen, eine Spannkraft auf die Schnittstelle 28 des Zahnbürstenhandteils 12 auszuüben. Das Stegfederelement 44 ist von einem stegförmigen Federelement mit einer rechteckigen Grundform gebildet. Das Bogenfederelement 46 ist von einem kreisbogenförmigen Federelement gebildet. Das Bogenfederelement 46 ist von einem bogenförmigen und/oder brückenartigen Federelement gebildet. Das Bogenfederelement 46 weist insbesondere ein Kreisbogensegment von 80° bis 140°, vorzugsweise von 90° bis 110°, auf. Das Stegfederelement 44 und das Bogenfederelement 46 sind einstückig ausgebildet. Das Stegfederelement 44 und das Bogenfederelement 46 sind teilweise seriell hintereinandergeschaltet. Das Stegfederelement 44 und das Bogenfederelement 46 üben eine Federkraft im Wesentlichen senkrecht zu der Haupterstreckungsrichtung der Schnittstellenaufnahmeeinheit 24 aus. In einem Betriebszustand sind das Stegfederelement 44 und das Bogenfederelement 46 zwischen der Anwendungseinheit 14 und der Schnittstelle 28 verspannt. Das Stegfederelement 44 ist seitlich und hinten freigestellt. Das Stegfederelement 44 ist im Wesentlichen freistehend ausgebildet. Das Stegfederelement 44 erstreckt sich in einem entspannten Zustand parallel zu der Haupterstreckungsrichtung 32, insbesondere etwas von einer Mittelachse der Schnittstellenaufnahmeeinheit 24 entfernt. Eine Breite der seitlichen Freistellung, insbesondere auf einer Seite gemessen, beträgt von 0,1 mm bis 1 mm, vorzugsweise von 0,25 mm bis 0,75 mm. Eine Länge der Freistellung insgesamt entlang der Haupterstreckungsrichtung 32 beträgt von 5 mm bis 11 mm, vorzugsweise von 8 mm bis 9,5 mm. Eine Länge der Freistellung entspricht einer Länge des Stegfederelements 44 zusammen mit dem Bogenfederelement 46. Das Stegfederelement 44 und das Bogenfederelement 46 bilden zusammen ein Klemmelement aus. Das Klemmelement mit dem Stegfederelement 44 und dem Bogenfederelement 46 ist dazu vorgesehen, eine Klemmkraft auf die Schnittstelle 28 des Zahnbürstenhandteils 12 auszuüben. Die Klemmkraft definiert die Abzugskraft der Aufsteckbürstenvorrichtung 10 von der Schnittstelle 28 des Zahnbürstenhandteils 12. Die Klemmkraft ist kleiner als die Kraft zum Entfernen der Schnittstellenaufnahmeeinheit 24 aus der Anwendungseinheit 14. Die Klemmkraft wird über eine Abzugskraft definiert, daher die Kraft, die benötigt wird, um die montierte Aufsteckbürstenvorrichtung 10 von der Schnittstelle 28 des Zahnbürstenhandteils 12 zu entfernen. Die Abzugskraft ist ein Zusammenspiel zwischen der Schnittstelle 28 des Zahnbürstenhandteils 12 und der Aufsteckbürstenvorrichtung 10. Die Schnittstelle 28 des Zahnbürstenhandteils 12 ist in einem verbundenen Zustand des Zahnbürstenhandteils 12 mit der Aufsteckbürstenvorrichtung 10 in einer Flucht mit einer Borstenfläche der Aufsteckbürstenvorrichtung 10. Ein Abzugsgewicht der Aufsteckbürstenvorrichtung 10 von der Schnittstelle 28 beträgt von 0,75 kg bis 3,5 kg, vorzugsweise von 1,2 kg bis 2,8 kg.

Das Stegfederelement 44 und das Bogenfederelement 46 sind jeweils mit einem Ende mit einem Grundkörper 48 der Schnittstellenaufnahmeeinheit 24 verbunden, wobei die Enden voneinander abgewandt sind. Das Stegfederelement 44 ist mit einem vorderen Ende mit dem Grundkörper 48 der Schnittstellenaufnahmeeinheit 24 und mit einem hinteren Ende mit dem Bogenfederelement 46 verbunden, wobei die Enden voneinander abgewandt sind. Das Stegfederelement 44 ist mit einem vorderen Ende mit dem zweiten Fixierbereich 40 verbunden. Das Bogenfederelement 46 ist mit einem hinteren Ende mit dem Grundkörper 48 der Schnittstellenaufnahmeeinheit 24 und mit einem vorderen Ende mit dem Stegfederelement 44 verbunden, wobei die Enden voneinander abgewandt sind. Das Bogenfederelement 46 ist mit einem hinteren Ende mit dem ersten Fixierbereich 38 verbunden. Das Stegfederelement 44 ist über das Bogenfederelement 46 zusätzlich mit dem Grundkörper 48 der Schnittstellenaufnahmeeinheit 24 verbunden. Das Stegfederelement 44 und das Bogenfederelement 46 bilden gemeinsam einen entlang der Haupterstreckungsrichtung 36 der Schnittstellenaufnahmeeinheit 24 verlaufenden Steg, welcher sich über den gesamten Federabschnitt 42 erstreckt. Das Stegfederelement 44 und das Bogenfederelement 46 sind auf einer der Grundform des Federabschnitts 42 gegenüberliegenden Rückseite des Federabschnitts 42 angeordnet.

Das Bogenfederelement 46 ist dazu vorgesehen, sich an einer Innenfläche des Aufnahmebereichs 30 des Aufsteckabschnitts 20 abzustützen. Das Bogenfederelement 46 ist dazu vorgesehen, eine Spannkraft zwischen der Innenfläche des Aufnahmebereichs 30 des Aufsteckabschnitts 20 und der Schnittstelle 28 des Zahnbürstenhandteils 12 zu erzeugen. Das Bogenfederelement 46 stützt sich an einem von den Enden entfernten Mittelbereich an der Innenfläche des Aufnahmebereichs 30 des Aufsteckabschnitts 20 ab. Das Bogenfederelement 46 stützt sich auf einer Rückseite an der Innenfläche des Aufnahmebereichs 30 des Aufsteckabschnitts 20 ab. Das Bogenfederelement 46 weist ein Podest 50 auf, welches zu einer Anlage an der Innenfläche des Aufnahmebereichs 30 des Aufsteckabschnitts 20 vorgesehen ist. Das Bogenfederelement 46 stützt sich mit dem Podest 50 außen auf dem Bogen an der Innenseite des Aufnahmebereichs 30 des Aufsteckabschnitts 20 ab. Das Podest 50 ist insbesondere auf einer Außenseite des Bogens des Bogenfederelements 46 angeordnet. Das Podest 50 ist von einem rechteckigen Podest 50 gebildet. Das Podest 50 bildet eine Erhebung gegenüber einer Grundform des Bogenfederelements 46 aus. Das Podest 50 bildet einen von einer Mittelachse der Schnittstellenaufnahmeeinheit 24 entferntesten Punkt des Bogenfederelements 46 aus. Das Podest 50 weist eine Länge von 1 mm bis 4,5 mm, vorzugsweise von 2,5 mm bis 3,5 mm, auf. Ferner weist das Podest 50 eine Breite von 1 mm bis 3,5 mm, vorzugsweise von 1,5 mm bis 2,5 mm, auf. Das Podest 50 des Bogenfederelements 46 dient zu einer sauberen Abstützung des Bogenfederelement 46 in dem Aufnahmebereich 30 des Aufsteckabschnitts 20 der Anwendungseinheit 14. Ferner bildet das Podest 50 einen Abstützpunkt des Klemmelements mit dem Stegfederelement 44 und dem Bogenfederelement 46. Mittels des Podests 50 des Bogenfederelements 46 kann eine Kraft eingestellt werden, die schlussendlich auf die Schnittstelle 28 des Zahnbürstenhandteils 12 wirkt. Mittels einer größeren Höhe des Podests 50 kann beispielsweise eine höhere Kraft erzeugt werden, da das Bogenfederelement 46 im montierten Zustand in Richtung der Schnittstellenaufnahme 26 gedrückt wird.

Das Stegfederelement 44 weist ein Podest 52 auf, welches dazu vorgesehen ist, eine Klemmkraft des Federabschnitts 42 auf die Schnittstelle 28 des Zahnbürstenhandteils 12 einzuleiten. Das Stegfederelement 44 stützt sich innen durch das Podest 52 an der Schnittstelle 28 des Zahnbürstenhandteils 12 ab. Das Podest 52 ist von einem rechteckigen Podest 52 gebildet. Das Podest 52 bildet eine Erhebung gegenüber einer Grundform des Stegfederelements 44 aus. Das Podest 52 bildet einen der Mittelachse der Schnittstellenaufnahmeeinheit 24 nächstliegenden Punkt des Stegfederelements 44 aus. Das Podest 52 weist eine Länge von 1,5 mm bis 4,5 mm, vorzugsweise von 2,5 mm bis 3,5 mm, auf. Ferner weist das Podest 52 eine Breite von 1 mm bis 3,5 mm, vorzugsweise von 1,5 mm bis 2,5 mm, auf. Das Podest 52 ist direkt anschließend an eine Anbindungsstelle des Bogenfederelements 46 an das Stegfederelement 44 angeordnet. Das Podest 52 ist auf einer dem Bogenfederelement 46 abgewandten Seite des Stegfederelements 44 angeordnet. Die Position und/oder Form des Podests 52 ist auf die Schnittstelle 28 des Zahnbürstenhandteils 12 abgestimmt. Das Podest 52 muss auf die zugehörige geriffelte Fläche der Schnittstelle 28 passen. Das Podest 52 dient als Berührungspunkt zu der Schnittstelle 28 des Zahnbürstenhandteils 12. Über das Podest 52 wird eine Klemmkraft auf die Schnittstelle 28 eingeleitet. Mit dem Podest 52 wird insbesondere viel Kraft auf eine kleine Fläche projiziert.

Ferner weist das Stegfederelement 44 ein freies Ende auf, welches eine Federzunge ausbildet. Das Stegfederelement 44 weist ein hinteres freies Ende auf. Ein einem unteren Ende zugewandtes Ende des Stegfederelements 44 ist frei von einer Verbindung mit dem Grundkörper 48 der Schnittstellenaufnahmeeinheit 24 ausgebildet. Das Stegfederelement 44 bildet eine Lanze in Längsrichtung aus. Das Stegfederelement 44 bildet hinter einer Verbindung mit dem Bogenfederelement 46 eine freistehende Federzunge aus. Die Federzunge ist dazu ausgeformt, dass die Schnittstelle 28 des Zahnbürstenhandteils 12 korrekt in die Schnittstellenaufnahme 26 eingeführt wird und sich nicht in der Federgeometrie verhakt. Ferner kann eine Zentrierung der Schnittstelle 28 des Zahnbürstenhandteils 12 unterstützt werden.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

### Bezugszeichenliste

- 10: Aufsteckbürstenvorrichtung
- 12: Zahnbürstenhandteil
- 14: Anwendungseinheit
- 16: Kopfabschnitt
- 18: Bürstenkopf
- 20: Aufsteckabschnitt
- 22: Halsabschnitt
- 24: Schnittstellenaufnahmeeinheit
- 26: Schnittstellenaufnahme
- 28: Schnittstelle
- 30: Aufnahmebereich
- 32: Haupterstreckungsrichtung
- 34: Erstreckung
- 36: Erstreckung
- 38: Erster Fixierbereich
- 40: Zweiter Fixierbereich
- 42: Federabschnitt
- 44: Stegfederelement
- 46: Bogenfederelement
- 48: Grundkörper
- 50: Podest
- 52: Podest
- 54: Borstenfeld
- 56: Grundkörper
- 58: Ring
- 60: Ausnehmung
- 62: Zweiter Teilaufnahmebereich
- 64: Vierter Teilaufnahmebereich
- 66: Erster Teilaufnahmebereich
- 68: Dritter Teilaufnahmebereich
- 70: Fünfter Teilaufnahmebereich
- 72: Erster Teilbereich
- 74: Zweiter Teilbereich
- 76: Podest
- 78: Erster Teilbereich
- 80: Zweiter Teilbereich
- 82: Ausstülpung
- 84: Lochfeld
- 86: Borstenbündel

## Patentansprüche

1. Aufsteckbürstenvorrichtung für ein Zahnbürstenhandteil (12), insbesondere für ein elektrisches Zahnbürstenhandteil (12), mit einer Anwendungseinheit (14), welche einen Kopfabschnitt (16) mit einem Bürstenkopf (18), einen Aufsteckabschnitt (20) und einen zwischen dem Kopfabschnitt (16) und dem Aufsteckabschnitt (20) angeordneten Halsabschnitt (22) aufweist, und mit einer Schnittstellenaufnahmeeinheit (24), welche zumindest eine Schnittstellenaufnahme (26) zu einer Aufnahme von zumindest einer Schnittstelle (28) eines Zahnbürstenhandteils (12) aufweist, wobei die Schnittstellenaufnahmeeinheit (24) separat ausgebildet ist und der Aufsteckabschnitt (20) der Anwendungseinheit (14) einen Aufnahmebereich (30) zu einer verliersicheren, zumindest im Wesentlichen vollständigen Aufnahme der Schnittstellenaufnahmeeinheit (24) aufweist,
**dadurch gekennzeichnet, dass**
die Schnittstellenaufnahmeeinheit (24) zumindest einen ersten Fixierbereich (38) aufweist, welcher zu einem direkten Kontakt mit dem Aufnahmebereich (30) des Aufsteckabschnitts (20) vorgesehen ist und einen zumindest annähernd dreieckigen Querschnitt aufweist.

2. Aufsteckbürstenvorrichtung nach Anspruch 1,
**gekennzeichnet durch**
eine Haupterstreckungsrichtung (32), wobei eine Erstreckung (34) des Aufnahmebereichs (30) des Aufsteckabschnitts (20) entlang der Haupterstreckungsrichtung (32) größer, insbesondere wesentlich größer ist, als eine Erstreckung (36) der Schnittstellenaufnahmeeinheit (24) entlang der Haupterstreckungsrichtung (32).

3. Aufsteckbürstenvorrichtung nach Anspruch 1 oder 2,
**dadurch gekennzeichnet, dass**
die Schnittstellenaufnahmeeinheit (24) einteilig ausgebildet ist und aus einem von der Anwendungseinheit (14) verschiedenen Material besteht.

4. Aufsteckbürstenvorrichtung nach Anspruch 1,
**dadurch gekennzeichnet, dass**
die Schnittstellenaufnahmeeinheit (24) zumindest einen von dem ersten Fixierbereich (38) beabstandeten zweiten Fixierbereich (40) aufweist, welcher zu einem direkten Kontakt mit dem Aufnahmebereich (30) des Aufsteckabschnitts (20) vorgesehen ist und einen zumindest annähernd dreieckigen Querschnitt aufweist, wobei der Querschnitt des zweiten Fixierbereichs (40) gegenüber dem Querschnitt des ersten Fixierbereichs (38) verdreht ist.

5. Aufsteckbürstenvorrichtung nach dem Oberbegriff des Anspruchs 1, insbesondere nach einem der vorhergehenden Ansprüche,
**dadurch gekennzeichnet, dass**
die Schnittstellenaufnahmeeinheit (24) zumindest einen Federabschnitt (42) aufweist, welcher dazu vorgesehen ist, in einem aufgenommenen Zustand einer Schnittstelle (28) des Zahnbürstenhandteils (12), eine Spannkraft auf die Schnittstelle (28) des Zahnbürstenhandteils (12) auszuüben.

6. Aufsteckbürstenvorrichtung nach Anspruch 5,
**dadurch gekennzeichnet, dass**
der Federabschnitt (42) zumindest ein Stegfederelement (44) und zumindest ein Bogenfederelement (46) aufweist, welche jeweils, in einem aufgenommenen Zustand einer Schnittstelle (28) des Zahnbürstenhandteils (12), dazu vorgesehen sind, eine Spannkraft auf die Schnittstelle (28) des Zahnbürstenhandteils (12) auszuüben.

7. Aufsteckbürstenvorrichtung nach Anspruch 6,
**dadurch gekennzeichnet, dass**
das zumindest eine Stegfederelement (44) und das zumindest eine Bogenfederelement (46) einstückig ausgebildet sind.

8. Aufsteckbürstenvorrichtung zumindest nach Anspruch 6,
**dadurch gekennzeichnet, dass**
das zumindest eine Stegfederelement (44) und das zumindest eine Bogenfederelement (46) jeweils mit einem Ende mit einem Grundkörper (48) der Schnittstellenaufnahmeeinheit (24) verbunden sind, wobei die Enden voneinander abgewandt sind.

9. Aufsteckbürstenvorrichtung zumindest nach Anspruch 6,
**dadurch gekennzeichnet, dass**
das zumindest eine Bogenfederelement (46) dazu vorgesehen ist, sich an einer Innenfläche des Aufnahmebereichs (30) des Aufsteckabschnitts (20) abzustützen.

10. Aufsteckbürstenvorrichtung nach Anspruch 9,
**dadurch gekennzeichnet, dass**
das zumindest eine Bogenfederelement (46) zumindest ein Podest (50) aufweist, welches zu einer Anlage an der Innenfläche des Aufnahmebereichs (30) des Aufsteckabschnitts (20) vorgesehen ist.

11. Aufsteckbürstenvorrichtung zumindest nach Anspruch 6,
**dadurch gekennzeichnet, dass**
das zumindest eine Stegfederelement (44) ein freies Ende aufweist, welches eine Federzunge ausbildet.

12. Aufsteckbürstenvorrichtung zumindest nach Anspruch 6,
**dadurch gekennzeichnet, dass**
das zumindest eine Stegfederelement (44) zumindest ein Podest (52) aufweist, welches dazu vorgesehen ist, eine Klemmkraft des Federabschnitts (42) auf die Schnittstelle (28) des Zahnbürstenhandteils (12) einzuleiten.

13. Aufsteckbürstenvorrichtung nach dem Oberbegriff des Anspruchs 1, insbesondere nach einem der vorhergehenden Ansprüche,
**dadurch gekennzeichnet, dass**
der Bürstenkopf (18) ein definiertes Borstenfeld (54) aufweist.

14. Aufsteckbürstensystem mit einer Aufsteckbürstenvorrichtung (10) nach einem der vorhergehenden Ansprüche und mit einer weiteren, von der Schnittstellenaufnahmeeinheit (24) verschiedenen, separat ausgebildeten Schnittstellenaufnahmeeinheit, welche zu einer Aufnahme von zumindest einer weiteren, von der Schnittstelle (28) verschiedenen Schnittstelle eines Zahnbürstenhandteils vorgesehen ist.

15. Elektrische Zahnbürste mit einem elektrischen Zahnbürstenhandteil (12) und mit einer Aufsteckbürstenvorrichtung (10) nach einem der Ansprüche 1 bis 13.

## Claims

1. Plug-on brush device for a toothbrush handpiece (12), in particular for an electrical toothbrush handpiece (12),
with an application unit (14) comprising a head section (16) with a brush head (18), a plug-on section (20) and a neck section (22) that is arranged between the head section (16) and the plug-on section (20),
and with an interface accommodation unit (24) comprising at least one interface accommodation (26) for receiving at least one interface (28) of a toothbrush handpiece (12),
the interface accommodation unit (24) being realized separately and the plug-on section (20) of the application unit (14) comprising a receiving region (30) for a loss-proof, at least substantially complete accommodation of the interface accommodation unit (24),
**characterised in that**
the interface accommodation unit (24) comprises at least one first fixing region (38), which is configured for a direct contact with the receiving region (30) of the plug-on section (20) and has an at least approximatively triangular cross section.

2. Plug-on brush device according to claim 1,
**characterised by**
a main extension direction (32), wherein an extent (34) of the receiving region (30) of the plug-on section (20) along the main extension direction (32) is greater, in particular substantially greater, than an extent (36) of the interface accommodation unit (24) along the main extension direction (32).

3. Plug-on brush device according to claim 1 or 2,
**characterised in that**
the interface accommodation unit (24) is realized in a one-part implementation and is made of a material that differs from the application unit (14).

4. Plug-on brush device according to claim 1,
**characterised in that**
the interface accommodation unit (24) comprises at least one second fixing region (40), which is spaced apart from the first fixing region (38), which is configured for a direct contact with the receiving region (30) of the plug-on section (20) and which has an at least approximately triangular cross section, the cross section of the second fixing region (40) being rotated with respect to the cross section of the first fixing region (38).

5. Plug-on brush device according to the preamble of claim 1, in particular according to one of the preceding claims,
**characterised in that**
the interface accommodation unit (24) comprises at least one spring section (42) which is configured, in a state when an interface (28) of the toothbrush handpiece (12) is accommodated, to exert a tension force onto the interface (28) of the toothbrush handpiece (12).

6. Plug-on brush device according to claim 5,
**characterised in that**
the spring section (42) comprises at least one spring bar element (44) and at least one bow spring element (46) each of which is configured, in a state when an interface (28) of the toothbrush handpiece (12) is accommodated, to exert a tension force onto the interface (28) of the toothbrush handpiece (12).

7. Plug-on brush device according to claim 6,
**characterised in that**
the at least one spring bar element (44) and the at least one bow spring element (46) are realized integrally.

8. Plug-on brush device at least according to claim 6,
**characterised in that**
the at least one spring bar element (44) and the at least one bow spring element (46) are in each case with one end connected to a base body (48) of the interface accommodation unit (24), wherein the ends face away from each other.

9. Plug-on brush device at least according to claim 6,
**characterised in that**
the at least one bow spring element (46) is configured to be supported on an inner surface of the receiving region (30) of the plug-on section (20).

10. Plug-on brush device according to claim 9,
**characterised in that**
the at least one bow spring element (46) comprises at least one pedestal (50), which is configured to adjoin the inner surface of the receiving region (30) of the plug-on section (20).

11. Plug-on brush device at least according to claim 6,
**characterised in that**
the at least one spring bar element (44) has a free end which forms a spring tongue.

12. Plug-on brush device at least according to claim 6,
**characterised in that**
the at least one spring bar element (44) comprises at least one pedestal (52), which is configured to introduce a clamping force of the spring section (42) onto the interface (28) of the toothbrush handpiece (12).

13. Plug-on brush device according to the preamble of claim 1, in particular according to one of the preceding claims,
**characterised in that**
the brush head (18) has a defined bristle field (54).

14. Plug-on brush system with a plug-on brush device (10) according to one of the preceding claims, and with a further interface accommodation unit which differs from and is realized separately from the interface accommodation unit (24), and which is configured for receiving at least one further interface of a toothbrush handpiece, which differs from the interface (28).

15. Electrical toothbrush with an electrical toothbrush handpiece (12) and with a plug-on brush device (10) according to one of claims 1 to13.

## Revendications

1. Dispositif de brosse enfichable pour une pièce à main de brosse à dents (12), en particulier pour une pièce à main de brosse à dents (12) électrique,
avec une unité d'application (14) comprenant une section-tête (16) avec une tête de brosse (18), une section d'enfichage (20) et une section-cou (22) disposé entre la section-tête (16) et la section d'enfichage (20),
et avec une unité de logement-interface (24) comprenant au moins un logement d'interface (26) pour recevoir au moins une interface (28) d'une pièce à main de brosse à dents (12),
l'unité de logement-interface (24) étant réalisée séparément et la section d'enfichage (20) de l'unité d'application (14) comprenant une zone de logement (30) pour recevoir l'unité de logement-interface (24) imperdablement et au moins sensiblement complètement,
**caractérisé en ce que**
l'unité de logement-interface (24) comprend au moins une première zone de fixement (38) qui est prévu pour un contact direct avec la zone de logement (30) de la section d'enfichage (20) et comporte une coupe transversale au moins approximativement triangulaire.

2. Dispositif de brosse enfichable selon la revendication 1,
**caractérisé par**
une direction d'étendue principale (32),
où une étendue (34) de la zone de logement (30) de la zone d'enfichage (20) le long de la direction d'étendue principale (32) est supérieure, en particulier sensiblement supérieure, à une étendue (36) de l'unité de logement-interface (24) le long de la direction d'étendue principale (32).

3. Dispositif de brosse enfichable selon la revendication 1 ou 2,
**caractérisé en ce que**
l'unité de logement-interface (24) est réalisée en une pièce et consiste en un matériau différant du matériau de l'unité d'application (14).

4. Dispositif de brosse enfichable selon la revendication 1,
**caractérisé en ce que**
l'unité de logement-interface (24) comprend au moins une deuxième zone de fixement (40) écartée de la première zone de fixement (38), qui est prévue pour un contact direct avec la zone de logement (30) de la section d'enfichage (20) et comporte une coupe transversale au moins approximativement triangulaire, la coupe transversale de la deuxième zone de fixement (40) étant tournée par rapport à la coupe transversale de la première zone de fixement (38).

5. Dispositif de brosse enfichable selon le préambule de la revendication 1, en particulier selon l'une des revendications précédentes,
**caractérisé en ce que**
l'unité de logement-interface (24) comprend au moins une section de ressort (42) qui est prévue, en état logé d'une interface (28) de la pièce à main de brosse à dents (12), pour exercer une force de tension sur l'interface (28) de la pièce à main de brosse à dents (12).

6. Dispositif de brosse enfichable selon la revendication 5,
**caractérisé en ce que**
la section de ressort (42) comprend au moins un élément tige-ressort (44) et au moins un élément ressort-en-arc (46), chacun desquels est prévu, en état logé d'une interface (28) de la pièce à main de brosse à dents (12), pour exercer une force de tension sur l'interface (28) de la pièce à main de brosse à dents (12).

7. Dispositif de brosse enfichable selon la revendication 6,
**caractérisé en ce que**
l'au moins un élément tige-ressort (44) et l'au moins un élément ressort-en-arc (46) sont réalisés intégralement.

8. Dispositif de brosse enfichable au moins selon la revendication 6,
**caractérisé en ce que**
l'au moins un élément tige-ressort (44) et l'au moins un élément ressort-en-arc (46) sont raccordés, respectivement avec une extrémité, à un corps de base (48) de l'unité de logement-interface (24), lesdites extrémités étant détournées l'une de l'autre.

9. Dispositif de brosse enfichable au moins selon la revendication 6,
**caractérisé en ce que**
l'au moins un élément ressort en arc (46) est prévu pour se supporter sur une surface intérieure de la zone de logement (30) de la section d'enfichage (20).

10. Dispositif de brosse enfichable selon la revendication 9,
**caractérisé en ce que**
l'au moins un élément ressort en arc (46) comprend au moins un piédestal (50) prévu à jouxter la surface intérieure de la zone de logement (30) de la section d'enfichage (20).

11. Dispositif de brosse enfichable au moins selon la revendication 6,
**caractérisé en ce que**
l'au moins un élément tige-ressort (44) a une extrémité libre formant une languette de ressort.

12. Dispositif de brosse enfichable au moins selon la revendication 6,
**caractérisé en ce que**
l'au moins un élément tige-ressort (44) comprend au moins un piédestal (52) prévu pour introduire une force de serrage de la section-ressort (42) sur l'interface (28) de la pièce à main de brosse à dents (12).

13. Dispositif de brosse enfichable selon le préambule de la revendication 1, en particulier selon l'une des revendications précédentes,
**caractérisé en ce que**
la tête de brosse (18) comporte un champ de brins (54) défini.

14. Système de brosse enfichable avec un dispositif de brosse enfichable (10) selon l'une des revendications précédentes et avec une autre unité de logement-interface formée séparément et différant de l'unité de logement-interface (24), qui est prévue pour recevoir au moins une autre interface d'une pièce à main de brosse à dents qui diffère de l'interface (28).

15. Brosse à dents électrique avec une pièce à main de brosse à dents (12) électrique et avec un dispositif de brosse enfichable (10) selon l'une des revendications 1 à 13.
